# EUROPEAN PATENT APPLICATION

(11) **EP 4 715 327 A1**
(43) Date of publication of application: **25.03.2026**
(21) Application number: 23938334.2
(22) Date of filing: 19.05.2023
(51) Int. Cl.: G01C 3/00, G01C 15/00

(54) **MEASUREMENT SYSTEM, MEASUREMENT DEVICE, AND MEASUREMENT METHOD**

(71) Applicant: NIKON CORPORATION, Tokyo 140-8601 (JP)
(72) Inventor: MIYAKAWA, Tomoki, Tokyo 140-8601 (JP)
(74) Representative: Arnold & Siedsma
(86) International application number: PCT/JP2023/018683
(87) International publication number: WO 2024/241357

(57) **Abstract**

A measurement system SYS irradiates measurement light ML onto an object MT to measures a position of the object. The measurement system includes: an irradiation apparatus 13 that emits calibration light CL; a control apparatus 2 that controls the irradiation apparatus; a reflector 17 that reflects the calibration light; and a detector **14** that detects reflected light CRL from the at least one reflector, the irradiation apparatus is configured to emit the measurement light, the control apparatus is configured to control an irradiation direction of the measurement light, and the control apparatus calibrates, based on a detected result of the reflected light by the detector, control information for controlling the irradiation direction of the measurement light.

## Description

### Technical Field

The present invention relates to a technical field of a measurement system, a measurement apparatus, and a measurement method that are configured to measure a position of a measurement target object, for example.

### Background Art

A Patent literature 1 discloses, as one example of a measurement system that is configured to measure a position of a measurement target object, a measurement system that is configured to measure a position of a robot that is one example of the measurement target object. This measurement system is required to improve a measurement accuracy.

### Citation List

### Patent Literature

Patent Literature 1: US8,036,552B

### Summary of Invention

A first aspect provides a measurement system that irradiates measurement light onto a measurement target object to measure a position of the measurement target object, wherein the measurement system includes: an irradiation apparatus that emits calibration light; a control apparatus that controls the irradiation apparatus; at least one reflector that reflects the calibration light from the irradiation apparatus; and a detector that detects reflected light of the calibration light from the at least one reflector, the irradiation apparatus is configured to emit the measurement light, the control apparatus is configured to control an irradiation direction of the measurement light, and the control apparatus calibrates, based on a detected result of the reflected light by the detector, control information for controlling the irradiation direction of the measurement light.

A second aspect provides a measurement apparatus that measures a position of a measurement target object, wherein the measurement apparatus includes: at least one reflector; an irradiation apparatus that irradiates measurement light onto the measurement target object or the at least one reflector; and a detector that optically receives first reflected light, which is reflected light of the measurement light from the at least one reflector onto which the measurement light from the irradiation apparatus is irradiated, and second reflected light, which is reflected light of the measurement light from the measurement target object onto which the measurement light from the irradiation apparatus is irradiated, a detected result based on an optical reception of the first reflected light by the detector is used to calibrate control information for controlling the measurement apparatus to measure the position of the measurement target object.

A third aspect provides a measurement method that measures a position of a measurement target object by using a measurement apparatus, wherein the measurement method includes: irradiating, by using an irradiation apparatus of the measurement apparatus, measurement light onto a reflector of the measurement apparatus; detecting, by using a detector of the measurement apparatus, reflected light of the measurement light from the reflector; calibrating, based on a detected result of the reflected light from the reflector by the detector, control information for controlling the measurement apparatus to measure the position of the measurement target object; and controlling the measurement apparatus to measure the position of the measurement target object, by using the irradiation apparatus to irradiate the measurement light onto the measurement target object based on the calibrated control information and by using the detector to detect reflected light of the measurement light from the measurement target object.

A fourth aspect provides a measurement system that measures a position of a measurement target object, wherein the measurement system includes: an irradiation apparatus that emits measurement light; at least one reflector; a first detector that optically receives reflected light of the measurement light from the at least one reflector onto which the measurement light from the irradiation apparatus is irradiated; a second detector that optically receives reflected light of the measurement light from the measurement target object onto which the measurement light from the irradiation apparatus is irradiated; and a control apparatus, the irradiation apparatus includes a reflective member that reflects the measurement light toward the measurement target object or the at least one reflector and that reflects the reflected light from the measurement target object or the at least one reflector, the reflective member is rotatable around a first rotational axis and is rotatable around a second rotational axis that intersects the first rotational axis, and the control apparatus controls a position measurement of the measurement target object based on a detected result by the first detector.

A fifth aspect provides a measurement system that measures a position of a measurement target object, wherein the measurement system includes: an irradiation apparatus that includes a reflective member and that emits measurement light through the reflective member; a first detector that optically receives reflected light from the reflective member due to an irradiation with the measurement light; a second detector that optically receives reflected light of the measurement light from the measurement target object onto which the measurement light from the irradiation apparatus is irradiated; and a control apparatus, the reflected light optically received by the first detector is reflected light of the measurement light from the reflective member that is returned to the irradiation apparatus without being emitted from the irradiation apparatus, the reflective member is rotatable around a first rotational axis and is rotatable around a second rotational axis that intersects the first rotational axis, and the control apparatus controls a position measurement of the measurement target object based on a detected result by the first detector.

An operation and another advantage of the present invention will be apparent from an example embodiment described below.

### Brief Description of Drawings

[FIG. 1] FIG. 1 is a block diagram that illustrates a configuration of a measurement system in a present example embodiment.
[FIG. 2] FIG. 2 is a system configuration diagram that illustrates a system configuration of a measurement apparatus.
[FIG. 3] FIG. 3 is a cross-sectional view that schematically illustrates a light source, a measurement optical system, a mirror, and a detector together with measurement light that is irradiated onto a measurement target object by the measurement apparatus and reflected light detected by the measurement apparatus.
[FIG. 4] FIG. 4(a) is a cross-sectional view that illustrates the mirror rotating around an elevation axis, and FIG. 4(b) is a cross-sectional view that illustrates the mirror rotating around an azimuth axis.
[FIG. 5] FIG. 5 is a perspective view that illustrates an external appearance of first and second support apparatuses.
[FIG. 6] FIG. 6 is a perspective view that illustrates a configuration of the first and second support apparatuses.
[FIG. 7] FIG. 7 is a cross-sectional view that schematically illustrates an optical path of each of the measurement light that is irradiated onto a reflector by the measurement apparatus and the reflected light detected by the measurement apparatus together.
[FIG. 8] FIG. 8 is a perspective view that illustrates the reflector positioned on the second support apparatus.
[FIG. 9] Each of FIG. 9(a) to FIG. 9(h) illustrates one example of a plurality of reflectors.
[FIG. 10] FIG. 10 is a block diagram that illustrates a configuration of a control apparatus.
[FIG. 11] Each of FIG. 11(a) and FIG. 11(b) is a cross-sectional view that illustrates an irradiation direction of the measurement light.
[FIG. 12] FIG. 12 is a flowchart that illustrates a flow of a calibration operation.
[FIG. 13] Each of FIG. 13(a) to FIG. 13(b) illustrates the mirror and the reflector together with an optical path of calibration light and an optical path of calibration reflected light.
[FIG. 14] Each of FIG. 14(a) to FIG. 14(b) illustrates the mirror and the reflector together with the optical path of the calibration light and the optical path of the calibration reflected light.
[FIG. 15] Each of FIG. 15(a) and FIG. 15(b) is a planar view that illustrates a position of the calibration reflected light, which is calculated based on a result of a front side measurement, and a position of the calibration reflected light, which is calculated based on a result of a rear side measurement.
[FIG. 16] FIG. 16 illustrates the mirror and the reflector together with the optical path of the calibration light and the optical path of the calibration reflected light.
[FIG. 17] FIG. 18 illustrates the mirror and the reflector together with the optical path of the calibration light and the optical path of the calibration reflected light.
[FIG. 18] FIG. 18 illustrates the mirror and the reflector together with the optical path of the calibration light and the optical path of the calibration reflected light.
[FIG. 19] Each of FIG. 19(a) and FIG. 19(b) is a graph that illustrates a relationship between a rotational angle of the mirror and an irradiation direction error.
[FIG. 20] Each of FIG. 20(a) and FIG. 20(b) is a graph that illustrates the relationship between the rotational angle of the mirror and the irradiation direction error.
[FIG. 21] FIG. 21 is a block diagram that illustrates a configuration of the measurement system including an environment measurement apparatus.
[FIG. 22] FIG. 22 is a side view that illustrates a robot to which the measurement apparatus is attached.
[FIG. 23] FIG. 23 is a perspective view that illustrates the measurement apparatus in a first modified example.
[FIG. 24] FIG. 24 is a perspective view that illustrates the measurement apparatus in the first modified example.
[FIG. 25] FIG. 25 is a perspective view that illustrates the measurement apparatus in the first modified example.
[FIG. 26] FIG. 26 is a cross-sectional view that illustrates the measurement apparatus performing the calibration operation without using the reflector.

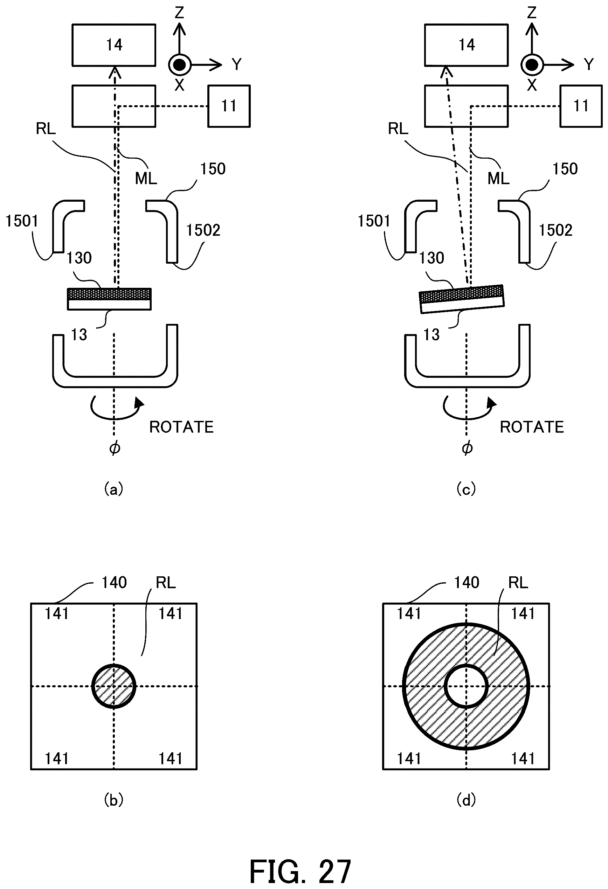

[FIG. 27] FIG. 27(a) is a cross-sectional view that illustrates the optical paths of the measurement light and the reflected light in a case where a motion error does not occur in a rotation of the mirror around the azimuth axis, FIG. 27(b) is a planar view that illustrates the reflected light on a detection plane of the detector in a state illustrates in FIG. 27(a), FIG. 27(c) is a cross-sectional view that illustrates the optical paths of the measurement light and the reflected light in a case where the motion error does not occur in the rotation of the mirror around the azimuth axis, and FIG. 27(d) is a planar view that illustrates the reflected light on the detection plane of the detector in a state illustrates in FIG. 27(c).

### Description of Example embodiments

Next, with reference to drawings, an example embodiment of a measurement system, a measurement apparatus, and a measurement method will be described. In the below described description, the example embodiment of the measurement system, the measurement apparatus, and the measurement method will be described by using a measurement system SYS to which the example embodiment of the measurement system, the measurement apparatus, and the measurement method is adapted.

### (1) Configuration of Measurement System SYS

Firstly, a configuration of the measurement system SYS will be described.

### (1-1) Entire Configuration of Measurement System SYS

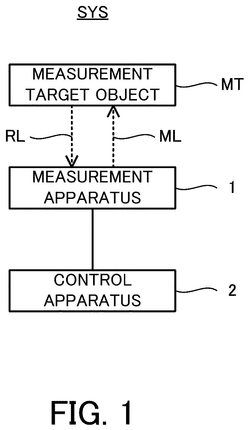

Firstly, with reference to FIG.1, an entire configuration of the measurement system SYS will be described. FIG. 1 is a block diagram that illustrates the entire configuration of the measurement system SYS.

The measurement system SYS is configured to measure a position of a measurement target object MT. In order to measure the position of the measurement target object MT, the measurement system SYS includes a measurement apparatus 1 and a control apparatus 2.

The measurement apparatus 1 is an apparatus that is configured to measure the position of the measurement target object MT. In the present example embodiment, the measurement apparatus 1 irradiates the measurement target object MT with measurement light ML in order to measure the position of the measurement target object MT. Furthermore, the measurement apparatus 1 detects reflected light RL from the measurement target object MT onto which the measurement light ML has been irradiated in order to measure the position of the measurement target object MT. Reflected light detection information related to a detected result of the reflected light RL by the measurement apparatus 1 includes information related to the position of the measurement target object MT. The reflected light detection information is output from the measurement apparatus 1 to the control apparatus 2.

The control apparatus 2 is an apparatus that is configured to control the measurement apparatus 1. For example, the control apparatus 2 may control the measurement apparatus 1 to measure the position of the measurement target object MT. Namely, the control apparatus 2 may control the measurement apparatus 1 to irradiate the measurement light ML onto the measurement target object MT and to detect the reflected light RL from the measurement target object MT. Furthermore, the control apparatus 2 calculates the position of the measurement target object MT based on the reflected light detection information acquired from the measurement apparatus 1.

The position of the measurement target object MT may mean a position of the measurement target object MT along a first axis (for example, an X-axis) of a base coordinate system, a position of the measurement target object MT along a second axis (for example, a Y-axis) of the base coordinate system that is orthogonal to the first axis, and a position of the measurement target object MT along a third axis (for example, a Z-axis) of the base coordinate system that is orthogonal to the first and second axes. Note that the X-axis, Y-axis, and Z-axis mean the X-axis, Y-axis, and Z-axis in the base coordinate system, respectively, in the below-described description, unless there is any notation. Moreover, in the below-described description, an example in which each of the X-axis and the Y-axis is a horizontal direction and the Z-axis is a vertical direction (namely, a gravity direction) will be described.

### (1-2) Configuration of Measurement Apparatus 1

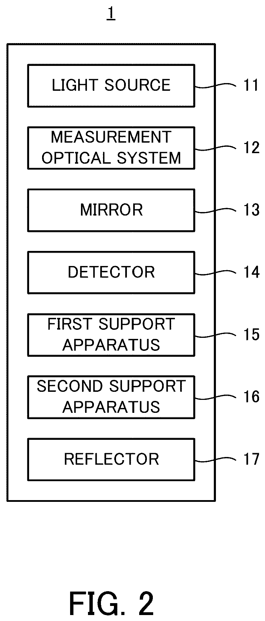

Next, with reference to FIG. 2, a configuration of measurement apparatus 1 will be described. FIG. 2 is a system configuration diagram that illustrates a system configuration of the measurement apparatus 1.

As illustrated in FIG. 2, the measurement apparatus 1 includes a light source 11, a measurement optical system 12, a mirror 13, and a detector 14. The measurement apparatus 1 irradiates the measurement light ML onto the measurement target object MT and detects the reflected light RL from the measurement target object MT by using the light source 11, the measurement optical system 12, the mirror 13, and the detector 14.

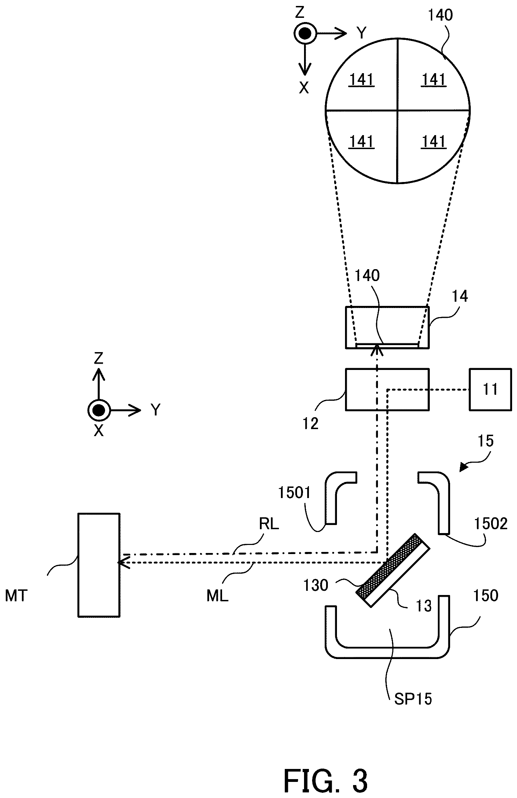

Here, with reference to FIG. 3, the light source 11, the measurement optical system 12, the mirror 13, and the detector 14 will be described in detail. FIG. 3 is a cross-sectional view that schematically illustrates the light source 11, the measurement optical system 12, the mirror 13, and the detector 14, together with an optical path of each of the measurement light ML, which is irradiated onto the measurement target object MT by the measurement apparatus 1, and the reflected light RL, which is detected by the measurement apparatus 1.

As illustrated in FIG. 2, the light source 11 is configured to generate the measurement light ML. The measurement light ML is typically laser light. In this case, the light source 11 may include a laser light source such as a semiconductor laser. The light source 11 may be a light comb light source that is configured to generate, as pulsed light, light including frequency components that are arranged with equal interval on a frequency axis. The light source 11 emits the generated measurement light ML toward the measurement optical system 12.

The measurement optical system 12 emits at least a part of the measurement light ML, which has entered the measurement optical system 12, toward the mirror 13. For example, the measurement optical system 12 may use a refractive optical element (for example, a lens) to emit at least a part of the measurement light ML, which has entered the measurement optical system 12, toward the mirror 13. For example, the measurement optical system 12 may use a reflective optical element (for example, a mirror) to emit at least a part of the measurement light ML, which has entered the measurement optical system 12, toward the mirror 13. As a result, at least a part of the measurement light ML generated by the light source 11 enters the mirror 13 through the measurement optical system 12. However, at least a part of the measurement light ML generated by the light source 11 may enter the mirror 13 without passing through the measurement optical system 12. In this case, the measurement apparatus 1 may not include the measurement optical system 12.

The mirror 13 is a reflective member that is configured to reflect the measurement light ML, which has entered the mirror 13, toward the measurement target object MT. Specifically, the mirror 13 includes a reflective surface 130. The mirror 13 reflects the measurement light ML, which has entered the reflective surface 130 toward the measurement target object MT. As a result, the measurement light ML, which has been reflected by the mirror 13, is irradiated onto the measurement target object MT. The mirror 13 may be a mirror whose reflectance with respect to the measurement light ML is lower than 100%.

In this way, in the present example embodiment, the measurement light ML generated by the light source 11 is irradiated onto the measurement target object MT through the measurement optical system 12 and the mirror 13. Therefore, an apparatus including at least one of the light source 11, the measurement optical system 12, and the mirror 13, which are used to irradiate the measurement light ML onto the measurement target object MT, may be referred to as an irradiation apparatus. Note that the measurement apparatus 1 may not include the light source 11. In this case, the measurement light ML, which is generated by a light source external to the measurement apparatus 1, may enter the measurement optical system 12 of the measurement apparatus 1.

The measurement target object MT, onto which the measurement light ML reflected by the mirror 13 has been irradiated, reflects at least a part of the measurement light ML. At least a part of the measurement light ML, which has been reflected by the measurement target object MT, enters the mirror 13 as the reflected light RL. The mirror 13 reflects the reflected light RL, which has entered the mirror 13, toward the measurement optical system 12. As a result, the reflected light RL, which has been reflected by the mirror 13, enters the measurement optical system 12.

The measurement optical system 12 emits at least a part of the reflected light RL, which has entered the measurement optical system 12, toward the detector 14. Namely, at least a part of the reflected light RL from the measurement target object MT enters the detector 14 through the mirror 13 and the measurement optical system 12. However, at least a part of the reflected light RL from the measurement target object MT may enter the detector 14 without passing through the measurement optical system 12. In this case, the measurement apparatus 1 may not include the measurement optical system 12.

The detector 14 detects (specifically, optically receives) the reflected light RL, which has entered the detector 14. The reflected light detection information related to the detected result of the reflected light RL by the detector 14 is output from the measurement apparatus 1 to the control apparatus 2. The control apparatus 2 calculates the position of the measurement target object MT based on the reflected light detection information.

In the present example embodiment, an example in which the detector 14 detects interfering light between the reflected light RL and the measurement light ML will be described. Namely, in the present example embodiment, an example in which the measurement apparatus 1 is an interferometer will be described. In this case, the measurement optical system 12 may emit a part of the measurement light ML, which has entered the measurement optical system 12, toward the detector 14. Namely, the measurement optical system 12 may emit a part of the measurement light ML, which has entered the measurement optical system 12, toward the detector 14 in addition to the reflected light RL which has entered the measurement optical system 12. In this case, a part of the measurement light ML which has been emitted toward the detector 14 may be referred to as reference light. As a result, the detector 14 detects the interfering light between the measurement light ML, which has been emitted from the measurement optical system 12 toward the detector 14, and the reflected light RL, which has been emitted from the measurement optical system 12 toward the detector 14. The control apparatus 2 calculates a distance between the measurement apparatus 1 and the measurement target object MT based on the reflected light detection information (especially, information related to an interference pattern of the interfering light). Then, the measurement apparatus 1 may calculate the position of the measurement target object MT based on a calculated result of the distance between the measurement apparatus 1 and the measurement target object MT and information related to an irradiation direction of the measurement light ML from the mirror 13 (specifically, information related to a rotational angle of the mirror 13 around an azimuth axis φ described later and a rotational angle of the mirror 13 around an elevation axis θ described later).

In order to perform a position measurement operation for measuring the position of the measurement target object MT (specifically, detecting the reflected light RL from the measurement target object MT), the detector 14 may be any type of detector as long as it is configured to detect (namely, configured to optically receive) the reflected light RL. However, in the present example embodiment, the detector 14 is used not only for the position measurement operation but also for a calibration operation for calibrating irradiation direction control information that is to control the irradiation direction of the measurement light ML from the mirror 13. In this case, the detector 14 may include a detection plane 140, which is configured to detect the reflected light RL, and be configured to detect a position of the reflected light RL on the detection plane 140. A light position sensor (PSD: Position Sensitive Detector) is one example of the detector 14 that includes the detection plane 140 configured to detect the reflected light RL and that is configured to detect the position of the reflected light RL on the detection plane 140. The light position sensor is a detector that is configured to output, as the reflected light detection information related to the detected result of the reflected light RL, information in which a voltage signal corresponding to an intensity of the reflected light RL on the detection plane 140 is associated with a position on the detection plane 140. In this case, the control apparatus 2 may calculate the position of the reflected light RL on the detection plane 140 (for example, the position of a beam spot, which is formed by the reflected light RL on the detection plane 140) based on the reflected light detection information. In the below-described description, an example in which the light position sensor that is configured to detect the position of the reflected light RL on the detection plane 140 is used as the detector 14 will be described. However, the measurement apparatus 1 may include a first detector 14 that is used for the position measurement operation and a second detector 14 that is used for the calibration operation separately. In this case, the first detector 14 may not be the light position sensor, and the second detector 14 may be the light position sensor. Moreover, the detector 14 may be a CCD (Charged Coupled Device) image sensor, may be a CMOS (Complementary Metal Oxide Semiconductor) image sensor, may be a line sensor, or may be any other photoconverting element.

Especially in the present example embodiment, an example in which the detector 14 is the light position sensor whose detection plane 140 is divided into a plurality of divided detection planes 141 as illustrated in FIG. 3 will be described. In the example illustrated in FIG. 3, the detection plane 140 is divided into four divided detection planes 141. However, the detection plane 140 may be divided into three or fewer divided detection planes 141, or may be divided into five or more divided detection planes 141. Alternatively, the detection plane 140 may not be divided.

The measurement apparatus 1 is further configured to rotate the mirror 13 around a first rotational axis and rotates the mirror 13 around the first rotational axis. In the below-described description, an example in which the first rotational axis is a rotational axis that is parallel to the Z-axis and a second rotational axis is a rotational axis that is orthogonal to the Z-axis (for example, a rotational axis that is parallel to the X-axis) will be described. In the below-described description, the first rotational axis that is parallel to the Z-axis is referred to as the azimuth axis φ, and the second rotational axis that is parallel to the X-axis is referred to as the elevation axis θ.

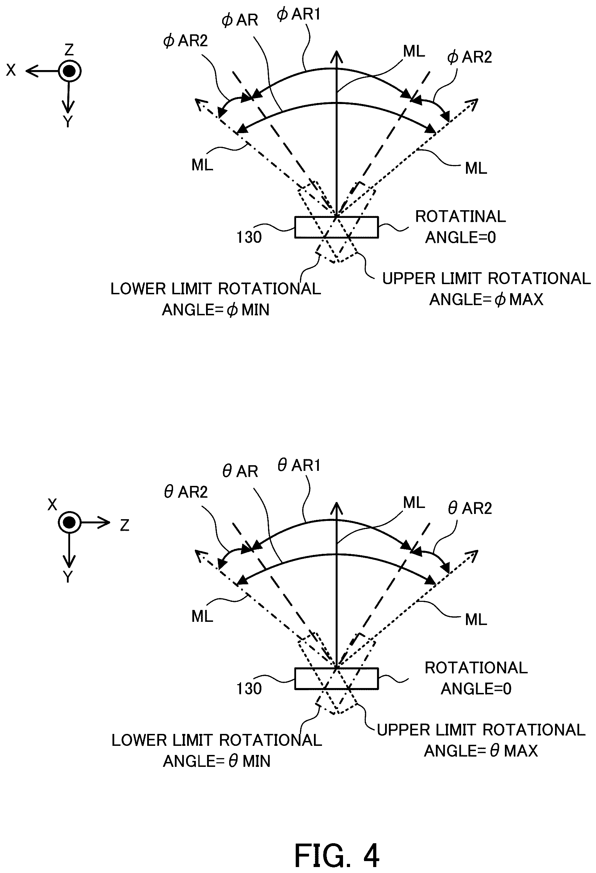

As illustrated in FIG. 4(a) that is a cross-sectional view illustrating the mirror 13 rotating around the azimuth axis φ, the measurement apparatus 1 may be configured to rotate the mirror 13 around the azimuth axis φ within a first angle range φAR. Namely, the measurement apparatus 1 may be configured to rotate the mirror 13 around the azimuth axis φ so that the rotational angle of the mirror 13 around the azimuth axis φ is within the first angle range φAR (namely, does not exceed the first angle range φAR). In the example illustrated in FIG. 4(a), the first angle range φAR is an angle range from a lower limit rotational angle φMIN to an upper limit rotational angle φMAX. The first angle range φAR may be an angle range defined by a stopper that physically stops the rotation of the mirror 13 around the azimuth axis φ. The first angle range φAR may be an angle range defined by a motor or an actuator (namely, the driving system 162 described later) that rotates the mirror 13 around the azimuth axis φ. The first angle range φAR may be an angle range defined by a wiring connected to an electrical component of the measurement apparatus 1. The first angle range φAR may be an angle range defined by a component included in the measurement apparatus 1.

When the mirror 13 rotates around the azimuth axis φ, a reflection direction toward which the mirror 13 reflects the measurement light ML changes. Namely, when the mirror 13 rotates around the azimuth axis φ, the irradiation direction of the measurement light ML from the mirror 13 changes. Specifically, as illustrated in FIG. 4(a), when the mirror 13 rotates around the azimuth axis φ, the reflection direction (the irradiation direction) of the measurement light ML from the mirror 13 changes so as to rotate around the azimuth axis φ.

The first angle range φAR may include a measurement range φAR1, which is actually used to irradiate the measurement light ML onto the measurement target object MT, and a non-measurement range φAR2, which may not be actually used to irradiate the measurement light ML onto the measurement target object MT. The non-measurement range φAR2 may include a range of the rotational angle that is larger than the measurement range φAR1. The measurement range φAR1 may be a range of the rotational angle that is the same as the first angle range φAR. The non-measurement range φAR2 may include a range of the rotational angle that is smaller than the measurement range φAR1. In this case, the measurement apparatus 1 may rotate the mirror 13 around the azimuth axis φ within the measurement range φAR1 in order to irradiate the measurement light ML onto the measurement target object MT. Namely, the measurement apparatus 1 may rotate the mirror 13 around the azimuth axis φ so that the rotational angle of the mirror 13 around the azimuth axis φ is within the measurement range φAR1 (namely, does not exceed the measurement range φAR1 and does not become the angle included in the non-measurement range φAR2) in order to irradiate the measurement light ML onto the measurement target object MT.

As illustrated in FIG. 4(b) that is a cross-sectional view illustrating the mirror 13 rotating around the elevation axis θ, the measurement apparatus 1 may be configured to rotate the mirror 13 around the elevation axis θ within a second angle range θAR. Namely, the measurement apparatus 1 may be configured to rotate the mirror 13 around the elevation axis θ so that the rotational angle of the mirror 13 around the elevation axis θ is within the second angle range θAR (namely, does not exceed the second angle range θAR). In the example illustrated in FIG. 4(b), the second angle range θAR is an angle range from a lower limit rotational angle θMIN to an upper limit rotational angle θMAX. The second angle range θAR may be an angle range defined by a stopper that physically stops the rotation of the mirror 13 around the elevation axis θ. The second angle range θAR may be an angle range defined by a motor or an actuator (namely, the driving system 152 described later) that rotates the mirror 13 around the elevation axis θ. The second angle range θAR may be an angle range defined by a wiring connected to an electrical component of the measurement apparatus 1. The second angle range θAR may be an angle range defined by a component included in the measurement apparatus 1.

When the mirror 13 rotates around the elevation axis θ, the reflection direction toward which the mirror 13 reflects the measurement light ML changes. Namely, when the mirror 13 rotates around the elevation axis θ, the irradiation direction of the measurement light ML from the mirror 13 changes. Specifically, as illustrated in FIG. 4(b), when the mirror 13 rotates around the elevation axis θ, the reflection direction (the irradiation direction) of the measurement light ML from the mirror 13 changes so as to rotate around the elevation axis θ.

The second angle range θAR may include a measurement range θAR1, which is actually used to irradiate the measurement light ML onto the measurement target object MT, and a non-measurement range θAR2, which may not be actually used to irradiate the measurement light ML onto the measurement target object MT. The non-measurement range θAR2 may include a range of the rotational angle that is larger than the measurement range θAR1. The measurement range θAR1 may be a range of the rotational angle that is the same as the second angle range θAR. The non-measurement range θAR2 may include a range of the rotational angle that is smaller than the measurement range θAR1. In this case, the measurement apparatus 1 may rotate the mirror 13 around the elevation axis θ within the measurement range θAR1 in order to irradiate the measurement light ML onto the measurement target object MT. Namely, the measurement apparatus 1 may rotate the mirror 13 around the elevation axis θ so that the rotational angle of the mirror 13 around the elevation axis θ is within the measurement range θAR1 (namely, does not exceed the measurement range θAR1 and does not become the angle included in the non-measurement range θAR2) in order to irradiate the measurement light ML onto the measurement target object MT.

Again in FIG. 2, in order to rotate the mirror 13 around the elevation axis θ, the measurement apparatus 1 may include a first support apparatus 15. Furthermore, in order to rotate the mirror 13 around the azimuth axis φ, the measurement apparatus 1 may include a second support apparatus 16. The first support apparatus 15 is an apparatus that supports the mirror 13 so that the mirror 13 is rotatable around the elevation axis θ. The second support apparatus 16 is an apparatus that supports the first support apparatus 15 so that the first support apparatus 15 is rotatable around the azimuth axis φ. Since the first support apparatus 15 supports the mirror 13, when the second support apparatus 16 rotates the first support apparatus 15 around the azimuth axis φ, the mirror 13 supported by the first support apparatus 15 also rotates around the azimuth axis φ. However, the first support apparatus 15 may support the mirror 13 so that the mirror 13 is rotatable around the azimuth axis φ, and the second support apparatus 16 may support the first support apparatus 15 so that the first support apparatus 15 is rotatable around the elevation axis θ.

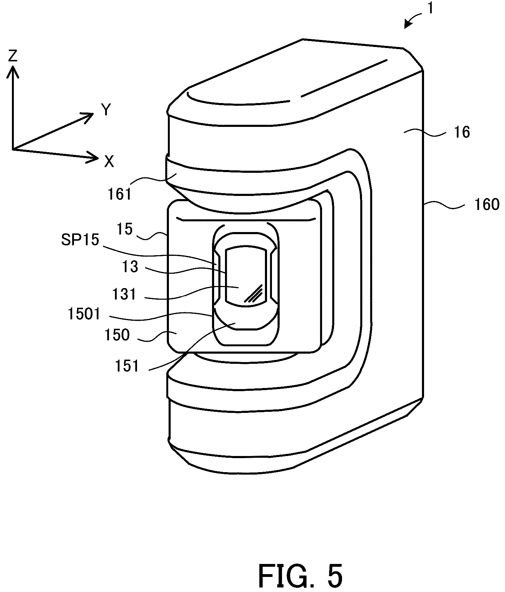

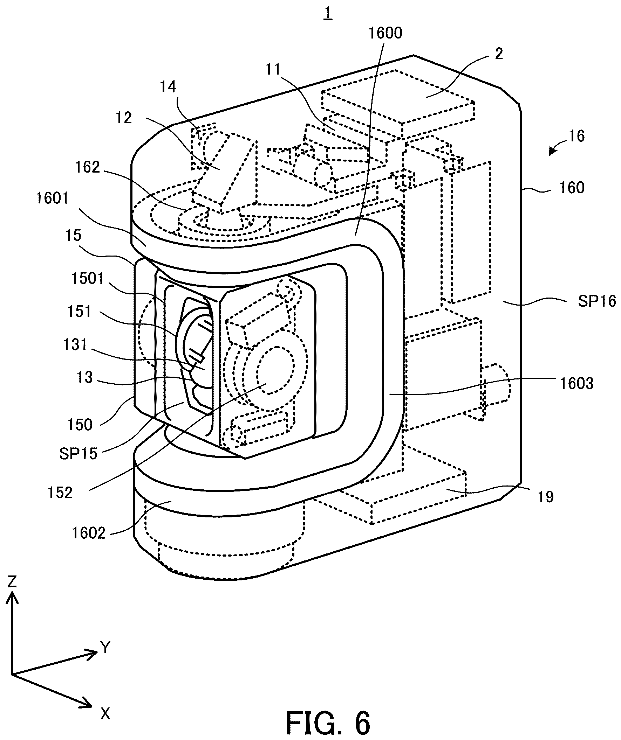

Here, with reference to FIG. 5 and FIG. 6, the first support apparatus 15 and the second support apparatus 16 will be described in more detail. FIG. 5 is a perspective view that illustrates an external appearance of the first support apparatus 15 and the second support apparatus 16. FIG. 6 is a perspective view that illustrates a configuration of the first support apparatus 15 and the second support apparatus 16.

As illustrated in FIG. 5 and FIG. 6, the first support apparatus 15 includes a housing 150, a mirror holding member 151, and a driving system 152.

A containing space SP15 for containing the mirror 13 is formed inside the housing 150. The mirror 13 is contained in the containing space SP15 inside the housing 150.

The housing 150 includes a front aperture 1501 through which the containing space SP15 is connected to a space outside the housing 150. The measurement light ML, which has been reflected by the mirror 13, is emitted from the containing space SP15 to the space outside the housing 150 through the front aperture 1501. Especially, as illustrated in FIG. 3, the measurement apparatus 1 irradiates the measurement light ML, which has been reflected by the mirror 13, onto the measurement target object MT through the front aperture 1501. Furthermore, as illustrated in FIG. 3, the reflected light RL from the measurement target object MT enters the mirror 13 through the front aperture 1501.

A rear aperture 1502 is further formed in the housing 150. Specifically, as illustrated in FIG. 3 described above, the rear aperture 1502 opposite to the front aperture 1501 is formed in the housing 150. The front aperture 1501 and the rear aperture 1502 are typically opposite to each other along a direction (the Y-axis in the examples illustrated in FIG. 3 and FIG. 5) that is orthogonal to both the azimuth axis φ (the Z-axis) and the elevation axis θ (the X-axis). The mirror 13 may be positioned between the front aperture 1501 and the rear aperture 1502. The measurement light ML, which has been reflected by the mirror 13, may be emitted from the housing 150 to a space outside the housing 150 through the rear aperture 1502. Furthermore, the reflected light RL from the measurement target object MT may enter the mirror 13 through the rear aperture 1502.

However, in a case where the position measurement operation is performed, the measurement apparatus 1 may not irradiate the measurement light ML, which has been reflected by the mirror 13, onto the measurement target object MT through the rear aperture 1502. Furthermore, in a case where the position measurement operation is performed, the reflected light RL from the measurement target object MT may not enter the mirror 13 through the rear aperture 1502. The rear aperture 1502 is mainly used for a calibration operation, as described in detail later. Therefore, in a case where the calibration operation is performed, the measurement apparatus 1 may irradiate the measurement light ML, which has been reflected by the mirror 13, onto a below-described reflector 17, which is used for the calibration operation, through the rear aperture 1502. Furthermore, in a case where the position measurement operation is performed, the reflected light RL from the below-described reflector 17, which is used for the calibration operation, may enter the mirror 13 through the rear aperture 1502.

The mirror holding member 151 holds the mirror 13 in the containing space SP15. Therefore, the mirror holding member 151 holding the mirror 13 is held in the containing space SP15. The mirror holding member 151 may be attached to the housing 150 so as to be rotatable around the elevation axis θ.

The driving system 152 is a driving unit that rotates the mirror holding member 151 around the elevation axis θ. The driving system 152 may include the motor or the actuator, for example. When the driving system 152 rotates the mirror holding member 151 around the elevation axis θ, the mirror 13 held by the mirror holding member 151 also rotates around the elevation axis θ. Therefore, the driving system 152 is configured to rotate the mirror 13 around the elevation axis θ. As a result, the driving system 152 is configured to change the reflection direction (the irradiation direction) of the measurement light ML from the mirror 13 around the elevation axis θ.

The driving system 152 rotates the mirror 13 around the elevation axis θ based on the irradiation direction control information generated by the control apparatus 2. The irradiation direction control information may include a command signal for controlling the driving system 152 so that the rotational angle of the mirror 13 around the elevation axis θ becomes a target angle. The irradiation direction control information may include a target value (namely, the target angle) of the rotational angle of the mirror 13 around the elevation axis θ. In this case, the control apparatus 2 may be considered to control the rotation of the mirror 13 around the elevation axis θ by controlling the driving system 152 based on the irradiation direction control information. Namely, the control apparatus 2 may be considered to control the irradiation direction of the measurement light ML (namely, the irradiation direction of the measurement light ML from the mirror 13 rotating around the elevation axis θ) by controlling the driving system 152 based on the irradiation direction control information.

An electric power that is required for the driving system 152 to rotate the mirror holding member 151 may be supplied from a power source external to the measurement apparatus 1 through an input unit 19 of the measurement apparatus 1. Note that the electric power supplied through the input unit 19 may be used by an apparatus (for example, the detector 14) that is different from the driving system 152 in addition to or instead of the driving system 152.

Next, the second support apparatus 16 includes a housing 160 and a driving system 162.

A containing space SP16 is formed inside the housing 160. The light source 11, the measurement optical system 12, the detector 14, the input unit 19, and the control apparatus 2 are contained in the containing space SP16. However, at least one the light source 11, the measurement optical system 12, the detector 14, the input unit 19, and the control apparatus 2 may not be contained in the containing space SP16. At least one of the light source 11, the measurement optical system 12, the detector 14, the input unit 19, and the control apparatus 2 may be positioned outside the housing 160. Alternatively, a light source that is different from the light source 11 and that is not included in the measurement apparatus 1 may be used instead of the light source 11.

At least a part of the housing 160 may serve as a support member (a support part) 1600 that supports the first support apparatus 15 (especially, the housing 150) so that the first support apparatus 15 (especially, the housing 150) is rotatable around the azimuth axis φ. In the examples illustrated in FIG. 5 and FIG. 6, the housing 160 includes the support member (the support part) 1600 that supports the first support apparatus 15 (especially, the housing 150) from one end side of the first support apparatus 15 (especially, the housing 150) along the azimuth axis φ and from other end side of the first support apparatus 15 (especially, the housing 150) along the azimuth axis φ so that the first support apparatus 15 (especially, the housing 150) is rotatable around the azimuth axis φ.

In order to support the first support apparatus 15, the support member 1600 may include a support member 1601, a support member 1602, and a support member 1603. The support member 1601 may support one end of the first support apparatus 15 (especially, the housing 150) along the azimuth axis φ. The support member 1601 may be connected to the one end of the first support apparatus 15 (especially, the housing 150) along the azimuth axis φ. The support member 1602 may support other end of the first support apparatus 15 (especially, the housing 150) along the azimuth axis φ. The support member 1602 may be connected to the other end of the first support apparatus 15 (especially, the housing 150) along the azimuth axis φ. In this case, the first support apparatus 15 (especially, the housing 150) is positioned between the support member 1601 and the support member 1602 along the azimuth axis φ. Therefore, the support members 1601 and 1602 may be arranged along the azimuth axis φ. The support member 1603 may connect the support member 1601 and the support member 1602. Specifically, one end of the support member 1603 along the azimuth axis φ may be connected to the support member 1601, and other end of the support member 1603 along the azimuth axis φ may be connected to the support member 1602. In this case, the support member 1603 may be adjacent to the first support apparatus 15 (especially, the housing 150) along a direction intersecting the azimuth axis φ. Note that the support member 1600 may be referred to as a connecting member because the support member 1600 is connected to the first support apparatus 15. Moreover, the support members 1601 to 1603 are typically a single integrated member, but may be different members that are physically separable.

The driving system 162 is a driving unit that rotates the first support apparatus 15 (especially, the housing 150) around the azimuth axis φ. The driving system 162 may include the motor or the actuator, for example. When the driving system 162 rotates the first support apparatus 15 (especially, the housing 150) around the azimuth axis φ, the mirror 13 contained in the housing 150 also rotates around the azimuth axis φ. Therefore, the driving system 162 is configured to rotate the mirror 13 around the azimuth axis φ. As a result, the driving system 162 is configured to change the reflection direction (the irradiation direction) of the measurement light ML from the mirror 13 around the azimuth axis φ.

The driving system 162 rotates the mirror 13 around the azimuth axis φ based on the irradiation direction control information generated by the control apparatus 2. The irradiation direction control information may include a command signal for controlling the driving system 162 so that the rotational angle of the mirror 13 around the azimuth axis φ becomes a target angle. The irradiation direction control information may include a target value (namely, the target angle) of the rotational angle of the mirror 13 around the azimuth axis φ. In this case, the control apparatus 2 may be considered to control the rotation of the mirror 13 around the azimuth axis φ by controlling the driving system 162 based on the irradiation direction control information. Namely, the control apparatus 2 may be considered to control the irradiation direction of the measurement light ML (namely, the irradiation direction of the measurement light ML from the mirror 13 rotating around the azimuth axis φ) by controlling the driving system 162 based on the irradiation direction control information.

An electric power that is required for the driving system 162 to rotate the first support apparatus 15 (especially, the housing 150) may be supplied from a power source external to the measurement apparatus 1 through the input unit 19 of the measurement apparatus 1. Note that the electric power supplied through the input unit 19 may be used by an apparatus (for example, the detector 14) that is different from the driving system 152 in addition to or instead of the driving system 162.

Note that the second support apparatus 16 may be considered to rotate the first support apparatus 15 (especially, the housing 150) around the azimuth axis φ relative to the housing 160. In this case, the first support apparatus 15 (especially, the housing 150) rotates but the housing 160 may remain stationary. Namely, the first support apparatus 15 (especially, the housing 150) rotates but the housing 160 may be fixed. Therefore, the housing 160 may be referred to as a fixed member.

Again in FIG. 2, in the present example embodiment, the measurement apparatus 1 further includes the reflector 17. The reflector 17 is mainly used for the calibration operation. Specifically, in order to perform the calibration operation, the measurement apparatus 1 irradiates the measurement light ML onto the reflector 17 instead of the measurement target object MT. Furthermore, in order to perform the calibration operation, the measurement apparatus 1 detects the reflected light RL from the reflector 17 instead of the reflected light RL from the measurement target object MT.

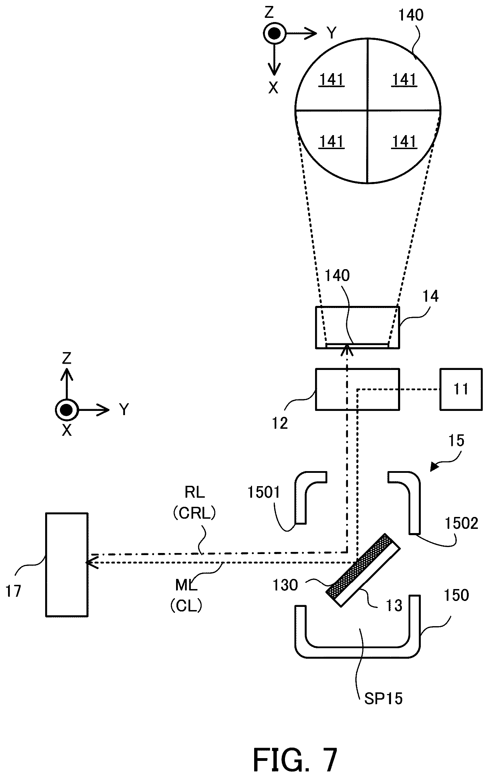

Specifically, as illustrated in FIG. 7 that is a cross-sectional view schematically illustrating the optical path of each of the measurement light ML, which is irradiated onto the reflector 17 by the measurement apparatus 1, and the reflected light RL from the reflector 17, which is detected by the measurement apparatus 1, together, the measurement apparatus 1 irradiates the measurement light ML, which has been reflected by the mirror 13, onto the reflector 17. Namely, the measurement apparatus 1 irradiates the measurement light ML onto the reflector 17 through the measurement optical system 12 and the mirror 13. Furthermore, the measurement apparatus 1 detects the reflected light RL from the reflector 17 onto which the measurement light ML has been irradiated. Namely, the measurement apparatus 1 detects the reflected light RL from the reflector 17 through the measurement optical system 12 and the mirror 13. The reflected light detection information related to the detected result of the reflected light RL by the measurement apparatus 1 is output from the measurement apparatus 1 to the control apparatus 2. The control apparatus 2 calibrates the irradiation direction control information, which is used for the position measurement operation for measuring the position of the measurement target object MT, based on the reflected light detection information. Namely, the control apparatus 2 calibrates the irradiation direction control information, which is for controlling the irradiation direction of the measurement light ML (namely, the irradiation direction of the measurement light ML from the mirror 13) used for the position measurement operation, based on the reflected light detection information.

Note that the measurement light ML irradiated onto the reflector 17 for performing the calibration operation is referred to as "calibration light CL" to distinguish it from the measurement light ML irradiated onto the measurement target object MT for performing the position measurement operation, for convenience of description in the below-described description. Therefore, the measurement light ML means the measurement light ML irradiated onto the measurement target object MT for performing the position measurement operation in the below-described description, unless there is any notation. Similarly, the reflected light RL detected by the measurement apparatus 1 for performing the calibration operation (namely, the reflected light RL from the reflector 17) is referred to as "calibration reflected light CRL" to distinguish it from the reflected light RL detected by the measurement apparatus 1 for performing the position measurement operation (namely, the reflected light RL from the measurement target object MT), for convenience of description in the below-described description. Therefore, the reflected light RL means the reflected light RL detected by the measurement apparatus 1 for performing the position measurement operation (namely, the reflected light RL from the measurement target object MT) in the below-described description, unless there is any notation.

The reflector 17 may be a retro-reflective member that is configured to retro-reflect the calibration light CL. A cat's eye, which includes a lens and a mirror that is positioned at a focal point of the lens is one example of the retro-reflective member. An SMR (Spherically Mounted Retroreflector), in which three mirrors are arranged so as to intersect one another by 90-degree angles, is another example of the retro-reflective member. In this case, in a case where the calibration light CL is irradiated onto the reflector 17 through the measurement optical system 12 and the mirror 13, the calibration reflected light CRL from the reflector 17 enters the detector 14 through the measurement optical system 12 and the mirror 13.

The reflector 17 may be a corner cube reflector. The corner cube reflector may be a reflective element of a corner cube reflective element including a high reflection coating. The reflector 17 may be at least one of a ball reflector and the cat's eye.

The reflector 17 may be positioned at a position facing a second space SP2, which is different from a first space SP1 through which the measurement light ML passes in at least a part of a position measurement period during which the position of the measurement target object MT is measured (namely, the position measurement period during which the position measurement operation is performed). Especially, the second space SP2 may be a space through which the measurement light ML does not pass in at least a part of the position measurement period. In this case, even in a case where the measurement apparatus 1 includes the reflector 17, the measurement light ML, which is reflected by the mirror 13 toward the measurement target object MT to measure the position of the measurement target object MT, is not blocked by the reflector 17. As a result, even in a case where the measurement apparatus 1 includes the reflector 17, the measurement apparatus 1 can properly irradiate the measurement light ML onto the measurement target object MT. As a result, even in a case where the measurement apparatus 1 includes the reflector 17, the measurement apparatus 1 can properly measure the position of the measurement target object MT.

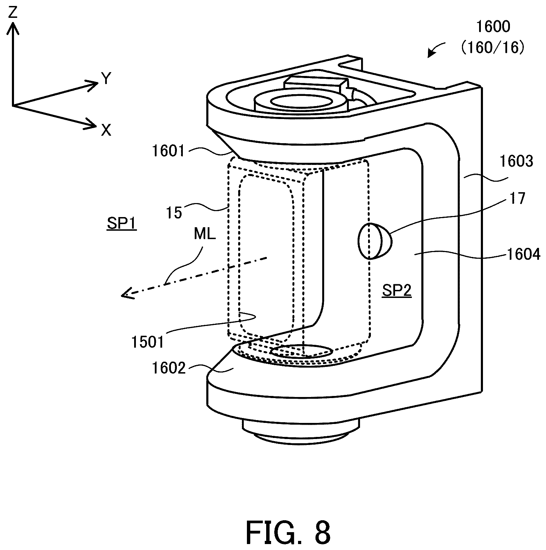

One example of the reflector 17, which is positioned at the position facing the second space SP2, is illustrated in FIG. 8. As illustrated in FIG. 8, the reflector 17 may be positioned on the second support apparatus 16. In the example illustrated in FIG. 8, the reflector 17 is positioned on the housing 160 (especially, the support member 1600) of the second support apparatus 16. For example, as illustrated in FIG. 8, the measurement apparatus 1 emits the measurement light ML from the mirror 13 (not illustrated in FIG. 7), which is contained in the first support apparatus 15, toward the first space SP1 through the front aperture 1501, which faces the first space SP1, in at least a part of the position measurement period. In this case, the second space SP2 may be a space such that the first support apparatus 15 (the mirror 13) is positioned between the first space SP1 and the second space SP2. The second space SP2 may be a space that is positioned on an opposite side of the first space SP1 as viewed from the first support apparatus 15 (the mirror 13). For example, as illustrated in FIG. 8, the first space SP1 is positioned on the opposite side of the support member 1603 of the housing 160 of the second support apparatus 16 as viewed from the mirror 13 contained in the first support apparatus 15. In this case, the first support apparatus 15 (the mirror 13) is positioned between a space, which faces the support member 1603, and the first space SP1. Therefore, the space facing the support member 1603 may be used as the second space SP2 that is different from the first space SP1 (especially, the second space SP2 through which the measurement light ML does not pass in at least a part of the position measurement period). Namely, the support member 1603 may be considered to face the second space SP2. Therefore, the reflector 17 may be positioned on the support member 1603 that is adjacent to the first support apparatus 15 (the mirror 13) along the elevation axis θ. For example, as illustrated in FIG. 8, the reflector 17 may be positioned on a side surface 1604 of the support member 1603 that is adjacent to the first support apparatus 15 (the mirror 13) along the elevation axis θ.

Note that the reflector 17 may be positioned on any part, which faces the second space SP2, of the second support apparatus 16 in addition to or instead of the support member 1603. The reflector 17 may be positioned on any apparatus or any member that faces the second space SP2 in addition to or instead of the second support apparatus 16. However, in the below-described description, an example in which the reflector 17 is positioned on the support member 1603 will be described for convenience of description.

The reflector 17 is fixed to the support member 1603 (alternatively, any apparatus or any member facing the second space SP2, the same applies in this paragraph). The reflector 17 may be positioned on the support member 1603 so that the reflector 17 is not detachable from the support member 1603. The reflector 17 may be positioned on the support member 1603 so that a relative positional relationship between the reflector 17 and the support member 1603 remains unchanged. However, the reflector 17 may not be fixed to the support member 1603. The reflector 17 may be positioned on the support member 1603 so that the reflector 17 is detachable from the support member 1603.

As described above, the first angle range φAR within which the mirror 13 is rotatable around the azimuth axis φ may include the measurement range φAR1, which is actually used to irradiate the measurement light ML onto the measurement target object MT, and the non-measurement range φAR2, which may not be actually used to irradiate the measurement light ML onto the measurement target object MT. Similarly, as described above, the second angle range θAR within which the mirror 13 is rotatable around the elevation axis θ may include the measurement range θAR1, which is actually used to irradiate the measurement light ML onto the measurement target object MT and the non-measurement range θAR2, which may not actually be used to irradiate the measurement light ML onto the measurement target object MT. In this case, the reflector 17 may be arranged so that the reflector 17 is positioned in the non-measurement range φAR2 and the reflector 17 is positioned in the non-measurement range θAR2. Even in this case, the measurement light ML, which is reflected by the mirror 13 toward the measurement target object MT to measure the position of the measurement target object MT, is not blocked by the reflector 17. As a result, even in a case where the measurement apparatus 1 includes the reflector 17, the measurement apparatus 1 can properly measure the position of the measurement target object MT.

Alternatively, the reflector 17 may be arranged so that the reflector 17 is positioned in the non-measurement range φAR2 and the reflector 17 is positioned in the measurement range θAR1. Alternatively, the reflector 17 may be arranged so that the reflector 17 is positioned in the measurement range φAR1 and the reflector 17 is positioned in the non-measurement range θAR2. Even in this case, compared to a case where the reflector 17 is arranged so that the reflector 17 is positioned in the measurement range φAR1 and the reflector 17 is positioned in the measurement range θAR1, the measurement light ML, which is reflected by the mirror 13 toward the measurement target object MT to measure the position of the measurement target object MT, is not blocked by the reflector 17. As a result, even in a case where the measurement apparatus 1 includes the reflector 17, the measurement apparatus 1 can properly measure the position of the measurement target object MT.

A state in which the reflector 17 is positioned in the measurement range φAR1 may mean a state in which the reflector 17 is positioned in a range through which the measurement light ML reflected by the mirror 13 passes in a case where the rotational angle of the mirror 13 changes within the measurement range φAR1. Note that the range itself through which the measurement light ML reflected by the mirror 13 passes in a case where the rotational angle of the mirror 13 changes within the measurement range φAR1 may be referred to as the measurement range φAR1. Similarly, a state in which the reflector 17 is positioned in the non-measurement range φAR2 may mean a state in which the reflector 17 is positioned in a range through which the measurement light ML reflected by the mirror 13 passes in a case where the rotational angle of the mirror 13 changes within the non-measurement range φAR2. Note that the range itself through which the measurement light ML reflected by the mirror 13 passes in a case where the rotational angle of the mirror 13 changes within the non-measurement range φAR2 may be referred to as the non-measurement range φAR2. Similarly, state in which the reflector 17 is positioned in the measurement range θAR1 may mean a state in which the reflector 17 is positioned in a range through which the measurement light ML reflected by the mirror 13 passes in a case where the rotational angle of the mirror 13 changes within the measurement range θAR1. Note that the range itself through which the measurement light ML reflected by the mirror 13 passes in a case where the rotational angle of the mirror 13 changes within the measurement range θAR1 may be referred to as the measurement range θAR1. Similarly, a state in which the reflector 17 is positioned in the non-measurement range θAR2 may mean a state in which the reflector 17 is positioned in a range through which the measurement light ML reflected by the mirror 13 passes in a case where the rotational angle of the mirror 13 changes within the non-measurement range θAR2. Note that the range itself through which the measurement light ML reflected by the mirror 13 passes in a case where the rotational angle of the mirror 13 changes within the non-measurement range θAR2 may be referred to as the non-measurement range θAR2.

Each of the first space SP 1 and the second space SP2 described above may be regarded as a space defined by at least one of the first angle range φAR within which the mirror 13 is rotatable around the azimuth axis φ and the second angle range θAR within which the mirror 13 is rotatable around the elevation axis θ. For example, the first space SP1 may be a space defined by the measurement range φAR1 that is a part of the first angle range φAR. As one example, the first space SP1 may be a space that includes the measurement range φAR1 or that is included in the measurement range φAR1. As one example, the first space SP1 may a space that includes a space through which the measurement light ML reflected by the mirror 13 passes in a case where the rotational angle of the mirror 13 changes within the measurement range φAR1 or that is included in the space through which the measurement light ML reflected by the mirror 13 passes in a case where the rotational angle of the mirror 13 changes within the measurement range φAR1. For example, the second space SP2 may be a space defined by the non-measurement range φAR2 that is a part of the first angle range φAR. As one example, the second space SP2 may be a space that includes the non-measurement range φAR2 or that is included in the non-measurement range φAR2. As one example, the first space SP1 may be a space that includes a space through which the measurement light ML reflected by the mirror 13 passes in a case where the rotational angle of the mirror 13 changes within the non-measurement range φAR2 or that is included in the space through which the measurement light ML reflected by the mirror 13 passes in a case where the rotational angle of the mirror 13 changes within the non-measurement range φAR2. For example, the first space SP1 may be a space defined by the measurement range θAR1 that is a part of the second angle range θAR. As one example, the first space SP1 may be a space that includes the measurement range θAR1 or that is included in the measurement range θAR1. As one example, the first space SP1 may a space that includes a space through which the measurement light ML reflected by the mirror 13 passes in a case where the rotational angle of the mirror 13 changes within the measurement range θAR1 or that is included in the space through which the measurement light ML reflected by the mirror 13 passes in a case where the rotational angle of the mirror 13 changes within the measurement range θAR1. For example, the second space SP2 may be a space defined by the non-measurement range θAR2 that is a part of the second angle range θAR. As one example, the second space SP2 may be a space that includes the non-measurement range θAR2 or that is included in the non-measurement range θAR2. As one example, the first space SP1 may be a space that includes a space through which the measurement light ML reflected by the mirror 13 passes in a case where the rotational angle of the mirror 13 changes within the non-measurement range θAR2 or that is included in the space through which the measurement light ML reflected by the mirror 13 passes in a case where the rotational angle of the mirror 13 changes within the non-measurement range θAR2.

The measurement apparatus 1 may include a plurality of reflectors 17. In this case, the measurement apparatus 1 may irradiate the measurement light ML onto at least one of the plurality of reflectors 17 in order to perform the calibration operation. Furthermore, the measurement apparatus 1 may detect the reflected light RL from at least one of the plurality of reflectors 17 in order to perform the calibration operation.

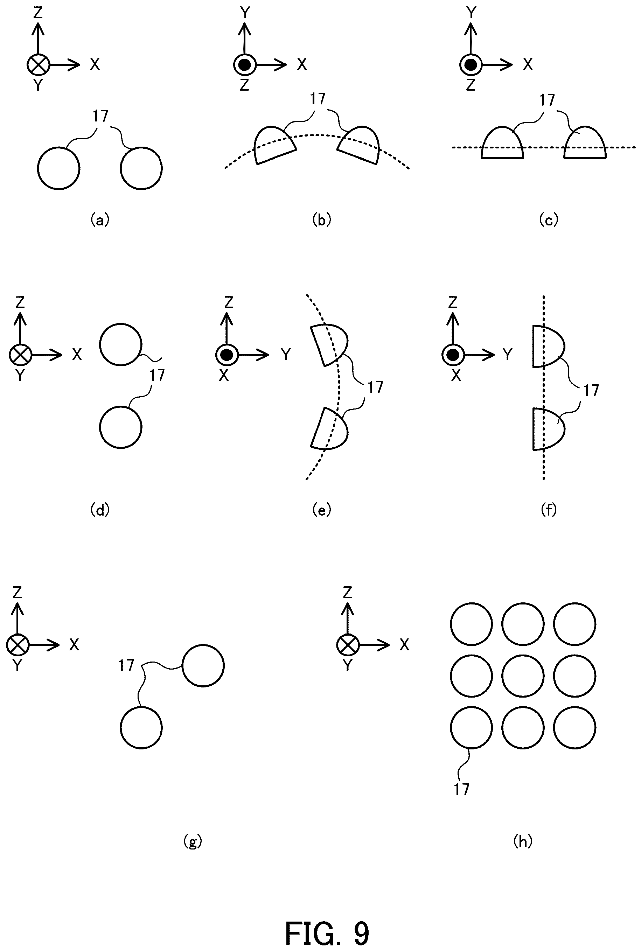

One example of the plurality of reflectors 17 is illustrated in FIG. 9(a) to FIG. 9(h).

For example, as illustrated in FIG. 9(a), the plurality of reflectors 17 may include at least two reflectors 17 that are positioned to be apart from each other along a circumferential direction around the azimuth axis φ (the Z-axis). Here, the at least two reflectors 17 that are positioned to be apart from each other along the circumferential direction around the azimuth axis φ may include at least two reflectors 17 that are positioned to be apart from each other on an arc around the azimuth axis φ, as illustrated in FIG. 9(b). The at least two reflectors 17 that are positioned to be apart from each other along the circumferential direction around the azimuth axis φ may include at least two reflectors 17 that are positioned to be apart from each other on a straight axis intersecting the azimuth axis φ, as illustrated in FIG. 9(c).

For example, as illustrated in FIG. 9(d), the plurality of reflectors 17 may include at least two reflectors 17 that are positioned to be apart from each other along a circumferential direction around the elevation axis θ (the X-axis). Here, the at least two reflectors 17 that are positioned to be apart from each other along the circumferential direction around the elevation axis θ may include at least two reflectors 17 that are positioned to be apart from each other on an arc around the elevation axis θ, as illustrated in FIG. 9(e). The at least two reflectors 17 that are positioned to be apart from each other along the circumferential direction around the elevation axis θ may include at least two reflectors 17 that are positioned to be apart from each other on a straight axis intersecting the elevation axis θ, as illustrated in FIG. 9(f).

For example, as illustrated in FIG. 9(g), the plurality of reflectors 17 may include at least two reflectors 17 that are positioned to be apart from each other along the circumferential direction around the azimuth axis φ (the Z-axis) and that are positioned to be apart from each other along the circumferential direction around the elevation axis θ (the X-axis). Here, the at least two reflectors 17 that are positioned to be apart from each other along the circumferential direction around the azimuth axis φ (the Z-axis) and that are positioned to be apart from each other along the circumferential direction around the elevation axis θ (the X-axis) may include at least two reflectors 17 that are positioned to be apart from each other on an arc around the azimuth axis φ and that are positioned to be apart from each other on an arc around the elevation axis θ. The at least two reflectors 17 that are positioned to be apart from each other along the circumferential direction around the azimuth axis φ (the Z-axis) and that are positioned to be apart from each other along the circumferential direction around the elevation axis θ (the X-axis) may include at least two reflectors 17 that are positioned to be apart from each other on an arc around the azimuth axis φ and that are positioned to be apart from each other on an straight axis intersecting the elevation axis θ. The at least two reflectors 17 that are positioned to be apart from each other along the circumferential direction around the azimuth axis φ (the Z-axis) and that are positioned to be apart from each other along the circumferential direction around the elevation axis θ (the X-axis) may include at least two reflectors 17 that are positioned to be apart from each other on a straight axis intersecting the azimuth axis φ and that are positioned to be apart from each other on an arc around the elevation axis θ. The at least two reflectors 17 that are positioned to be apart from each other along the circumferential direction around the azimuth axis φ (the Z-axis) and that are positioned to be apart from each other along the circumferential direction around the elevation axis θ (the X-axis) may include at least two reflectors 17 that are positioned to be apart from each other on a straight axis intersecting the azimuth axis φ and that are positioned to be apart from each other on a straight axis intersecting the elevation axis θ.

For example, as illustrated in FIG. 9(h), the plurality of reflectors 17 may include at least two reflectors 17 that are positioned to be apart from each other along the circumferential direction around the azimuth axis φ (the Z-axis), at least two reflectors 17 that are positioned to be apart from each other along the circumferential direction around the elevation axis θ (the X-axis), and at least two reflectors 17 that are positioned to be apart from each other along the circumferential direction around the azimuth axis φ (the Z-axis) and that are positioned to be apart from each other along the circumferential direction around the elevation axis θ (the X-axis). For example, as illustrated in FIG. 9(h), the plurality of reflectors 17 may include at least two reflectors 17 that are positioned to be apart from each other along the circumferential direction around the azimuth axis φ (the Z-axis), and at least two reflectors 17 that are positioned to be apart from each other along the circumferential direction around the elevation axis θ (the X-axis). For example, as illustrated in FIG. 9(h), the plurality of reflectors 17 may include at least two reflectors 17 that are positioned to be apart from each other along the circumferential direction around the azimuth axis φ (the Z-axis), and at least two reflectors 17 that are positioned to be apart from each other along the circumferential direction around the azimuth axis φ (the Z-axis) and that are positioned to be apart from each other along the circumferential direction around the elevation axis θ (the X-axis). For example, as illustrated in FIG. 9(h), the plurality of reflectors 17 may include at least two reflectors 17 that are positioned to be apart from each other along the circumferential direction around the elevation axis θ (the X-axis), and at least two reflectors 17 that are positioned to be apart from each other along the circumferential direction around the azimuth axis φ (the Z-axis) and that are positioned to be apart from each other along the circumferential direction around the elevation axis θ (the X-axis).

The reflectors 17 may be positioned on the second support apparatus 16 (alternatively, any other apparatus or any other member, the same applies in this paragraph) through a low thermal expansion member. The "low thermal expansion member" here may be a member whose thermal expansion coefficient is lower than that of the second support apparatus 16. Alternatively, the reflectors 17 may be positioned on the low thermal expansion member of the second support apparatus 16. For example, in a case where at least a part of the housing 160 of the second support apparatus 16 is made of the low thermal expansion member, the reflectors 17 may be positioned on at least a part of the housing 160 made of the low thermal expansion member. In this case, a misalignment of the reflector 17 due to a thermal deformation of the second support apparatus 16 is prevented.

### (1-3) Configuration of Control Apparatus 2

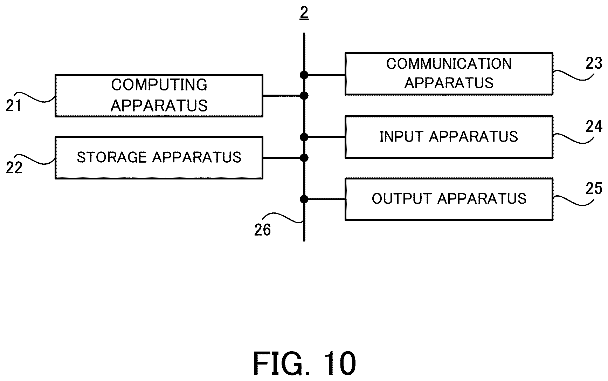

Next, with reference to FIG. 10, a configuration of the control apparatus 2 will be described. FIG. 10 is a block diagram that illustrates the configuration of the control apparatus 2.

As illustrated in FIG. 10, the control apparatus 2 includes a computing apparatus 21, a storage apparatus 22, a communication apparatus 23, an input apparatus 24, and a output apparatus 25. The computing apparatus 21, the storage apparatus 22, the communication apparatus 23, the input apparatus 24, and the output apparatus 25 may be connected through a data bus 26.

The computing apparatus 21 may include at least one of a CPU (Central Processing Unit) and a GPU (Graphic Processing Unit), for example. The computing apparatus 21 reads a computer program. For example, the computing apparatus 21 may read the computer program recorded in the storage apparatus 22. For example, the computing apparatus 21 may read the computer program recorded in a non-transitory computer-readable recording medium by using a non-illustrated recording medium reading apparatus of the control apparatus 2. The computing apparatus 21 may acquire (namely, download or read) the computer program from a non-illustrated apparatus external to the control apparatus 2 through the communication apparatus 23. The computing apparatus 21 executes the read computer program. As a result, a logical functional block for performing a processing that should be performed by the control apparatus 2 is implemented in the computing apparatus 21. Namely, the computing apparatus 21 is configured to serve as a controller for implementing the logical functional block for performing the processing that should be performed by the control apparatus 2.

An arithmetic model that is buildable by machine learning may be implemented in the computing apparatus 21 by the computing apparatus 21 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 21 may perform the operation, which should be performed by the control apparatus 2, by using the arithmetic model. Note that the arithmetic model that has been built by off-line machine learning using training data may be implemented in the computing apparatus 21. Moreover, the arithmetic model implemented in the computing apparatus 21 may be updated by online machine learning on the computing apparatus 21. Alternatively, the computing apparatus 21 may perform the robot control processing by using the arithmetic model implemented in an apparatus external to the computing apparatus 21 (namely, an apparatus external to the control apparatus 2), in addition to or instead of the arithmetic model implemented in the computing apparatus 21.

The storage apparatus 22 is configured to store desired data. For example, the storage apparatus 22 may temporarily store the computer program that is executed by the computing apparatus 21. The storage apparatus 22 may temporarily store data temporarily used by the computing apparatus 21 in a case where the computing apparatus 21 executes the computer program. The storage apparatus 22 may store data stored for a long term by the control apparatus 2. Note that the storage apparatus 22 may include at least one of a RAM (Random Access Memory, a ROM (Read Only Memory), a hard disk apparatus, a magneto-optical disc, a SSD (Solid State Drive), and a disk array apparatus. Namely, the storage apparatus 22 may include a non-transitory recording medium.

The communication apparatus 23 is configured to communicate with an apparatus external to the control apparatus 2 through a communication network. In the present example embodiment, the communication apparatus 23 is configured to communicate with the measurement apparatus 1 through the communication network. For example, the communication apparatus 23 may acquire (namely, receive) the reflected light detection information related to the detected result of reflected light RL (including the calibration reflected light CRL) by the detector 14 from the measurement apparatus 1 by communicating with the measurement apparatus 1. For example, the communication apparatus 23 may output (namely, transmit) the irradiation direction control information (especially, the irradiation direction control information calibrated by the calibration operation) to the measurement apparatus 1 by communicating with the measurement apparatus 1.

The input apparatus 24 is an apparatus that is configured to receive an input of information from an outside of the control apparatus 2 to the control apparatus 2. For example, the input apparatus 24 may include an operating apparatus (for example, at least one of a keyboard, a mouse, and a touch panel) that is operable by an operator (for example, a user of the measurement system SYS). For example, the input apparatus 24 may include a recording medium reading apparatus that is configured to read information recorded as data on a recording medium that is attachable to the control apparatus 2.

The output apparatus 25 is an apparatus that outputs information to the outside of the control apparatus 2. For example, the output apparatus 25 may output the information as an image. Namely, the output apparatus 25 may include a display apparatus (a so-called display) that is configured to display an image indicating the information that should be output. For example, the output apparatus 25 may output the information as audio. Namely, the output apparatus 25 may include an audio apparatus (so-called a speaker) that is configured output the audio. For example, the output apparatus 25 may output the information on a paper. Namely, the output apparatus 25 may include a printing apparatus (so-called a printer) that is configured to print desired information on the paper.

### (2) Calibration Operation Performed By Measurement System SYS

Next, the calibration operation performed by the measurement system SYS will be described.

### (2-1) Technical Reason For Performing Calibration Operation

First, a technical reason for performing the calibration operation that calibrates irradiation direction control information will be described. As described above, the control apparatus 2 controls the rotation of the mirror 13 based on the irradiation direction control information. Namely, the control apparatus 2 controls the rotational angle of the mirror 13 (in other words, a direction of the mirror 13) based on the irradiation direction control information. The control apparatus 2 controls the driving systems 152 and 162, which rotate the mirror 13, based on the irradiation direction control information.

Especially, the control apparatus 2 controls the rotation of the mirror 13 based on the irradiation direction control information that controls the rotation of the mirror 13 so that the rotational angle of the mirror 13 becomes the target angle. Namely, the control apparatus 2 controls the rotational angle of the mirror 13 based on the irradiation direction control information that controls the rotation of the mirror 13 so that the rotational angle of the mirror 13 becomes the target angle. The control apparatus 2 controls the driving systems 152 and 162, which rotate the mirror 13, based on irradiation direction control information that controls the rotation of the mirror 13 so that the rotational angle of the mirror 13 becomes the target angle. Note that the irradiation direction control information that controls the rotation of the mirror 13 so that the rotational angle of the mirror 13 becomes the target angle may include at least one of the command signal, which is for controlling each of the driving systems 152 and 162 so that the rotational angle of the mirror 13 becomes the target angle, and the target value (namely, the target angle) of the rotational angle of the mirror 13, as described above.

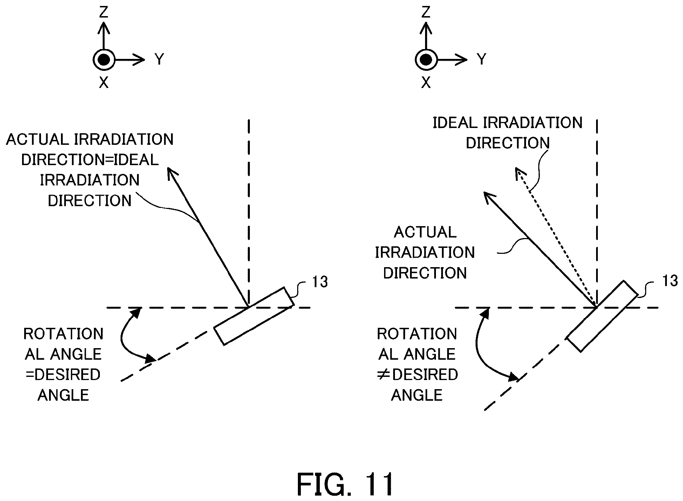

Here, in a case where a state of the measurement apparatus 1 is an ideal state (in other words, a designed state), when the mirror 13 rotates based on the irradiation direction control information that controls the rotation of the mirror 13 so that the rotational angle of the mirror 13 becomes the target angle, the mirror 13 actually rotates so that the actual rotational angle of the mirror 13 is the same as the target angle, as illustrated in FIG. 11(a). As a result, mirror 13 reflects the measurement light ML toward an ideal irradiation direction (in other words, a designed irradiation direction) indirectly indicated by the irradiation direction control information.

On the other hand, in a case where the state of the measurement apparatus 1 is not the ideal state (in other words, the designed state), when the mirror 13 rotates based on the irradiation direction control information that controls the rotation of the mirror 13 so that the rotational angle of the mirror 13 becomes the target angle, there is a possibility that the mirror 13 actually rotate so that the actual rotational angle of the mirror 13 becomes an angle that is different from the target angle, as illustrated in FIG. 11(b). As a result, as illustrated in FIG. 11(b), there is a possibility that the mirror 13 reflects the measurement light ML toward an irradiation direction that is different from the ideal irradiation direction indirectly indicated by the irradiation direction control information. Namely, an error occurs in the irradiation direction of the measurement light ML. Note that the error that occurs in the irradiation direction of the measurement light ML is referred to as an "irradiation direction error" in the below-described description. The irradiation direction error may mean a difference between the actual irradiation direction of the measurement light ML and the ideal irradiation direction of the measurement light ML. As a result, in a case where the irradiation direction error occurs, there is a possibility that an error occurs in the calculated result of the position of the measurement target object MT by the control apparatus 2. This is because the control apparatus 2 calculates the position of the measurement target object MT based on the calculated result of the distance between the measurement apparatus 1 and the measurement target object MT and the information related to the irradiation direction of the measurement light ML as described above. However, the control apparatus 2 cannot determine based on the reflected light detection information acquired from the detector 14 whether or not the irradiation direction error occurs. Therefore, the control apparatus 2 calculates the position of the measurement target object MT based on the calculated result of the distance between the measurement apparatus 1 and the measurement target object MT and the ideal irradiation direction of the measurement light ML indicated by the irradiation direction control information, assuming that the mirror 13 reflects the measurement light ML toward the ideal irradiation direction indirectly indicated by the irradiation direction control information. However, in a case where the irradiation direction error occurs (namely, the irradiation direction error is not zero), there is a possibility that the error occurs in the calculated result of the position of the measurement target object MT. Namely, there is a possibility that the control apparatus 2 calculate, as the position of the measurement target object MT, an incorrect position (namely, a position including the error) that is different from the actual position of the measurement target object MT.

One example of a cause of the irradiation direction error (namely, a cause of the state of the measurement apparatus 1 being the state different from the ideal state) is that the mirror 13 is positioned at a position that is different from an ideal position (in other words, a designed position) in the measurement apparatus 1. One example of a cause of the mirror 13 being positioned at the position different from the ideal position is an influence of an environment outside the measurement system SYS. One example of the environment outside the measurement system SYS is at least one of a temperature, a pressure, and a humidity of a space outside the measurement system SYS. An example of a cause of the mirror 13 being positioned at the position different from the ideal position is an influence of an environment inside the measurement system SYS. One example of the environment inside the measurement system SYS is at least one of a temperature, a pressure, and a humidity of a space inside the measurement system SYS.

Alternatively, even in a case where the mirror 13 is positioned at the ideal position, there is a possibility that the mirror 13 reflects the measurement light ML toward the irradiation direction different from the ideal irradiation direction indirectly indicated by the irradiation direction control information in a case where the measurement optical system 12 is positioned at a position different from an ideal position (in other words, a designed position) in the measurement apparatus 1. In other words, there is a possibility that the irradiation direction error occurs. Therefore, one example of a cause of the irradiation direction error (namely, a cause of the state of the measurement apparatus 1 being a state different from the ideal state) is that the measurement optical system 12 is positioned at the position different from the ideal position (in other words, the designed position) in the measurement apparatus 1. Note that an optical axis of the measurement optical system 12 is different from an ideal optical axis (in other words, a designed optical axis) in a case where the measurement optical system 12 is positioned at the position different from the ideal position. Therefore, another example of a cause of the irradiation direction error is that the optical axis of the measurement optical system 12 is different from the ideal optical axis. Namely, another example of a cause of the irradiation direction error is a misalignment of the optical axis of the measurement optical system 12.

Another example of a cause of the irradiation direction error (namely, a cause of the state of the measurement apparatus 1 being the state different from the ideal state) is a variation in a posture of the measurement system SYS. For example, the measurement system SYS may be used in a state where a posture of the measurement apparatus 1 is a posture illustrated in FIG. 5, or may be used in a state where the posture of the measurement apparatus 1 is posture different from the posture illustrated in FIG. 5 (for example, a posture realized by rotating the measurement apparatus 1 illustrated in FIG. 5 by 90 degrees around the Y-axis). Here, when the posture of the measurement apparatus 1 changes, a posture of the mirror 13 (furthermore, a posture of the measurement optical system 12, the same applies in this paragraph) also changes. When the posture of the mirror 13 changes, a direction along which the gravity acts on the mirror 13 in the coordinate system based on the mirror 13 changes. As a result, when the posture of the measurement apparatus 1 changes, there is a possibility that the posture of the mirror 13 relative to the measurement light ML change slightly due to the gravity acting on the mirror 13 even though the rotational angle of the mirror 13 relative to the measurement light ML does not change. As a result, there is a possibility that the irradiation direction error occurs.

Another example of a cause of the irradiation direction error (namely, a cause of the state of the measurement apparatus 1 being the state different from the ideal state) is a motion error that occurs in the rotation of the mirror 13. One example of a cause of the motion error occurring in the rotation of the mirror 13 is a driving error of at least one of the driving systems 152 and 162 that rotate the mirror 13 based on the irradiation direction control information. One example of a cause of the motion error occurring in the rotation of the mirror 13 is a difference between the actual elevation axis θ around which the driving system 152 rotates the mirror 13 and an ideal elevation axis θ. One example of a cause of the motion error occurring in the rotation of the mirror 13 is a difference between the actual azimuth axis φ around which the driving system 162 rotates the mirror 13 and an ideal azimuth axis φ. One example of a cause of the motion error occurring in the rotation of the mirror 13 is an error of an orthogonality between the actual elevation axis θ around which the driving system 152 rotates the mirror 13 and the actual azimuth axis φ around which the driving system 162 rotates the mirror 13.

Therefore, in the present example embodiment, the measurement system SYS performs the calibration operation to substantially determine whether or not the actual irradiation direction of the measurement light ML is the same as the ideal irradiation direction of the measurement light ML. Namely, the measurement system SYS performs the calibration operation to substantially determine whether or not the irradiation direction error occurs. Furthermore, in a case where the actual irradiation direction of the measurement light ML is different from the ideal irradiation direction of the measurement light ML the measurement system SYS calibrates the irradiation direction control information so that the difference between the actual irradiation direction of the measurement light ML and the ideal irradiation direction of the measurement light ML decreases. Namely, in a case where the irradiation direction error occurs, the measurement system SYS calibrates the irradiation direction control information so that the irradiation direction error decreases. Typically, the measurement system SYS may calibrate the irradiation direction control information so that the actual irradiation direction of the measurement light ML becomes the same as the ideal irradiation direction of the measurement light ML. Typically, the measurement system SYS may calibrate the irradiation direction control information so that the irradiation direction error becomes zero.

After the irradiation direction control information is calibrated by the calibration operation, the measurement system SYS performs the position measurement operation by using the irradiation direction control information that has been calibrated by the calibration operation. Specifically, the control apparatus 2 controls the driving systems 152 and 162 by using the irradiation direction control information that has been calibrated by the calibration operation in the position measurement period during which the position measurement operation is performed. Namely, the control apparatus 2 controls the driving systems 152 and 162 by using the irradiation direction control information that has been calibrated by the calibration operation thereby controlling the rotation of the mirror 13 (namely, controlling the direction of the mirror 13) in the position measurement period. As a result, it is unlikely that the actual irradiation direction of the measurement light ML is different from the ideal irradiation direction of the measurement light ML in the position measurement period. Namely, it is unlikely that the irradiation direction error occurs in the position measurement period. Typically, the actual irradiation direction of the measurement light ML becomes the same as the ideal irradiation direction of the measurement light ML in the position measurement period. Typically, the irradiation direction error does not occur in the position measurement period. As a result, the control apparatus 2 can calculate the position of the measurement target object MT properly. Specifically, the control apparatus 2 can calculate the position of the measurement target object MT accurately.

Note that the irradiation direction of the measurement light ML changes as the irradiation direction control information is calibrated. Therefore, calibrating the irradiation direction control information may be considered to be equivalent to changing (in other words, controlling) the irradiation direction of the measurement light ML. Moreover, a behavior of the mirror 13 that reflects the measurement light ML changes as the irradiation direction control information is calibrated. Therefore, calibrating the irradiation direction control information may be considered to be equivalent to controlling the irradiation apparatus including the mirror 13. Moreover, the position of the measurement target object MT calculated by the position measurement operation becomes more accurate as the irradiation direction control information is calibrated. Therefore, calibrating the irradiation direction control information may be considered to be equivalent to controlling the position measurement operation.

### (2-2) Flow Of Calibration Operation

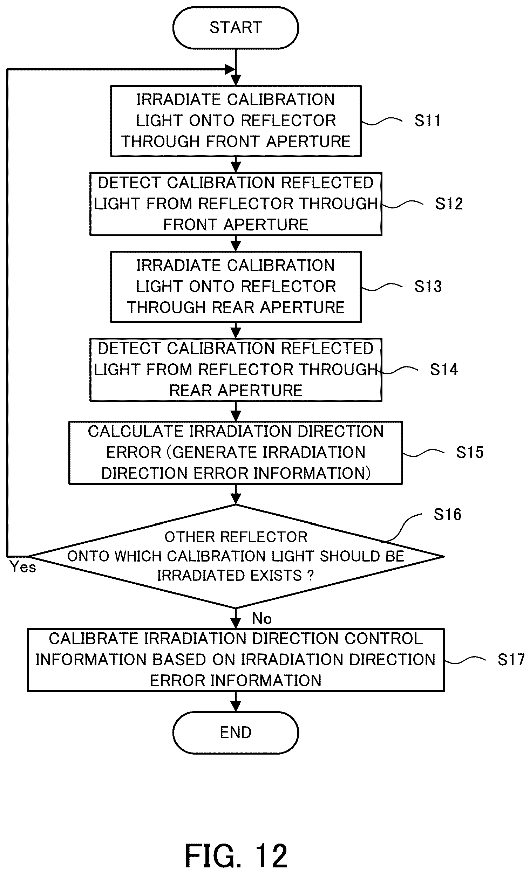

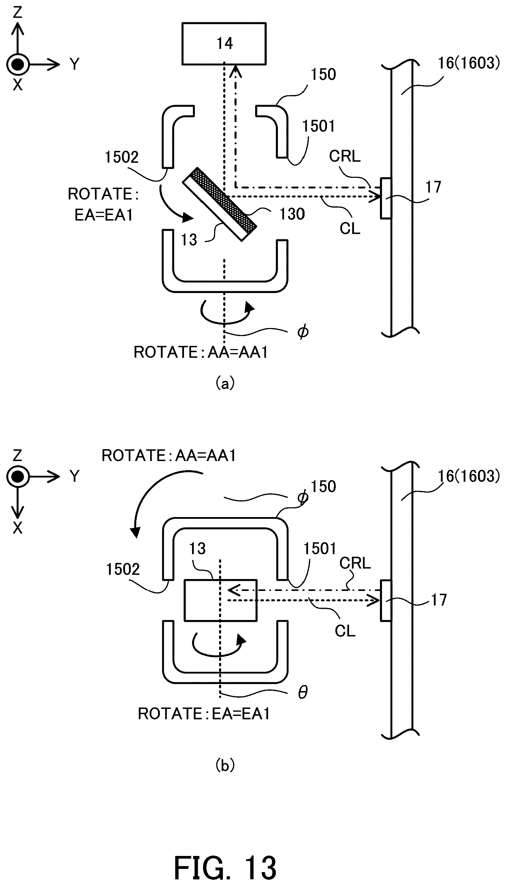

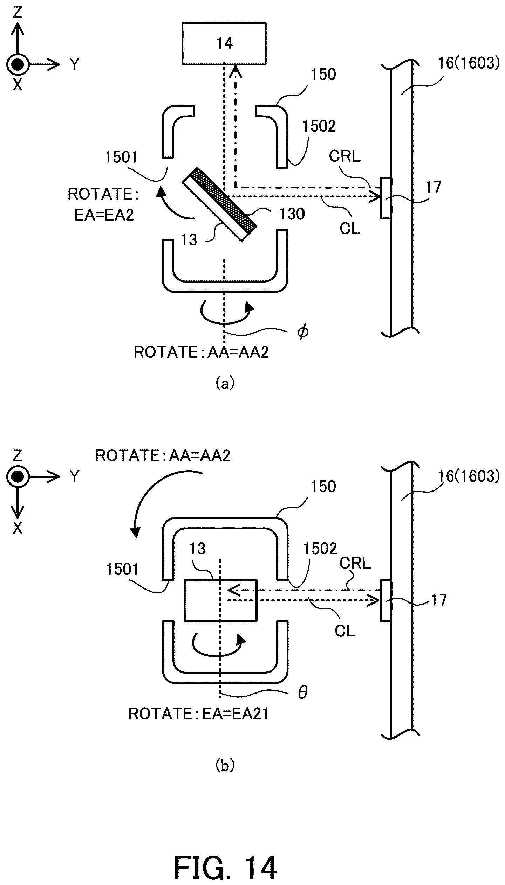

Next, with reference to FIG. 12, FIG. 13(a) to FIG. 13(b), and FIG. 14(a) to FIG. 14(b), a flow of the calibration operation will be described. FIG. 12 is a flowchart that illustrates the flow of the calibration operation. Each of FIG. 13(a) to FIG. 13(b) and FIG. 14(a) to FIG. 14(b) illustrates the mirror 13 and reflector 17 used in the calibration operation together with an optical path of the calibration light CL and an optical path of the calibration reflected light CRL.

As illustrated in FIG. 12 and FIG. 13(a) and FIG. 13(b), the measurement apparatus 1 irradiates the calibration light CL onto the reflector 17 through the front aperture 1501 formed in the housing 150 of the first support apparatus 15 (a step S11 in FIG. 12). Therefore, the control apparatus 2 controls the driving systems 152 and 162 so that the rotational angle of the mirror 13 becomes a first angle that realizes a first state in which "the calibration light CL that has been reflected by the mirror 13 enters the reflector 17 through the front aperture 1501". Specifically, the control apparatus 2 generates the irradiation direction control information for controlling the driving system 152 so that a rotational angle EA of the mirror 13 around the elevation axis θ becomes a first elevation angle EA1 that realizes the first state, and controls the driving system 152 based on the generated irradiation direction control information. Furthermore, the control apparatus 2 generates the irradiation direction control information for controlling the driving system 162 so that a rotational angle AA of the mirror 13 around the azimuth axis φ becomes a first azimuth angle AA1 that realizes the first state, and controls the driving system 162 based on the generated irradiation direction control information. As a result, the measurement apparatus 1 can irradiate the calibration light CL, which has been reflected by the mirror 13, onto the reflector 17 through the front aperture 1501.

Furthermore, the calibration reflected light CRL from the reflector 17 enters the measurement apparatus 1 through the front aperture 1501. As a result, the detector 14 of the measurement apparatus 1 detects the calibration reflected light CRL, which has entered the measurement apparatus 1 through the front aperture 1501, through the mirror 13 and the measurement optical system 12 (a step S12 in FIG. 12). Namely, the detector 14 detects the calibration reflected light CRL in at least a part of a period during which a state of the measurement apparatus 1 is the first state.

As illustrated in FIG. 12 and FIG. 14(a) and FIG. 14(b), the measurement apparatus 1 irradiates the calibration light CL onto the same reflector 17 through the rear aperture 1502 formed in the housing 150 of the first support apparatus 15 (a step S13 in FIG. 12). Therefore, the control apparatus 2 controls the driving systems 152 and 162 so that the rotational angle of the mirror 13 becomes a second angle that realizes a second state in which "the calibration light CL that has been reflected by the mirror 13 enters the reflector 17 through the rear aperture 1502". Specifically, as illustrated in FIG. 14(a), the control apparatus 2 controls the driving system 152 so that the rotational angle EA of the mirror 13 around the elevation axis θ becomes a second elevation angle EA2 that realizes the second state. Furthermore, the control apparatus 2 controls the driving system 162 so that the rotational angle AA of the mirror 13 around the azimuth axis φ becomes a second azimuth angle AA2 that realizes the second state. As a result, the measurement apparatus 1 can irradiate the calibration light CL, which has been reflected by the mirror 13, onto the reflector 17 through the rear aperture 1502.

Furthermore, the calibration reflected light CRL from the reflector 17 enters the measurement apparatus 1 through the rear aperture 1502. As a result, the detector 14 of the measurement apparatus 1 detects the calibration reflected light CRL, which has entered the measurement apparatus 1 through the rear aperture 1502, through the mirror 13 and the measurement optical system 12 (a step S14 in FIG. 12). Namely, the detector 14 detects the calibration reflected light CRL in at least a part of a period during which the state of the measurement apparatus 1 is the second state.

Here, as described above, the rear aperture 1502 faces along the direction (in the example illustrated in FIG. 14(a) and FIG. 14(b), the Y axis) that intersects both the azimuth axis φ (the Z axis) and the elevation axis θ (the X axis). Therefore, the state of the measurement apparatus 1 should change from the first state (FIG. 13(a), in which "the calibration light CL that has been reflected by the mirror 13 enters the measurement apparatus 1 through the front aperture 1501", to the second state (FIG. 14(a), in which "the calibration light CL that has been reflected by the mirror 13 enters the measurement apparatus 1 through the rear aperture 1502" by rotating the mirror 13 by 180 degrees around the azimuth axis φ. Therefore, a difference between the second azimuth angle AA2 and the first azimuth angle AA1 may be 180 degrees.

Furthermore, in the example illustrated in FIG. 13(a) and FIG. 14(a), the state of the measurement apparatus 1 should change from the first state (FIG. 13(a)), in which "the calibration light CL that has been reflected by the mirror 13 enters the measurement apparatus 1 through the front aperture 1501", to the second state (FIG. 14(a)), in which "the calibration light CL that has been reflected by the mirror 13 enters the measurement apparatus 1 through the rear aperture 1502", by rotating the mirror 13 by 90 degrees around the elevation axis θ. Therefore, in this case, a difference between the second elevation angle EA2 and the first elevation angle EA1 may be 90 degrees. However, the difference between the second elevation angle EA2 and the first elevation angle EA1 may not be 90 degrees.

Note that an operation for irradiating the calibration light CL onto the reflector 17 through the front aperture 1501 and detecting the calibration reflected light CRL through the front aperture 1501 (namely, an operation from the step S11 to the step S12 in FIG. 12) is referred to as a front side measurement for convenience of description in the below-described description. Similarly, an operation for irradiating the calibration light CL onto reflector 17 through rear aperture 1502 and detecting the calibration reflected light CRL through the rear aperture 1502 (namely, an operation from a step S13 to a step S14 in FIG. 12) is referred to as a rear side measurement for convenience of description in the below-described description.

Then, the control apparatus 2 calculates the irradiation direction error based on the reflected light detection information acquired by the front side measurement and the reflected light detection information acquired by the rear side measurement (a step S15 in FIG. 12). Specifically, the control apparatus 2 generates irradiation direction error information related to the irradiation direction error based on the reflected light detection information acquired by the front side measurement and the reflected light detection information acquired by the rear side measurement.

In order to calculate the irradiation direction error (namely, to generate the irradiation direction error information), the control apparatus 2 calculates a position of the calibration reflected light CRL on the detection plane 140 in a period during which the front side measurement is performed, based on the reflected light detection information acquired by the front side measurement. Furthermore, the control apparatus 2 calculates the position of the calibration reflected light CRL on the detection plane 140 in a period during which the rear side measurement is performed, based on the reflected light detection information acquired by the rear side measurement.

In a case where the detector 14 is the light position sensor as described above, the control apparatus 2 can calculate the position of the calibration reflected light CRL on the detection plane 140 of the detector 14, based on the reflected light detection information. Especially, since the detection plane 140 is divided into the plurality of (for example, four) divided detection planes 141 as described above, the control apparatus 2 can accurately calculate the position of the calibration reflected light CRL on the detection plane 140 based on the detected results of the calibration reflected light CRL by each of the divided detection planes 141. For example, the control apparatus 2 can accurately calculate a distribution (a position) of a beam spot, which is formed by the calibration reflected light CRL, on the detection plane 140 as the position of the calibration reflected light CRL based on the detected result of a light intensity of the calibration reflected light CRL by each of the plurality of divided detection planes 141.

Then, the control apparatus 2 generates the irradiation direction error information based on the position of the calibration reflected light CRL calculated based on the result of the front side measurement and the position of the calibration reflected light CRL calculated based on the result of the rear side measurement. The irradiation direction error information generated here directly or indirectly indicates the irradiation direction error that occurs in a situation where the state of the measurement apparatus 1 is the first state. Namely, the irradiation direction error information generated here directly or indirectly indicates the irradiation direction error that occurs in a case where the mirror 13 rotates based on the irradiation direction control information for controlling the rotation of the mirror 13 so that the rotational angle EA of the mirror 13 around the elevation axis θ becomes the first elevation angle EA1 and the rotational angle AA of the mirror 13 around the azimuth axis φ becomes the first azimuth angle AA1. Note that generating the irradiation direction error information may be considered to be equivalent to determine whether or not the irradiation direction error occurs, because the irradiation direction error information indicates the irradiation direction error.

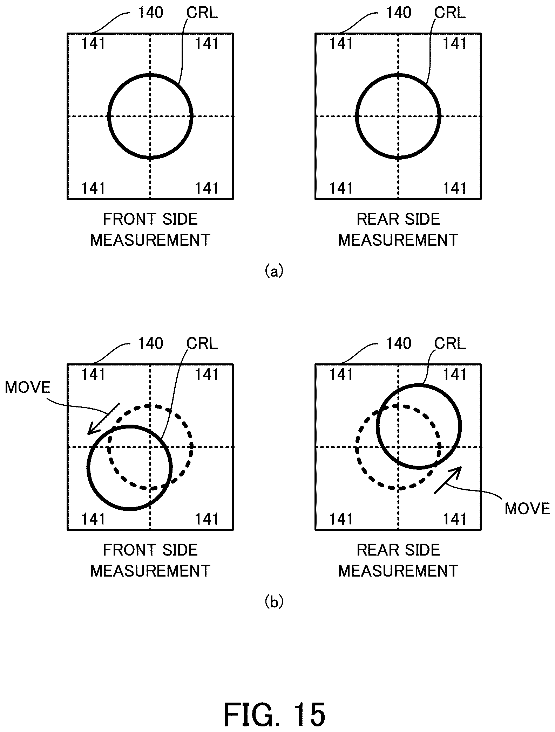

Specifically, FIG. 15(a) illustrates the position of the calibration reflected light CRL calculated based on the result of the front side measurement and the position of the calibration reflected light CRL calculated based on the result of the rear side measurement in a case where the irradiation direction error does not occur. In a case where the irradiation direction error does not occur, the position of the calibration reflected light CRL calculated based on the result of the front side measurement is the same as the position of the calibration reflected light CRL calculated based on the result of the rear side measurement. Therefore, in a case where the position of the calibration reflected light CRL calculated based on the result of the front side measurement is the same as the position of the calibration reflected light CRL calculated based on the result of the rear side measurement, the control apparatus 2 may determine that the irradiation direction error does not occur. Specifically, the control apparatus 2 may determine that the irradiation direction error does not occur in a case where the rotation of the mirror 13 is controlled based on the irradiation direction control information for controlling the rotation of the mirror 13 so that the rotational angle EA of the mirror 13 around the elevation axis θ becomes the first elevation angle EA1 and the rotational angle AA of the mirror 13 around the azimuth axis φ becomes the first azimuth angle AA1.

In this case, the control apparatus 2 may determine that the irradiation direction error does not occur in a case where the rotation of the mirror 13 is controlled based on the irradiation direction control information for controlling the rotation of the mirror 13 so that the rotational angle EA of the mirror 13 around the elevation axis θ becomes the first elevation angle EA1 and the rotational angle AA of the mirror 13 around the azimuth axis φ becomes the first azimuth angle AA1 in the position measurement period during which the position measurement operation is performed. Therefore, the control apparatus 2 may determine that it may not calibrate the irradiation direction control information for controlling the rotation of the mirror 13 so that the rotational angle EA of the mirror 13 around the elevation axis θ becomes the first elevation angle EA1 and the rotational angle AA of the mirror 13 around the azimuth axis φ becomes the first azimuth angle AA1.

On the other hand, FIG. 15(b) illustrates the position of the calibration reflected light CRL calculated based on the result of the front side measurement and the position of the calibration reflected light CRL calculated based on the result of the rear side measurement in a case where the irradiation direction error occurs. In a case where the irradiation direction error occurs, the position of the calibration reflected light CRL calculated based on the result of the front side measurement is not the same as the position of the calibration reflected light CRL calculated based on the result of the rear side measurement. Typically, the position of the calibration reflected light CRL calculated based on the result of the front side measurement and the position of the calibration reflected light CRL calculated based on the result of the rear side measurement are away from each other by the same distance toward different directions, respectively, with respect to the position of the calibration reflected light CRL in the case where the irradiation direction error does not occur (see a dotted circle in FIG. 15(b)). Therefore, in a case where the position of the calibration reflected light CRL calculated based on the result of the front side measurement is not the same as the position of the calibration reflected light CRL calculated based on the result of the rear side measurement, the control apparatus 2 may determine that the irradiation direction error occurs. Specifically, the control apparatus 2 may determine that the irradiation direction error occurs in a case where the rotation of the mirror 13 is controlled based on irradiation direction control information for controlling the rotation of the mirror 13 so that the rotational angle EA of the mirror 13 around the elevation axis θ becomes the first elevation angle EA1 and the rotational angle AA of the mirror 13 around the azimuth axis φ becomes the first azimuth angle AA1.

In this case, the control apparatus 2 may determine that the irradiation direction error occurs in a case where the rotation of the mirror 13 is controlled based on the irradiation direction control information for controlling the rotation of the mirror 13 so that the rotational angle EA of the mirror 13 around the elevation axis θ becomes the first elevation angle EA1 and the rotational angle AA of the mirror 13 around the azimuth axis φ becomes the first azimuth angle AA1 in the position measurement period during which the position measurement operation is performed. Therefore, the control apparatus 2 may determine that it should calibrate the irradiation direction control information for controlling the rotation of the mirror 13 so that the rotational angle EA of the mirror 13 around the elevation axis θ becomes the first elevation angle EA1 and the rotational angle AA of the mirror 13 around the azimuth axis φ becomes the first azimuth angle AA1.

The control apparatus 2 may generate, as at least a part of the irradiation direction error information, information related to a misalignment between the position of the calibration reflected light CRL calculated based on the result of the front side measurement and the position of the calibration reflected light CRL calculated based on the result of the rear side measurement. Note that the position of the calibration reflected light CRL calculated based on the result of the front side measurement is referred to as a "front spot position", and the position of the calibration reflected light CRL calculated based on the result of the rear side measurement is referred to as a "rear spot position", for convenience of description in the below-described description.

As one example, the control apparatus 2 may generate, as at least a part of the irradiation direction error information, information related to a size of the misalignment between the front spot position and the rear spot position. The irradiation direction error is assumed to be larger as the misalignment between the front spot position and the rear spot position is larger. Therefore, the information related to the size of the misalignment between the front spot position and the rear spot position is usable as the irradiation direction error information.

As another example, the control apparatus 2 may generate, as at least a part of the irradiation direction error information, information related to a direction of the misalignment between the front spot position and the rear spot position. Specifically, the control apparatus 2 may generate, as at least a part of the irradiation direction error information, the information related to the direction of the misalignment between the front spot position and the rear spot position on the detection plane 140. There is a possibility that the direction of the misalignment between the front spot position and the rear spot position depends on the rotational axis that defines the rotation of the mirror 13, which is one of the cause of the irradiation direction error. For example, in a case where the irradiation direction error occurs due to the motion error occurring in the rotation of the mirror 13 around the azimuth axis φ, there is a possibility that the front spot position is away from the rear spot position on the detection plane 140 in a first direction that is along the detection plane 140. For example, in a case where irradiation direction error occurs due to the motion error occurring in the rotation of the mirror 13 around elevation axis θ, there is a possibility that the front spot position is away from the rear spot position on detection plane 140 in a second direction that is along the detection plane 140 (especially, the second direction that is different from the first direction described above). Therefore, the information related to the direction of the misalignment between the front spot position and the rear spot position is usable as the irradiation direction error information.

As another example, the control apparatus 2 may generate, as at least a part of the irradiation direction error information, information related to a size of the misalignment between the front spot position and the rear spot position in each of a plurality of directions that are along the detection plane 140 and that are different from each other. For example, the control apparatus 2 may generate, as at least a part of the irradiation direction error information, first information related to the size of the misalignment between the front spot position and the rear spot position in a first direction that is along the detection plane 140, and second information related to the size of the misalignment between the front spot position and the rear spot position in a second direction that is along the detection plane 140. The second direction may be a direction that is different from the first direction described above. Typically, the second direction may be a direction that is orthogonal to the first direction. In a case where the irradiation direction error occurs due to the motion error occurring in the rotation of the mirror 13 around the azimuth axis φ as described above, there is a possibility that the front spot position is away from the rear spot position on the detection plane 140 in the first direction that is along the detection plane 140. In this case, the first information may indicate the irradiation direction error that is caused by the motion error occurring in the rotation of the mirror 13 around the azimuth axis φ. Similarly, in a case where the irradiation direction error occurs due to the motion error occurring in the rotation of the mirror 13 around the elevation axis θ as described above, there is a possibility that the front spot position is away from the rear spot position on the detection plane 140 in the second direction that is along the detection plane 140. In this case, the second information may indicate the irradiation direction error that is caused by the motion error occurring in the rotation of the mirror 13 around the elevation axis θ. Therefore, the information related to the size of the misalignment between the front spot position and the rear spot position in each of the plurality of directions that are along the detection plane 140 and that are different from each other is usable as the irradiation direction error information. Especially, the information related to the size of the misalignment between the front spot position and the rear spot position in each of the plurality of directions that are along the detection plane 140 and that are different from each other may be used as the irradiation direction error information that separately indicates the irradiation direction error that is caused by the motion error occurring in the rotation of the mirror 13 around the azimuth axis φ and the irradiation direction error that is caused by the motion error occurring in the rotation of the mirror 13 around the elevation axis θ. In this case, the control apparatus 2 may be considered to separately calculate the irradiation direction error that is caused by the motion error occurring in the rotation of the mirror 13 around the azimuth axis φ and the irradiation direction error that is caused by the motion error occurring in the rotation of the mirror 13 around the elevation axis θ.

In a case where the measurement apparatus 1 includes the plurality of reflectors 17, the measurement apparatus 1 may perform the front side measurement and the rear side measurement for each of the plurality of reflectors 17. Specifically, the control apparatus 2 may determine whether or another reflector 17 onto which the calibration light CL should be irradiated exists (in other words, remains) (a step S16 in FIG. 12). In a case where it is determined that another reflector 17 onto which the calibration light CL should be irradiated exists (the step S16: Yes in FIG. 12), the measurement apparatus 1 may perform the front side measurement (the step S11 to the step S12 in FIG. 12) and the rear side measurement (the step S13 to the step S14 in FIG. 12) for another reflector 17.

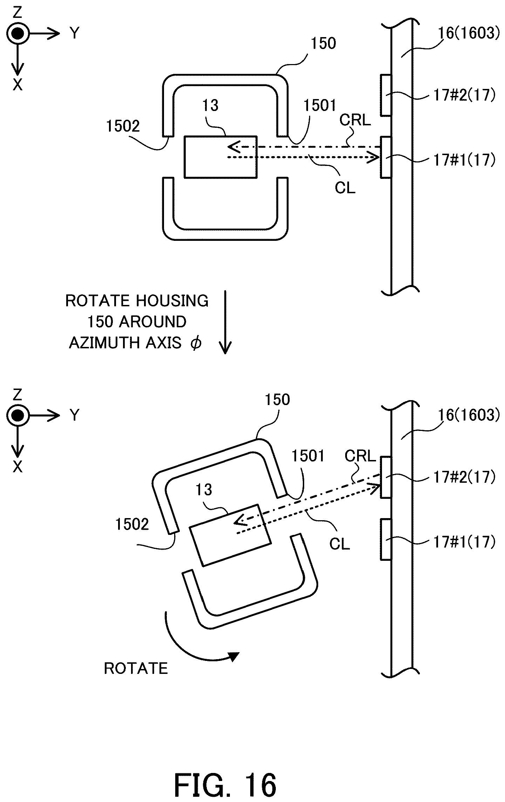

As a first example, FIG. 16 illustrates an example in which the measurement apparatus 1 includes at least two reflectors 17 (specifically, reflectors 17#1 and 17#2) that is positioned to be apart along the circumferential direction around the azimuth axis φ. In this case, as illustrated in an upper part of FIG. 16, the measurement apparatus 1 may perform the front side measurement and the rear side measurement for the reflector 17#1. Then, as illustrated in a lower part of FIG. 16, the measurement apparatus 1 may perform the front side measurement and the rear side measurement for the reflector 17#2.

Specifically, as illustrated in the upper part of FIG. 16, the control apparatus 2 controls the driving system 152 so that the rotational angle EA of the mirror 13 around the elevation axis θ becomes a first elevation angle EA11 that realizes a first state S11 in which "the calibration light CL that has been reflected by the mirror 13 enters the reflector 17#1 through the front aperture 1501". Furthermore, the control apparatus 2 controls the driving system 162 so that the rotational angle AA of the mirror 13 around the azimuth axis φ becomes a first azimuth angle AA11 that realizes the first state S11. As a result, the measurement apparatus 1 performs the front side measurement for the reflector 17#1.

Then, the control apparatus 2 controls the driving system 152 so that the rotational angle EA of the mirror 13 around the elevation axis θ becomes a second elevation angle EA12 that realizes a second state S12 in which "the calibration light CL that has been reflected by the mirror 13 enters the reflector 17#1 through the rear aperture 1502". Furthermore, the control apparatus 2 controls the driving system 162 so that the rotational angle AA of the mirror 13 around the azimuth axis φ becomes a second azimuth angle AA12 that realizes the second state S12. As a result, the measurement apparatus 1 performs the rear side measurement for the reflector 17#1.

Then, as illustrated in the lower part of FIG. 16, the control apparatus 2 controls the driving system 152 so that the rotational angle EA of the mirror 13 around the elevation axis θ becomes a third elevation angle EA13 that realizes a third state S13 in which "the calibration light CL that has been reflected by the mirror 13 enters the reflector 17#2 through the front aperture 1501". Note that the third elevation angle EA13 may be the same as the first elevation angle EA11 in a case where the reflectors 17#1 and 17#2 are not apart from each other along the circumferential direction around the elevation axis θ. Furthermore, the control apparatus 2 controls the driving system 162 so that the rotational angle AA of the mirror 13 around the azimuth axis φ becomes a third azimuth angle AA13 that realizes the third state S13. Note that the third azimuth angle AA13 is different from the first azimuth angle AA11 because the reflectors 17#1 and 17#2 are apart from each other along the circumferential direction around the azimuth axis φ. As a result, the measurement apparatus 1 performs the front side measurement for the reflector 17#2.

Then, the control apparatus 2 controls the driving system 152 so that the rotational angle EA of the mirror 13 around the elevation axis θ becomes a fourth elevation angle EA14 that realizes a fourth state S14 in which "the calibration light CL that has been reflected by the mirror 13 enters the reflector 17#2 through the rear aperture 1502". Note that the fourth elevation angle EA14 may be the same as the second elevation angle EA12 in a case where the reflectors 17#1 and 17#2 are not apart from each other along the circumferential direction around the elevation axis θ. Furthermore, the control apparatus 2 controls the driving system 162 so that the rotational angle AA of the mirror 13 around the azimuth axis φ becomes a fourth azimuth angle AA14 that realizes the fourth state S14. Note that the fourth azimuth angle AA14 is different from the second azimuth angle AA12 because the reflectors 17#1 and 17#2 are apart from each other along the circumferential direction around the azimuth axis φ. As a result, the measurement apparatus 1 performs the rear side measurement for the reflector 17#2.

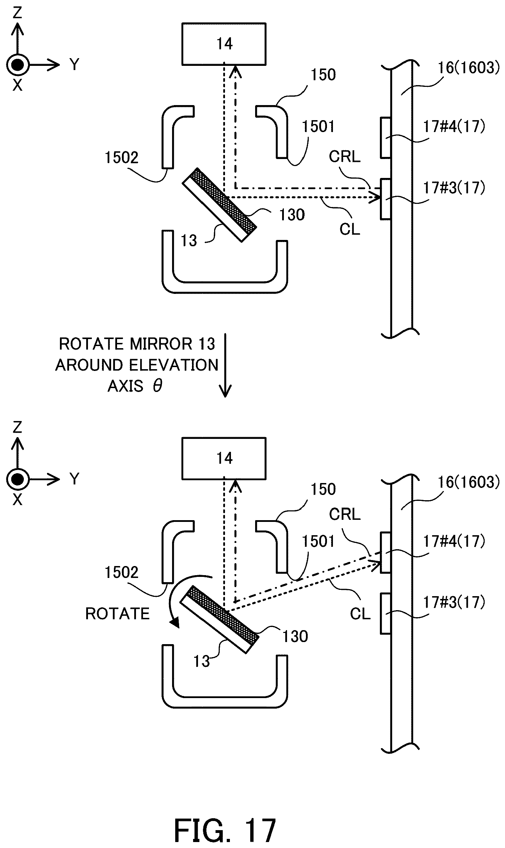

As a second example, FIG. 17 illustrates an example in which the measurement apparatus 1 includes at least two reflectors 17 (specifically, reflectors 17#3 and 17#4) that is positioned to be apart along the circumferential direction around the elevation axis θ. In this case, as illustrated in an upper part of FIG. 17, the measurement apparatus 1 may perform the front side measurement and the rear side measurement for the reflector 17#3. Then, as illustrated in a lower part of FIG. 17, the measurement apparatus 1 may perform the front side measurement and the rear side measurement for the reflector 17#4.

Specifically, as illustrated in the upper part of FIG. 17, the control apparatus 2 controls the driving system 152 so that the rotational angle EA of the mirror 13 around the elevation axis θ becomes a first elevation angle EA21 that realizes a first state S21 in which "the calibration light CL that has been reflected by the mirror 13 enters the reflector 17#3 through the front aperture 1501". Furthermore, the control apparatus 2 controls the driving system 162 so that the rotational angle AA of the mirror 13 around the azimuth axis φ becomes a first azimuth angle AA21 that realizes the first state S21. As a result, the measurement apparatus 1 performs the front side measurement for the reflector 17#3.

Then, the control apparatus 2 controls the driving system 152 so that the rotational angle EA of the mirror 13 around the elevation axis θ becomes a second elevation angle EA22 that realizes a second state S22 in which "the calibration light CL that has been reflected by the mirror 13 enters the reflector 17#3 through the rear aperture 1502". Furthermore, the control apparatus 2 controls the driving system 162 so that the rotational angle AA of the mirror 13 around the azimuth axis φ becomes a second azimuth angle AA22 that realizes the second state S22. As a result, the measurement apparatus 1 performs the rear side measurement for the reflector 17#3.

Then, as illustrated in the lower part of FIG. 17, the control apparatus 2 controls the driving system 152 so that the rotational angle EA of the mirror 13 around the elevation axis θ becomes a third elevation angle EA23 that realizes a third state S23 in which "the calibration light CL that has been reflected by the mirror 13 enters the reflector 17#4 through the front aperture 1501". Note that the third elevation angle EA23 is different from the first elevation angle EA21 because the reflectors 17#3 and 17#4 are apart from each other along the circumferential direction around the elevation axis θ. Furthermore, the control apparatus 2 controls the driving system 162 so that the rotational angle AA of the mirror 13 around the azimuth axis φ becomes a third azimuth angle AA23 that realizes the third state S23. Note that the third azimuth angle AA23 may be the same as the first azimuth angle AA21 in a case where the reflectors 17#3 and 17#4 are not apart from each other along the circumferential direction around the azimuth axis φ. As a result, the measurement apparatus 1 performs the front side measurement for the reflector 17#3.

Then, the control apparatus 2 controls the driving system 152 so that the rotational angle EA of the mirror 13 around the elevation axis θ becomes a fourth elevation angle EA24 that realizes a fourth state S24 in which "the calibration light CL that has been reflected by the mirror 13 enters the reflector 17#4 through the rear aperture 1502". Note that the fourth elevation angle EA24 is different from the second elevation angle EA22 because where the reflectors 17#3 and 17#4 are apart from each other along the circumferential direction around the elevation axis θ. Furthermore, the control apparatus 2 controls the driving system 162 so that the rotational angle AA of the mirror 13 around the azimuth axis φ becomes a fourth azimuth angle AA24 that realizes the fourth state S24. Note that the fourth azimuth angle AA24 may be the same as the second azimuth angle AA22 in a case where the reflectors 17#3 and 17#4 are not apart from each other along the circumferential direction around the azimuth axis φ. As a result, the measurement apparatus 1 performs the rear side measurement for the reflector 17#4.

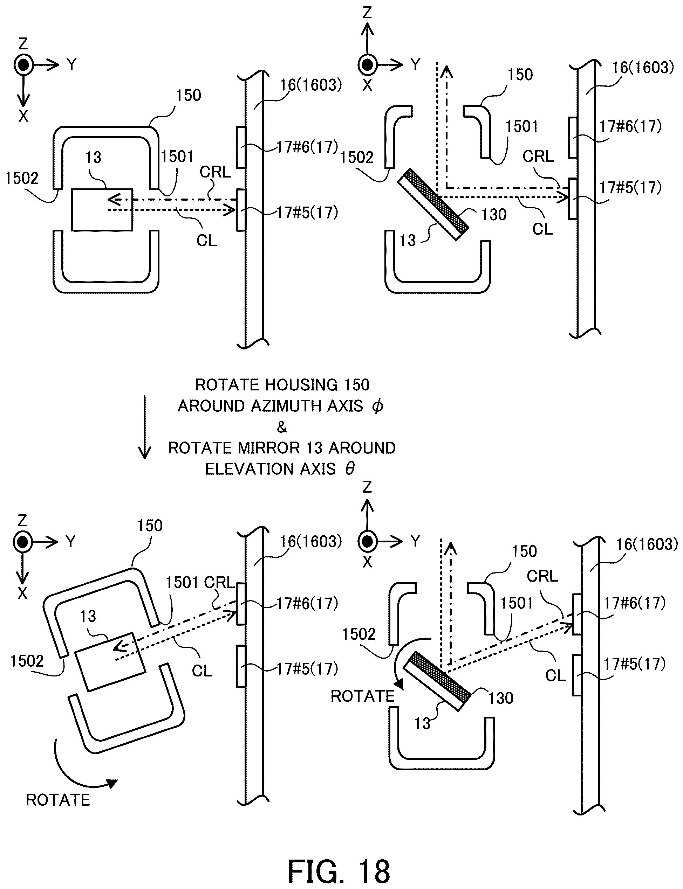

As a third example, FIG. 18 illustrates an example in which the measurement apparatus 1 includes at least two reflectors 17 (specifically, reflectors 17#5 and 17#6) that is positioned to be apart along the circumferential direction around the azimuth axis φ and to be apart along the circumferential direction around the elevation axis θ. In this case, as illustrated in an upper part of FIG. 18, the measurement apparatus 1 may perform the front side measurement and the rear side measurement for the reflector 17#5. Then, as illustrated in a lower part of FIG. 18, the measurement apparatus 1 may perform the front side measurement and the rear side measurement for the reflector 17#6.

Specifically, as illustrated in the upper part of FIG. 18, the control apparatus 2 controls the driving system 152 so that the rotational angle EA of the mirror 13 around the elevation axis θ becomes a first elevation angle EA31 that realizes a first state S31 in which "the calibration light CL that has been reflected by the mirror 13 enters the reflector 17#5 through the front aperture 1501". Furthermore, the control apparatus 2 controls the driving system 162 so that the rotational angle AA of the mirror 13 around the azimuth axis φ becomes a first azimuth angle AA31 that realizes the first state S31. As a result, the measurement apparatus 1 performs the front side measurement for the reflector 17#5.

Then, the control apparatus 2 controls the driving system 152 so that the rotational angle EA of the mirror 13 around the elevation axis θ becomes a second elevation angle EA32 that realizes a second state S32 in which "the calibration light CL that has been reflected by the mirror 13 enters the reflector 17#5 through the rear aperture 1502". Furthermore, the control apparatus 2 controls the driving system 162 so that the rotational angle AA of the mirror 13 around the azimuth axis φ becomes a second azimuth angle AA32 that realizes the second state S32. As a result, the measurement apparatus 1 performs the rear side measurement for the reflector 17#5.

Then, as illustrated in the lower part of FIG. 18, the control apparatus 2 controls the driving system 152 so that the rotational angle EA of the mirror 13 around the elevation axis θ becomes a third elevation angle EA33 that realizes a third state S33 in which "the calibration light CL that has been reflected by the mirror 13 enters the reflector 17#6 through the front aperture 1501". Note that the third elevation angle EA33 is different from the first elevation angle EA31 because the reflectors 17#5 and 17#6 are apart from each other along the circumferential direction around the elevation axis θ. Furthermore, the control apparatus 2 controls the driving system 162 so that the rotational angle AA of the mirror 13 around the azimuth axis φ becomes a third azimuth angle AA33 that realizes the third state S33. Note that the third azimuth angle AA33 is different from the first azimuth angle AA31 because the reflectors 17#5 and 17#6 are apart from each other along the circumferential direction around the azimuth axis φ. As a result, the measurement apparatus 1 performs the front side measurement for the reflector 17#5.

Then, the control apparatus 2 controls the driving system 152 so that the rotational angle EA of the mirror 13 around the elevation axis θ becomes a fourth elevation angle EA34 that realizes a fourth state S34 in which "the calibration light CL that has been reflected by the mirror 13 enters the reflector 17#6 through the rear aperture 1502". Note that the fourth elevation angle EA34 is different from the second elevation angle EA32 because where the reflectors 17#5 and 17#6 are apart from each other along the circumferential direction around the elevation axis θ. Furthermore, the control apparatus 2 controls the driving system 162 so that the rotational angle AA of the mirror 13 around the azimuth axis φ becomes a fourth azimuth angle AA34 that realizes the fourth state S34. Note that the fourth azimuth angle AA34 is different from the second azimuth angle AA32 because the reflectors 17#5 and 17#6 are apart from each other along the circumferential direction around the azimuth axis φ. As a result, the measurement apparatus 1 performs the rear side measurement for the reflector 17#6.

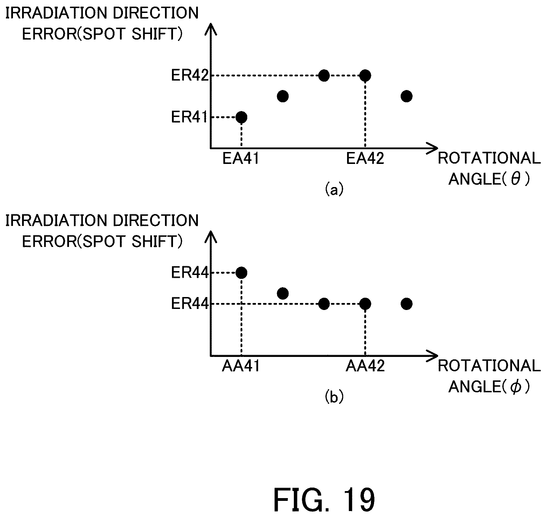

As a result, the control apparatus 2 may generate a plurality of irradiation direction error information that correspond to the plurality of reflectors 17, respectively. Especially, each of the plurality of irradiation direction error information corresponds to a combination of the rotational angle EA of the mirror 13 around the elevation axis θ and the rotational angle AA of the mirror 13 around the azimuth axis φ. Therefore, as illustrated in FIG. 19(a) and FIG. 19(b), the control apparatus 2 may be considered to calculate a relationship between the rotational angle EA of the mirror 13 around the elevation axis θ and the irradiation direction error, and a relationship between the rotational angle EA of the mirror 13 around the azimuth axis φ and the irradiation direction error by generating the plurality of irradiation direction error information. Note that FIG. 19(a) and FIG. 19(b) illustrate an example in which the size of the misalignment between the front spot position and the rear spot position is used as the irradiation direction error.

Then, the control apparatus 2 calibrates the irradiation direction control information based on the one or the plurality of irradiation direction control information calculated at the step S15 in FIG. 12 (a step S17 in FIG. 12). In the below-described description, an operation for calibrating the irradiation direction control information based on the plurality of irradiation direction control information (the plurality of irradiation direction errors) illustrated in FIG. 19(a) and FIG. 19(b) will be described as one example of an operation for calibrating the irradiation direction control information.

FIG. 19(a) illustrates the relationship between the rotational angle EA of the mirror 13 around the elevation axis θ and the irradiation direction error. Specifically, FIG. 19(a) illustrates the irradiation direction error that occurs in a case where the mirror 13 rotates based on the irradiation direction control information for controlling the rotation of the mirror 13 so that the rotational angle EA of the mirror 13 around the elevation axis θ becomes one angle. On the other hand, FIG. 19(b) illustrates the relationship between the rotational angle AA of the mirror 13 around the azimuth axis φ and the irradiation direction error. Specifically, FIG. 19(b) illustrates the irradiation direction error that occurs in a case where the mirror 13 rotates based on the irradiation direction control information for controlling the rotation of the mirror 13 so that the rotational angle EA of the mirror 13 around the azimuth axis φ becomes one angle. The control apparatus 2 may calibrate the irradiation direction control information so that the irradiation direction error illustrated in FIG. 19(a) and FIG. 19(b) is decreases or becomes zero.

For example, in a case where the irradiation direction error information indicates that the irradiation direction error having a first size ER41 occurs in a case where the rotation of the mirror 13 is controlled based on the irradiation direction control information for controlling the rotation of the mirror 13 so that the rotational angle EA of the mirror 13 around the elevation axis θ becomes a first elevation angle EA41 as illustrated in FIG. 19(a), the control apparatus 2 may calibrate the irradiation direction control information, which is for controlling the rotation of the mirror 13 so that the rotational angle EA of the mirror 13 around the elevation axis θ becomes the first elevation angle EA41, so that the irradiation direction error, which occurs in a case where the rotation of the mirror 13 is controlled based on the calibrated irradiation direction information, is smaller than the first size ER41. For example, in a case where the irradiation direction error information indicates that the irradiation direction error having a second size ER42 occurs in a case where the rotation of the mirror 13 is controlled based on the irradiation direction control information for controlling the rotation of the mirror 13 so that the rotational angle EA of the mirror 13 around the elevation axis θ becomes a second elevation angle EA42 as illustrated in FIG. 19(a), the control apparatus 2 may calibrate the irradiation direction control information, which is for controlling the rotation of the mirror 13 so that the rotational angle EA of the mirror 13 around the elevation axis θ becomes the first elevation angle EA41, so that the irradiation direction error, which occurs in a case where the rotation of the mirror 13 is controlled based on the calibrated irradiation direction information, is smaller than the second size ER42.

For example, in a case where the irradiation direction error information indicates that the irradiation direction error having a third size ER43 occurs in a case where the rotation of the mirror 13 is controlled based on the irradiation direction control information for controlling the rotation of the mirror 13 so that the rotational angle AA of the mirror 13 around the azimuth axis φ becomes a first azimuth angle AA41 as illustrated in FIG. 19(b), the control apparatus 2 may calibrate the irradiation direction control information, which is for controlling the rotation of the mirror 13 so that the rotational angle AA of the mirror 13 around the azimuth axis φ becomes the first azimuth angle AA41, so that the irradiation direction error, which occurs in a case where the rotation of the mirror 13 is controlled based on the calibrated irradiation direction information, is smaller than the third size ER43. For example, in a case where the irradiation direction error information indicates that the irradiation direction error having a fourth size ER44 occurs in a case where the rotation of the mirror 13 is controlled based on the irradiation direction control information for controlling the rotation of the mirror 13 so that the rotational angle AA of the mirror 13 around the azimuth axis φ becomes a second azimuth angle AA42 as illustrated in FIG. 19(b), the control apparatus 2 may calibrate the irradiation direction control information, which is for controlling the rotation of the mirror 13 so that the rotational angle AA of the mirror 13 around the azimuth axis φ becomes the second azimuth angle AA42, so that the irradiation direction error, which occurs in a case where the rotation of the mirror 13 is controlled based on the calibrated irradiation direction information, is smaller than the fourth size ER44.

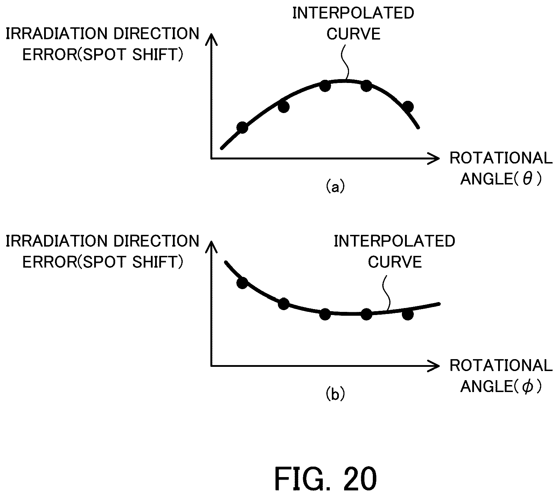

The control apparatus 2 may perform an interpolation processing based on the irradiation direction error information as illustrated in FIG. 20(a) and FIG. 20(b). Typically, the control apparatus 2 may perform the interpolation processing for interpolate to estimate the irradiation direction error information, which is different from the plurality of irradiation direction error information generated by performing the front side measurement and the rear side measurement for each of the plurality of reflectors 17, as illustrated in FIG. 20(a) and FIG. 20(b). For example, the control apparatus 2 may estimate the irradiation direction error information, which is different from the plurality of irradiation direction error information, by calculating an interpolation curve connecting the plurality of irradiation direction errors indicated by the plurality of irradiation direction error information, respectively. For example, the control apparatus 2 may estimate the irradiation direction error information, which is different from the plurality of irradiation direction error information, by interpolating the plurality of irradiation direction errors indicated by the plurality of irradiation direction error information, respectively. For example, the control apparatus 2 may estimate the irradiation direction error information, which is different from the irradiation direction error information, by extrapolating the plurality of irradiation direction errors indicated by the plurality of irradiation direction error information, respectively. In this case, the control apparatus 2 may estimate, by the interpolation processing, the irradiation direction error information related to the irradiation direction error that may occur at an unknown rotational angle, which is not actually used as the target angle of the mirror 13 in the calibration operation. Therefore, the control apparatus 2 may calibrate the irradiation direction control information for controlling the rotation of the mirror 13 so that the rotational angle of the mirror 13 becomes an unknown angle, which is not actually used as the target angle of the mirror 13 in the calibration operation, based on the irradiation direction error information estimated by the interpolation processing.

Note that the plurality of reflectors 17 may include at least two reflectors 17 that are apart from each other by a certain distance or more in a case where the interpolation processing is performed based on the irradiation direction error information. In this case, the irradiation direction error information used for the interpolation processing distribute over a wider range of the rotational angle on graphs illustrated in FIG. 20(a) and FIG. 20(b). Therefore, the control apparatus 2 can estimate the irradiation direction control information over a wider range of the rotational angle by the interpolation processing.

On the other hand, the plurality of reflectors 17 may include at least two reflectors 17 that are not apart from each other by a certain distance or more. In this case, the irradiation direction error information used for the interpolation processing distribute locally within a range near a specific rotational angle on the graphs illustrated in FIG. 20(a) and FIG. 20(b). Therefore, the control apparatus 2 can accurately estimate the irradiation direction control information within a range near a specific rotational angle by the interpolation processing.

Depending on the irradiation direction error information, the control apparatus 2 may not calibrate the irradiation direction control information based on the irradiation direction error information. Namely, the control apparatus 2 may determine based on the irradiation direction error information whether or not the irradiation direction control information should be calibrated, may calibrate the irradiation direction control information in a case where it is determined that the irradiation direction control information should be calibrated, and may not calibrate the irradiation direction control information in a case where it is determined that the irradiation direction control information may not be calibrated. For example, in a case where the irradiation direction error information indicates that the irradiation direction error occurs in a case where the rotation of the mirror 13 is controlled based on the irradiation direction control information for controlling the rotation of the mirror 13 so that the rotational angle EA of the mirror 13 around the elevation axis θ becomes one elevation angle and the rotational angle AA of the mirror 13 around the azimuth axis φ becomes one azimuth angle as described above, the control apparatus 2 may calibrate (for example, change or adjust) the irradiation direction control information for controlling the rotation of the mirror 13 so that the rotational angle EA of the mirror 13 around the elevation axis θ becomes one elevation angle and the rotational angle AA of the mirror 13 around the azimuth axis φ becomes one azimuth angle. On the other hand, in a case where the irradiation direction error information indicates that the irradiation direction error does not occur in a case where the rotation of the mirror 13 is controlled based on the irradiation direction control information for controlling the rotation of the mirror 13 so that the rotational angle EA of the mirror 13 around the elevation axis θ becomes one elevation angle and the rotational angle AA of the mirror 13 around the azimuth axis φ becomes one azimuth angle as described above, the control apparatus 2 may not calibrate (for example, change or adjust) the irradiation direction control information for controlling the rotation of the mirror 13 so that the rotational angle EA of the mirror 13 around the elevation axis θ becomes one elevation angle and the rotational angle AA of the mirror 13 around the azimuth axis φ becomes one azimuth angle.

The control apparatus 2 may calibrate the irradiation direction control information so that the irradiation direction error, which occurs in a case where the rotation of the mirror 13 is controlled based on the calibrated irradiation direction control information, is smaller than the irradiation direction error, which occurs in a case where the rotation of the mirror 13 is controlled based on the uncalibrated irradiation direction control information. Typically, the control apparatus 2 may calibrate the irradiation direction control information so that the irradiation direction error, which occurs in a case where the rotation of the mirror 13 is controlled based on the uncalibrated irradiation direction control information, does not occur in a case where the rotation of the mirror 13 is controlled based on the calibrated irradiation direction control information. As a result, the irradiation direction error is decreased by controlling the rotation of the mirror 13 in the position measurement period based on the calibrated irradiation direction control information. Typically, the irradiation direction error is eliminated by controlling the rotation of the mirror 13 in the position measurement period based on the calibrated irradiation direction control information.

As described above, the irradiation direction control information may include the command signal for controlling each of the driving systems 152 and 162 so that the rotational angle of the mirror 13 becomes the target angle. In this case, the control apparatus 3 may calibrate (specifically, change or adjust) the command signal of each of the driving systems 152 and 162. Namely, calibrating the irradiation direction control information may include calibrating (specifically, changing or adjusting) the command signal of each of the driving systems 152 and 162. Specifically, the control apparatus 3 may calibrate (specifically, change or adjust) the command signal of each of the driving systems 152 and 162 so that the irradiation direction error is decreased or is eliminated.

As a first example, the control apparatus 2 may calibrate the command signal of the driving system 152 based on a table that specifies a relationship between the irradiation direction error and a correction amount of the command signal of the driving system 152 that rotates the mirror 13 around the elevation axis θ. The table may specify the correction amount for correcting one command signal so as to decrease or eliminate the irradiation direction error of one size in a case where the irradiation direction error of the one size occurs by rotating the mirror 13 around the elevation axis θ based on the one command signal. In this case, the control apparatus 2 may calculate the correction amount of the command signal of the driving system 152 that can decrease or eliminate the irradiation direction error based on the calculated irradiation direction error and the table. Then, the control apparatus 2 may calibrate the command signal of the driving system 152 by correcting the command signal of the driving system 152 indicated by the irradiation direction control information based on the calculated correction amount.

As a second example, the control apparatus 2 may calibrate the command signal of the driving system 162 based on a table that specifies a relationship between the irradiation direction error and a correction amount of the command signal of the driving system 162 that rotates the mirror 13 around the azimuth axis φ. The table may specify the correction amount for correcting one command signal so as to decrease or eliminate the irradiation direction error of one size in a case where the irradiation direction error of the one size occurs by rotating the mirror 13 around the azimuth axis φ based on the one command signal. In this case, the control apparatus 2 may calculate the correction amount of the command signal of the driving system 162 that can decrease or eliminate the irradiation direction error based on the calculated irradiation direction error and the table. Then, the control apparatus 2 may calibrate the command signal of the driving system 162 by correcting the command signal of the driving system 162 indicated by the irradiation direction control information based on the calculated correction amount.

As described above, the irradiation direction control information may include the target value of the rotational angle of the mirror 13 (namely, the target angle of the mirror 13). In this case, the control apparatus 3 may calibrate (specifically, change or adjust) the target angle of the mirror 13. Namely, calibrating the irradiation direction control information may include calibrating (specifically, changing or adjusting) the target angle of the mirror 13. Specifically, the control apparatus 3 may calibrate (specifically, change or adjust) the target angle of the mirror 13 so that the irradiation direction error is decreased or eliminated.

As a first example, the control apparatus 2 may calibrate the target angle of the mirror 13 around the elevation axis θ based on a table that specifies a relationship between the irradiation direction error and a correction amount of the target angle of the mirror 13 around the elevation axis θ. The control apparatus 2 may calibrate the target angle of the mirror 13 around the elevation axis θ based on the table that specifies the relationship between the irradiation direction error and the correction amount of the target angle of the mirror 13 around the elevation axis θ. The table may specify a correction amount for correcting one target angle so as to decrease or eliminate the irradiation direction error of one size in a case where the irradiation direction error of the one size occurs by rotating the mirror 13 around the elevation axis θ so that the rotational angle of the mirror 13 around the elevation axis θ becomes the one target angle. In this case, the control apparatus 2 may calculate the correction amount of the target angle of the mirror 13 around the elevation axis θ that can decrease or eliminate the irradiation direction error based on the calculated irradiation direction error and the table. Then, the control apparatus 2 may calibrate the target angle of the mirror 13 around the elevation axis θ by correcting the target angle of the mirror 13 around the elevation axis θ indicated by the irradiation direction control information based on the calculated correction amount. For example, the control apparatus 2 may calibrate the target angle of the mirror 13 around the elevation axis θ by increasing or decreasing the target angle of the mirror 13 around the elevation axis θ indicated by the irradiation direction control information by the calculated correction amount.

Alternatively, the control apparatus 2 may calibrate an origin angle (in other words, an initial position or an initial angle) of the mirror 13 around the elevation axis θ in addition to or instead of calibrating the target angle of the mirror 13 around the elevation axis θ. This is because the rotational angle of the mirror 13 around the elevation axis θ is an angle with respect to the origin angle, and therefore, a calibration of the origin angle of the mirror 13 around the elevation axis θ may be considered to be equivalent to a calibration of the rotational angle (the target angle) of the mirror 13 around the elevation axis θ.

As a second example, the control apparatus 2 may calibrate the target angle of the mirror 13 around the azimuth axis φ based on a table that specifies a relationship between the irradiation direction error and a correction amount of the target angle of the mirror 13 around the azimuth axis φ. The table may specify the correction amount for correcting one target angle so as to decrease or eliminate the irradiation direction error of one size in a case where the irradiation direction error of the one size occurs by rotating the mirror 13 around the azimuth axis φ so that the rotational angle of the mirror 13 around the azimuth axis φ becomes the one target angle. In this case, the control apparatus 2 may calculate the correction amount of the target angle of the mirror 13 around the azimuth axis φ that can decrease or eliminate the irradiation direction error based on the calculated irradiation direction error and the table. Then, the control apparatus 2 may calibrate the target angle of the mirror 13 around the azimuth axis φ by correcting the target angle of the mirror 13 around the azimuth axis φ indicated by the irradiation direction control information based on the calculated correction amount. For example, the control apparatus 2 may calibrate the target angle of the mirror 13 around the azimuth axis φ by increasing or decreasing the target angle of the mirror 13 around the azimuth axis φ indicated by the irradiation direction control information by the calculated correction amount.

Alternatively, the control apparatus 2 may calibrate an origin angle (in other words, an initial position or an initial angle) of the mirror 13 around the azimuth axis φ in addition to or instead of calibrating the target angle of the mirror 13 around the azimuth axis φ. This is because the rotational angle of the mirror 13 around the azimuth axis φ is an angle with respect to the origin angle, and therefore, a calibration of the origin angle of the mirror 13 around the azimuth axis φ may be considered to be equivalent to a calibration of the rotational angle (the target angle) of the mirror 13 around the azimuth axis φ.

Alternatively, in a case where the measurement apparatus 1 includes an angle detection apparatus (for example, a rotary encoder) that is configured to detect the rotational angle of the mirror 13, the control apparatus 2 may calibrate (specifically, change or adjust) a detected result by the angle detection apparatus in addition to or instead of calibrating the irradiation direction control information. Specifically, in a case where the measurement apparatus 1 includes the angle detection apparatus, the control apparatus 2 controls the rotation of the mirror 13 so that the rotational angle of the mirror 13 indicated by the detected result by the angle detection apparatus is the same as the target angle of the mirror 13 indicated directly or indirectly by the irradiation direction control information. Although the control apparatus 2 calibrates the target angle of the mirror 13 (alternatively, the command signal corresponding to the target angle) in the above-described description, the same effect is achievable even in a case where the rotational angle of the mirror 13 indicated by the detected result of the angle detection apparatus is calibrated. Specifically, in a case where the target angle of the mirror 13 (alternatively, the command signal corresponding to the target angle) is calibrated, the control apparatus 2 controls the rotation of the mirror 13 so that the rotational angle of the mirror 13 indicated by the detected result by the angle detection apparatus is the same as the calibrated target angle in the position measurement period during which the position measurement operation is performed. On the other hand, in a case where the detected result by the angle detection apparatus (namely, the detected result of the rotational angle of the mirror 13) is calibrated, the control apparatus 2 controls the rotation of the mirror 13 so that a calibrated value of the rotational angle of the mirror 13 is the same as the target angle in the position measurement period during which the position measurement operation is performed. Therefore, in either case, the fact remains that the irradiation direction error decreases or does not occur in the position measurement period.

Note that, the mirror 13 rotates around both the azimuth axis φ and the elevation axis θ when the state of the measurement apparatus 1 is switched from a front side measurement state (see FIG. 12(a) to FIG. 12(b)) in which the measurement apparatus 1 performs the front side measurement to a rear side measurement state (see FIG. 13(a) to FIG. 13(b)) in which the measurement apparatus 1 performs the rear side measurement in the above-described description. Namely, both the rotational angle of the mirror 13 around the azimuth axis φ and the rotational angle of the mirror 13 around the elevation axis θ change when the state of the measurement apparatus 1 is switched from the front side measurement state to the rear side measurement state. However, the mirror 13 may rotate around one of the azimuth axis φ and the elevation axis θ but may not rotate around the other one of the azimuth axis φ and the elevation axis θ when the state of the measurement apparatus 1 is switched from the front side measurement state to the rear side measurement state. Namely, one of the rotational angle of the mirror 13 around the azimuth axis φ and the rotational angle of the mirror 13 around the elevation axis θ may be changed but the other one of the rotational angle of the mirror 13 around the azimuth axis φ and the rotational angle of the mirror 13 around the elevation axis θ may not be changed when the state of the measurement apparatus 1 is switched from the front side measurement state to the rear side measurement state.

As a first example, when the state of the measurement apparatus 1 is switched from the front side measurement state to the rear side measurement state, the mirror 13 may rotate around the azimuth axis φ but may not rotate around the elevation axis θ. In this case, the rotational angle of the mirror 13 around the elevation axis θ may be maintained at an angle that is the same as the rotational angle of the mirror 13 around the elevation axis θ in a case where the position measurement operation is performed. Then, the control apparatus 2 may calibrate the irradiation direction control information for controlling the rotation of the mirror 13 around the azimuth axis φ based on the reflected light detection information.

As a second example, when the state of the measurement apparatus 1 is switched from the front side measurement state to the rear side measurement state, the mirror 13 may rotate around the elevation axis θ but may not rotate around the azimuth axis φ. In this case, the rotational angle of the mirror 13 around the azimuth axis φ may be maintained at an angle that is the same as the rotational angle of the mirror 13 around the azimuth axis φ in a case where the position measurement operation is performed. Then, the control apparatus 2 may calibrate the irradiation direction control information for controlling the rotation of the mirror 13 around the elevation axis θ based on the reflected light detection information.

### (2-3) Timing At Which Calibration Operation Is Performed

The control apparatus 2 may control the measurement system SYS to perform the calibration operation at a desired timing. For example, the control apparatus 2 may control the measurement system SYS to start the calibration operation before performing the position measurement operation. For example, the control apparatus 2 may control the measurement system SYS to start the calibration operation in at least a part of a period during which the position measurement operation is performed. Specifically, the control apparatus 2 may control the measurement system SYS to temporarily stop the position measurement operation after starting the position measurement operation, then to start the calibration operation, and then to restart the position measurement operation after the calibration operation is completed. For example, the control apparatus 2 may control the measurement system SYS to start the calibration operation after the position measurement operation is completed.

As described above, at least one of the influence of the environment outside the measurement system SYS (for example, the environment outside the measurement apparatus 1, the same applies in the below-described description) and the influence of the environment inside the measurement system SYS (for example, the environment inside the measurement apparatus 1, the same applies in the below-described description) is one example of the cause of the irradiation direction error. In this case, the control apparatus 2 may control the measurement system SYS to start the calibration operation based on environmental information related to at least one of the environment outside the measurement system SYS and the environment inside the measurement system SYS.

In this case, the control apparatus 2 may determine based on the environmental information whether or not the environment changes to an extent that the irradiation direction error occurs. In a case where it is determined that the environment changes to an extent that the irradiation direction error occurs, the control apparatus 2 may control the measurement system SYS to start the calibration operation. On the other hand, in a case where it is determined that the environment does not change to an extent that the irradiation direction error occurs, the control apparatus 2 may control the measurement system SYS not to start the calibration operation.

The environmental information may include information related to at least one of the temperature, the pressure, and the humidity of the space outside the measurement system SYS (for example, the space outside the measurement apparatus 1) as the information related to the environment outside the measurement system SYS. The environmental information may include information related to at least one of the temperature, the pressure, and the humidity of the space inside the measurement system SYS (for example, the space inside the measurement apparatus 1) as the information related to the environment inside the measurement system SYS.

In a case where the environmental information is used, the measurement system SYS may include an environmental measurement apparatus that is configured to measure a state of the environment. In this case, the environmental information may include information related to a measured result by the environmental measurement apparatus. Namely, the environmental information may include information acquired by the environmental measurement apparatus.

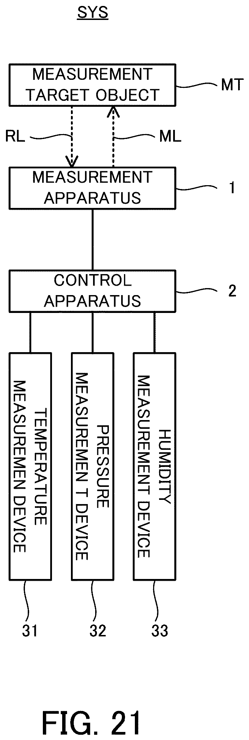

As a first example, as illustrated in FIG. 21 that illustrates a configuration of the measurement system SYS including the environment measurement apparatus, the measurement system SYS may include a temperature measurement device 31 that is configured to measure the temperature as one example of the environment measurement apparatus. The temperature measurement device 31 may be configured to measure at least one of the temperature of the space outside the measurement system SYS and the temperature of the space inside the measurement system SYS. In this case, the environmental information may include information related to a measured result by the temperature measurement device 31 (namely, a measured result of the temperature). In other words, the environmental information may include information acquired by the temperature measurement device 31 (namely, information related to the temperature).

As a second example, as illustrated in FIG. 21 that illustrates a configuration of the measurement system SYS including the environment measurement apparatus, the measurement system SYS may include a pressure measurement device 32 that is configured to measure the pressure as one example of the environment measurement apparatus. The pressure measurement device 32 may be configured to measure at least one of the pressure of the space outside the measurement system SYS and the pressure of the space inside the measurement system SYS. In this case, the environmental information may include information related to a measured result by the pressure measurement device 32 (namely, a measured result of the pressure). In other words, the environmental information may include information acquired by the pressure measurement device 32 (namely, information related to the pressure).

As a third example, as illustrated in FIG. 21 that illustrates a configuration of the measurement system SYS including the environment measurement apparatus, the measurement system SYS may include a humidity measurement device 33 that is configured to measure the humidity as one example of the environment measurement apparatus. The humidity measurement device 33 may be configured to measure at least one of the humidity of the space outside the measurement system SYS and the humidity of the space inside the measurement system SYS. In this case, the environmental information may include information related to a measured result by the humidity measurement device 33 (namely, a measured result of the humidity). In other words, the environmental information may include information acquired by the humidity measurement device 33 (namely, information related to the humidity).

Note that controlling the measurement system SYS to start the calibration operation based on the environmental information may include controlling the measurement system SYS to start the calibration operation based on the environmental information itself. For example, controlling the measurement system SYS to start the calibration operation based on the environmental information may include controlling the measurement system SYS to start the calibration operation based on the measured result itself by at least one of the temperature measurement device 31, the pressure measurement device 32, and the humidity measurement device 33. Alternatively, controlling the measurement system SYS to start the calibration operation based on the environmental information may include controlling the measurement system SYS to start the calibration operation based on information calculated from the environmental information. For example, controlling the measurement system SYS to start the calibration operation based on the environmental information may include controlling the measurement system SYS to start the calibration operation based on information calculated from at least one of the measured result by the temperature measurement device 31, the pressure measurement device 32, and the humidity measurement device 33.

As described above, the variation in the posture of the measurement system SYS (for example, the variation in the posture of the measurement apparatus 1, the same applies in the below-described description) is one example of the cause of the irradiation direction error. In this case, the control apparatus 2 may control the measurement system SYS to start the calibration operation in a case where the posture of the measurement system SYS changes (for example, the posture of the measurement apparatus 1 changes). Especially, the control apparatus 2 may control the measurement system SYS to start the calibration operation in a case where the posture of the measurement system SYS changes (for example, the posture of the measurement apparatus 1 changes) to an extent that the irradiation direction error occurs. On the other hand, the control apparatus 2 may control the measurement system SYS not to start the calibration operation in a case where the posture of the measurement system SYS does not change (for example, the posture of the measurement apparatus 1 does not change). Alternatively, even in a case where the posture of the measurement system SYS changes (for example, the posture of the measurement apparatus 1 changes), the control apparatus 2 may control the measurement system SYS not to start the calibration operation in a case where the posture of the measurement system SYS does not change (for example, the posture of the measurement apparatus 1 does not change) to an extent that the irradiation direction error occurs.

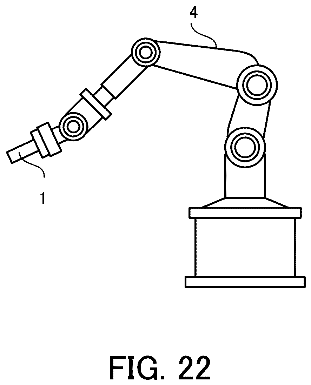

As one example, in a case where the measurement apparatus 1 is attached to the robot 4 as illustrated in FIG. 22, it is likely that the posture of the measurement apparatus 1 changes in a case where at least one of the position and posture of the robot 4 changes. Note that FIG. 22 illustrates an example in which the robot 4 is a robot arm. In this case, the control apparatus 2 may control the measurement system SYS so as to start the calibration operation in a case where at least one of the position and posture of the robot 4 to which the measurement apparatus 1 is attached changes. Especially, the control apparatus 2 may control the measurement system SYS so as to start the calibration operation in a case where at least one of the position and posture of the robot 4 changes to an extent that the irradiation direction error is generated. On the other hand, the control apparatus 2 may control the measurement system SYS so as not to start the calibration operation in a case where at least one of the position and posture of the robot 4 does not change. Alternatively, even in a case where at least one of the position and posture of the robot 4 changes the control apparatus 2 may control the measurement system SYS so as not to start the calibration operation in a case where at least one of the position and posture of the robot 4 does not change to an extent that the irradiation direction error is generated..

### (3) Technical Effect Of Measurement System

As described above, in the present example embodiment, the measurement system SYS may calibrate the irradiation direction control information so that the irradiation direction error is decreased or is eliminated by performing the calibration operation. Then, the measurement system SYS performs the position measurement operation by using the irradiation direction control information that has been calibrated by the calibration operation. Therefore, it is unlikely that the irradiation direction error occurs in the position measurement period during which the position measurement operation is performed. Typically, the irradiation direction error does not occur in the position measurement period during which the position measurement operation is performed. As a result, the measurement system SYS can properly calculate the position of the measurement target object MT. Specifically, the measurement system SYS can accurately calculate the position of the measurement target object MT.

Furthermore, in the present example embodiment, the measurement apparatus 1 includes the reflector 17 that is used for the calibration operation. If the measurement apparatus 1 does not include the reflector 17, the operator of the measurement system SYS needs to attach the reflector 17 to the measurement apparatus 1 at a timing at which the calibration operation is started. Furthermore, the operator of the measurement system SYS needs to detach the reflector 17 from the measurement apparatus 1 at a timing at which the calibration operation is completed. Therefore, the measurement system SYS cannot perform the calibration operation without the operator's work. However, in the present example embodiment, since the measurement apparatus 1 includes the reflector 17, the operator may not attach the reflector 17 to the measurement apparatus 1 and detach the reflector 17 from the measurement apparatus 1. Therefore, the measurement system SYS can perform the calibration operation regardless of the operator's work. Therefore, even in a case where the measurement system SYS is positioned in an unmanned factory in which the operator does not exist, the measurement system SYS can automatically perform the calibration operation.

Furthermore, since the measurement system SYS can perform the calibration operation regardless of the operator' work, the calibration operation may be performed at a desired timing required by the measurement system SYS. In other words, a constraint of a timing for performing the calibration operation is smaller, compared to a case where the measurement apparatus 1 does not include the reflector 17. In this case, the measurement system SYS may perform the calibration operation as a part of a series of a processing performed in a case where the measurement system SYS is installed.

Furthermore, in the present example embodiment, the reflector 17 is positioned to be fixed to the measurement apparatus 1. Therefore, it is unlikely that a relative position between the reflector 17 and the measurement apparatus 1 changes, compared to a case where the reflector 17 is not fixed to the measurement apparatus 1 and is detachably positioned. In some cases, the relative position between the reflector 17 and the measurement apparatus 1 does not change. Therefore, there is little or no possibility that the relative position between the reflector 17 and the measurement apparatus 1 changes depending on a timing at which the calibration operation is performed. Therefore, the measurement system SYS can perform the calibration operation with high reproducibility without being affected by a variation of the relative position between the reflector 17 and the measurement apparatus 1.

### (4) Modified Example Of Measurement System SYS

Next, a modified example of the measurement system SYS will be described.

### (4-1) First Modified Example

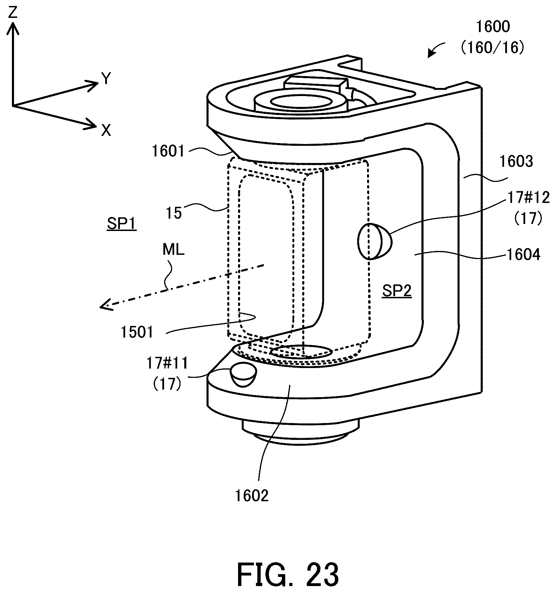

In the above-described description, the reflector 17 of the measurement apparatus 1 is positioned at a position facing the second space SP2 that is different from the first space SP1 through which the measurement light ML passes in at least a part of the position measurement period during which the position measurement operation is performed. Namely, the reflector 17 is positioned in the second space SP2. On the other hand, as illustrated in FIG. 23 that illustrates the measurement apparatus 1 in a first modified example, the measurement apparatus 1 may include the reflector 17 (a reflector 17#11 in the example illustrated in FIG. 23) that is positioned at a position facing the first space SP1 in addition to or instead of the reflector 17 (a reflector 17#12 in the example illustrated in FIG. 23) that is positioned at a position facing the second space SP2. Namely, the measurement apparatus 1 may include the reflector 17 (the reflector 17#12 in the example illustrated in FIG. 23) that is positioned in the first space SP1 in addition to or instead of the reflector 17 (the reflector 17#12 in the example illustrated in FIG. 23) that is positioned in the second space SP2. In the example illustrated in FIG. 23, the reflector 17 that is positioned in the first space SP1 is positioned on the support member 1602, but an arrangement position of the reflector 17 that is positioned in the first space SP1 is not limited to the example illustrated in FIG. 23.

The reflector 17#11 may be fixed to the measurement apparatus 1. In this case, the reflector 17#11 may be positioned at the position facing the first space SP1 in the position measurement period during which the position measurement operation is performed, and may be positioned at the position facing the first space SP1 in the calibration period during which the calibration operation is performed.

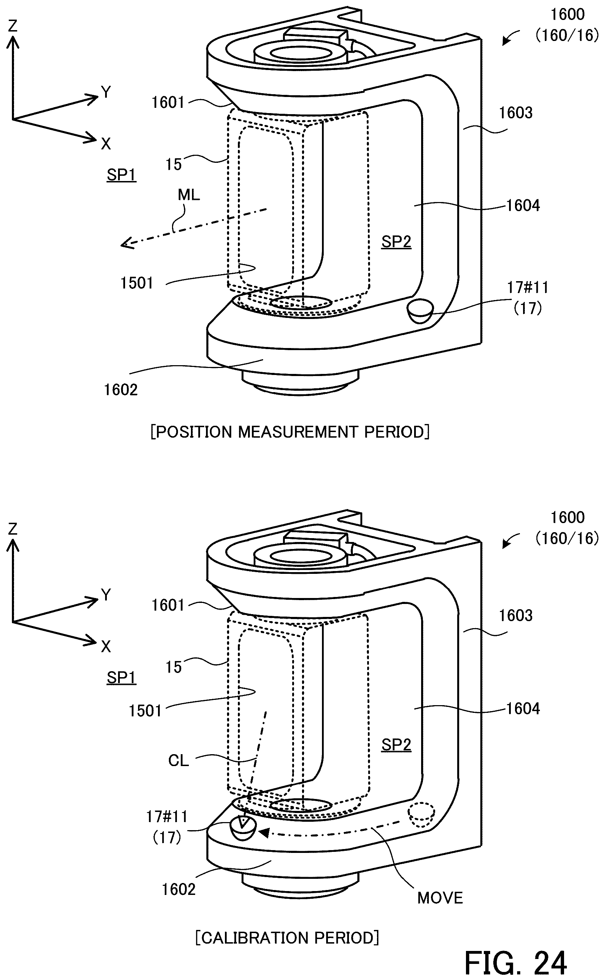

The reflector 17#11 may be movable relative to the measurement apparatus 1. In this case, as illustrated in FIG. 24 that illustrates the movable reflector 17#11, the reflector 17#11 may not be positioned at the position facing the first space SP1 in at least a part of the position measurement period during which the position measurement operation is performed. Namely, the reflector 17#11 may be positioned at a position that is different from the position facing the first space SP1. On the other hand, the reflector 17#11 may be positioned at the position facing the first space SP1 in at least a part of the calibration period during which the calibration operation is performed. Namely, the reflector 17#11 may move to the position facing the first space SP1 from the position different from the position facing the first space SP1 at a timing at which the calibration operation is performed. Conversely, the reflector 17#11 may move to a position different from the position facing the first space SP1 in at least a part of a period different from the calibration period. In other words, the reflector 17#11 may be move to a space different from the first space SP1 in at least a part of a period different from the calibration period. In this case, the measurement light ML, which has been reflected by the mirror 13 toward the measurement target object MT in the position measurement period, is not blocked by the reflector 17#11. As a result, even in a case where the measurement apparatus 1 includes the reflector 17#11, the measurement apparatus 1 can properly irradiate the measurement light ML onto the measurement target object MT. As a result, even in a case where the measurement apparatus 1 includes the reflector 17#11, the measurement apparatus 1 can properly measure the position of the measurement target object MT.

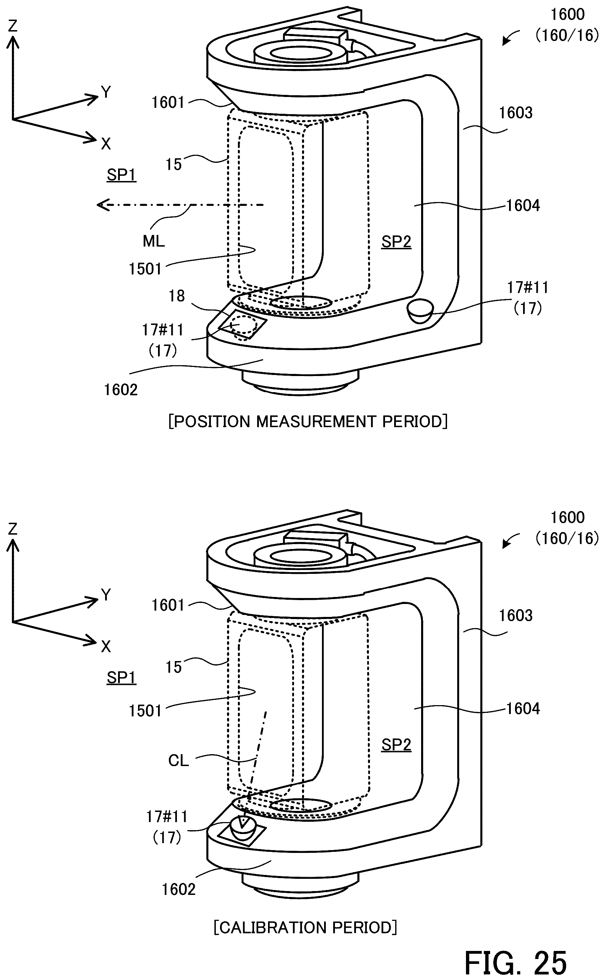

The measurement apparatus 1 may include a cover member 18 that covers the reflector 17#11. As illustrated in FIG. 25 that illustrates the measurement apparatus 1 including the cover member 18, the reflector 17#11 may be covered by the cover member 18 in at least a part of the position measurement period during which the position measurement operation is performed. The cover member 18 may be positioned at a first position at which the cover member 18 can cover the reflector 17#11 in at least a part of the position measurement period. In this case, the reflector 17#11 may be considered not to be positioned at the position facing the first space SP1. On the other hand, the reflector 17#11 may not be covered by the cover member 18 in at least a part of the calibration period during which the calibration operation is performed The cover member 18 may be positioned at a position, which is different from the first position at which the cover member 18 covers the reflector 17#11, in at least part of the calibration period. For example, the cover member 18 may be positioned at a second position at which the cover member 18 does not cover the reflector 17#11. In this case, the reflector 17#11 may be considered to be positioned at the position facing the first space SP1. Namely, the reflector 17#11 may be exposed to the first space SP1 at a timing at which the calibration operation is performed. In this case, the control apparatus 2 may move the cover member 18 from the first position to the second position at the timing at which the calibration operation is started. On the other hand, the control apparatus 2 may move the cover member 18 from the second position to the first position at a timing at which the calibration operation is completed. In this case, the measurement light ML, which has been reflected by the mirror 13 toward the measurement target object MT in the position measurement period, is not blocked by the reflector 17#11. As a result, even in a case where the measurement apparatus 1 includes the reflector 17#11, the measurement apparatus 1 can properly irradiate the measurement light ML onto the measurement target object MT. As a result, even in a case where the measurement apparatus 1 includes the reflector 17#11, the measurement apparatus 1 can properly measure the position of the measurement target object MT. Moreover, since the reflector 17#11 is covered by the cover member 18 in at least a part of the position measurement period, it is possible to prevent a dust from adhering to the reflector 17#11.

Note that the cover member 18 may cover the reflector 17#11 in any period that is different from the calibration period in addition to or instead of the position measurement period. For example, the cover member 18 may cover the reflector 17#11 in at least a part of a period during which a power supply from the power source to the input unit 19 is stopped.

Note that the reflector 17 may be fixed to the measurement apparatus even in a case where the reflector 17 is positioned at the position facing the second space SP2. The reflector 17 may be movable relative to the measurement apparatus 1 even in a case where the reflector 17 is positioned at the position facing the second space SP2. The measurement apparatus 1 may include the cover member 18 covering the reflector 17 even in a case where the reflector 17 is positioned at the position facing the second space SP2.

### (4-2) Second Modified Example

In the above-described description, the measurement apparatus 1 irradiates the calibration light CL onto the reflector 17 and detects the calibration reflected light CRL from the reflector 17 in order to perform the calibration operation. Namely, the measurement system SYS performs the calibration operation using the reflector 17. In a second modified example, the measurement system SYS may perform the calibration operation without using the reflector 17 in addition to or instead of the calibration operation using the reflector 17.

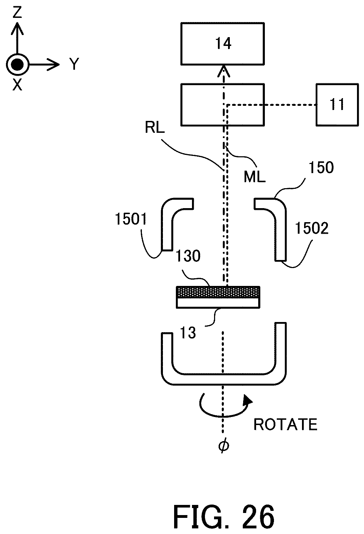

For example, as illustrated in FIG. 26 that illustrates the measurement apparatus 1 that performs the calibration operation without using the reflector 17, the control apparatus 2 may control the rotational angle of the mirror 13 so that the measurement light ML, which has entered the mirror 13 from the measurement optical system 12, is reflected by the mirror 13 toward the measurement optical system 12. Namely, the control apparatus 2 may control the driving systems 152 and 162 so that the rotational angle of the mirror 13 becomes a predetermined target angle that realizes a predetermined reflection state in which "the measurement light ML, which has entered the mirror 13 from the measurement optical system 12, is reflected by the mirror 13 toward the measurement optical system 12".

Especially, as illustrated in FIG. 26, the control apparatus 2 may control the rotational angle of the mirror 13 so that the reflective surface 130 of the mirror 13 becomes a surface that is along a horizontal plane (namely, a surface that is along the XY plane). In other words, the control apparatus 2 may control the rotational angle of the mirror 13 so that the reflective surface 130 of the mirror 13 is orthogonal to the azimuth axis φ. Namely, the predetermined reflection state described above may include a state in which the reflective surface 130 is orthogonal to the azimuth axis φ.

Then, the control apparatus 2 may rotate the first support apparatus 15 (namely, rotate the mirror 13) around the azimuth axis φ. For example, the control apparatus 2 may rotate the first support apparatus 15 (namely, rotate the mirror 13) by 360 degrees or more around the azimuth axis φ.

Here, in a case where the motion error does not occur in the rotation of the mirror 13 around the azimuth axis φ, the measurement light ML, which has been emitted from the measurement optical system 12 toward the mirror 13, propagates along an optical path that is parallel to the azimuth axis φ and vertically enters the mirror 13 as illustrated in FIG. 27(a). Furthermore, the reflected light RL, which has been reflected by the mirror 13, also propagates along an optical path that is parallel to the azimuth axis φ and enters the detector 14 through the measurement optical system 12. As a result, as illustrated in FIG. 27(b) that illustrates the reflected light RL on the detection plane 140 of the detector 14, the reflected light RL is irradiated onto a circular area on the detection plane 140 due to the rotation of the mirror 13 around the azimuth axis φ.

On the other hand, in a case where the motion error does not occurs in the rotation of the mirror 13 around the azimuth axis φ, there is a possibility that the reflected light RL, which has been reflected by the mirror 13, propagates along an optical path that is not parallel to the azimuth axis φ and enter the detector 14 through the measurement optical system 12, even in a case where the measurement light ML vertically enters the mirror 13, as illustrated in FIG. 27(c). As a result, as illustrated in FIG. 27(d) that illustrates the reflected light RL on the detection plane 140 of the detector 14, the reflected light RL is irradiated onto an annular area on the detection plane 140 due to the rotation of the mirror 13 around the azimuth axis φ.

Therefore, the control apparatus 2 may determine based on the reflected light detection information output from the detector 14 whether or not the motion error occurs in the rotation of the mirror 13 around the azimuth axis φ. In a case where the motion error occurs in the rotation of the mirror 13 around the azimuth axis φ, there is a possibility that the irradiation direction error occur as described above. Therefore, the control apparatus 2 may calibrate the irradiation direction control information so that the irradiation direction error, which is caused by the motion error occurring in the rotation of the mirror 13 around the azimuth axis φ, is decreased or is eliminated, in a case where it is determined that the motion error occurs in the rotation of the mirror 13 around the azimuth axis φ. Especially, the control apparatus 2 may calibrate the irradiation direction control information for controlling the rotation of the mirror 13 around the azimuth axis φ so that the irradiation direction error, which is caused by the motion error occurring in the rotation of the mirror 13 around the azimuth axis φ, is decreased or is eliminated, in a case where it is determined that the motion error occurs in the rotation of the mirror 13 around the azimuth axis φ.

### (4-3) Third Modified Example

In the above-described description, the control apparatus 2 generates the irradiation direction error information based on the position of the calibration reflected light CRL (the front spot position) calculated based on the result of the front side measurement and the position of the calibration reflected light CRL (the rear spot position) calculated based on the result of the rear side measurement.

In a third modified example, the control apparatus 2 may generate the irradiation direction error information based on a reference position (a reference spot position) of the calibration reflected light CRL, which is calculated in advance before the calibration operation is performed, and the front spot position. Alternatively, the control apparatus 2 may generate the irradiation direction error information based on the reference spot position and the rear spot position, in addition to or instead of generating the irradiation direction error information based on the reference spot position and the front spot position.

The reference spot position may be calculated when the measurement apparatus 1 is assembled. Specifically, after an assembly of the measurement apparatus 1 is completed, the measurement apparatus 1 may irradiate the calibration light CL onto the reflector 17 and detect the calibration reflected light CRL from the reflector 17 by the detector 14. Then, the control apparatus 2 may calculate the position of the calibration reflected light CRL on the detection plane 140 of the detector 14 as the reference spot position based on the reflected light detection information. In a case where the measurement apparatus 1 includes the plurality of reflectors 17, the control apparatus 2 may calculate a plurality of reference spot positions that correspond to the plurality of reflectors 17, respectively.

In this case, in a case where at least one of the front spot position and the rear spot position, which is calculated by irradiating the calibration light CL onto one reflector 17 in the calibration period, is the same as the reference spot position of the same one reflector 17, it is assumed that the irradiation direction error does not occur. Specifically, it is assumed that the irradiation direction error does not occur in a case where the rotation of the mirror 13 is actually controlled based on the irradiation direction control information for controlling the rotation of the mirror 13 to irradiate the calibration light CL onto the one reflector 17. Therefore, in this case, the control apparatus 2 may not calibrate the irradiation direction control information.

On the other hand, in a case where at least one of the front spot position and the rear spot position, which is calculated by irradiating the calibration light CL onto one reflector 17 in the calibration period, is different from the reference spot position of the same one reflector 17, it is assumed that the irradiation direction error occurs. Specifically, it is assumed that the irradiation direction error occurs in a case where the rotation of the mirror 13 is actually controlled based on the irradiation direction control information for controlling the rotation of the mirror 13 to irradiate the calibration light CL onto the one reflector 17. Therefore, in this case, the control apparatus 2 may calibrate the irradiation direction control information.

In this way, in the third modified example, the control apparatus 2 may calibrate the irradiation direction control information by comparing at least one of the front spot position and the rear spot position with the reference spot position.

Note that the control apparatus 2 may generate the irradiation direction error information based on the front spot position and the reference spot position by performing an operation that is the same as an operation for generating the irradiation direction error information based on the front spot position and the rear spot position. Namely, a description about the operation for generating the irradiation direction error information based on the front spot position and the rear spot position described above may be used as a description about the operation for generating the irradiation direction error information based on the front spot position and the reference spot position by replacing the term "rear spot position" with the term "reference spot position". Therefore, a detailed description of the operation for generating the irradiation direction error information based on the front spot position and the reference spot position is omitted in order to omit a redundant description.

Similarly, the control apparatus 2 may generate the irradiation direction error information based on the rear spot position and the reference spot position by performing the operation that is the same as the operation for generating the irradiation direction error information based on the front spot position and the rear spot position. Namely, the description about the operation for generating the irradiation direction error information based on the front spot position and the rear spot position described above may be used as a description about the operation for generating the irradiation direction error information based on the rear spot position and the reference spot position by replacing the term "front spot position" with the term "reference spot position". Therefore, a detailed description of the operation for generating the irradiation direction error information based on the rear spot position and the reference spot position is omitted in order to omit a redundant description.

### (4-4) Fourth Modified Example

As described above, the reflector 17 may be positioned on the measurement apparatus 1 through the low thermal expansion member in order to prevent the misalignment of the reflector 17 due to the thermal deformation of the measurement apparatus 1 (for example, a thermal deformation of the second support apparatus 16, any other apparatus, or any other member, the same applies in a fourth modified example). On the other hand, it is not always easy to completely eliminate the misalignment of the reflector 17 caused by the thermal deformation of the measurement apparatus 1. Note that a variation in temperature of at least one of the space outside the measurement system SYS and the space inside the measurement system SYS is one example of a cause of the thermal deformation of the measurement apparatus 1. Note that the temperature of at least one of the space outside the measurement system SYS and the space inside the measurement system SYS may be referred to as an ambient temperature. A self-heating of the measurement apparatus 1 is another example of the cause of the thermal deformation of the measurement apparatus 1. A temperature unevenness of the measurement apparatus 1 caused by at least one of the ambient temperature and the self-heating of the measurement apparatus 1 is another example of the cause of the thermal deformation of the measurement apparatus 1.

Alternatively, there is a possibility that the misalignment of the reflector 17 occurs due to a deformation of the measurement apparatus 1 (for example, a deformation of the second support apparatus 16, any other apparatus, or any other member, the same applies in a fourth modified example) that is different from the thermal deformation. For example, there is a possibility that the measurement apparatus 1 deforms due to the gravity acting on the measurement apparatus 1 when the posture of the measurement apparatus 1 changes. As a result, there is a possibility that the misalignment of the reflector 17 occurs. Alternatively, for example, there is a possibility that the measurement apparatus 1 deforms when the pressure of at least one of the space outside the measurement system SYS and the space inside the measurement system SYS changes, because the pressure applied to the measurement apparatus 1 changes. As a result, there is a possibility that the misalignment of the reflector 17 occurs.

Therefore, in the fourth modified example, in a case where the measurement apparatus 1 is deformed to an extent that the irradiation direction error that deteriorates the measurement accuracy of the measurement target object MT occurs, the measurement system SYS generates apparatus deformation information related to the deformation (including the thermal deformation) of the measurement apparatus 1, and may calibrate the irradiation direction control information based on the generated apparatus deformation information so that the irradiation direction of the measurement light ML in the case where the measurement apparatus 1 is deformed is closer to or the same as the irradiation direction of the measurement light ML in the case where the measurement apparatus 1 is not deformed. As a result, the measurement system SYS can calculate the position of the measurement target object MT properly without being affected by the deformation of the measurement apparatus 1. Specifically, the measurement system SYS can calculate the position of the measurement target object MT accurately without being affected by the deformation of the measurement apparatus 1.

Specifically, the control apparatus 2 may first determine whether or not the measurement apparatus 1 is deformed to an extent that the irradiation direction error that deteriorates the measurement accuracy of the measurement target object MT occurs.

As a first example, at least one of the ambient temperature and the self-heating of the measurement apparatus 1 is one example of the cause of the deformation of the measurement apparatus 1 as described above. In this case, the control apparatus 2 may detect at least one of the ambient temperature and the temperature of the measurement apparatus 1, and determine, based on a detected result of at least one of the ambient temperature and the temperature of the measurement apparatus 1, whether or not the measurement apparatus 1 is deformed to an extent that the irradiation direction error that deteriorates the measurement accuracy of the measurement target object MT occurs. Specifically, for example, in a case where at least one of the ambient temperature and the temperature of the measurement apparatus 1 is higher than a predetermined allowable temperature, the control apparatus 2 may determine whether or not the measurement apparatus 1 is deformed to an extent that the irradiation direction error that deteriorates the measurement accuracy of the measurement target object MT occurs. The allowable temperature may be set in advance based on a result of a simulation such as a finite element analysis (FEM: Finite Element Method) or an experiment.

As a second example, the variation in the posture of the measurement apparatus 1 is one example of the cause of the deformation of the measurement apparatus 1 as described above. In this case, the control apparatus 2 may detect the posture of the measurement apparatus 1, and determine, based on a detected result of the posture of the measurement apparatus 1, whether or not the measurement apparatus 1 is deformed to an extent that the irradiation direction error that deteriorates the measurement accuracy of the measurement target object MT occurs. Specifically, for example, in a case where an amount of the variation in the posture of the measurement apparatus 1 is larger than a predetermined allowable amount of variation, the control apparatus 2 may determine whether or not the measurement apparatus 1 is deformed to an extent that the irradiation direction error that deteriorates the measurement accuracy of the measurement target object MT occurs. The allowable amount of variation may be set in advance based on based on a result of a simulation such as a finite element analysis or an experiment.

In a case where it is determined that the measurement apparatus 1 is deformed to an extent that the irradiation direction error that deteriorates the measurement accuracy of the measurement target object MT occurs, the control apparatus 2 may generate the apparatus deformation information. In order to generate the apparatus deformation information, the measurement apparatus 1 may irradiate the calibration light CL onto the reflector 17 and detect the calibration reflected light CRL from the reflector 17. In this case, the measurement apparatus 1 may irradiate the calibration light CL onto the reflector 17 through the front aperture 1501 and detect the calibration reflected light CRL from the reflector 17 through the front aperture 1501. Namely, the measurement apparatus 1 may perform the front side measurement. Alternatively, the measurement apparatus 1 may irradiate calibration light CL onto the reflector 17 through the rear aperture 1502 and detect calibration reflected light CRL from the reflector 17 through the rear aperture 1502. Namely, the measurement apparatus 1 may perform the rear side measurement in addition to or instead of the front side measurement. Then, the control apparatus 2 may calculate the position of the reflector 17 based on the reflected light detection information that is the detected result of the calibration reflected light CRL.

Then, the control apparatus 2 may generate the apparatus deformation information based on a calculated result of the position of the reflector 17 and a reference position (an initial position) of the same reflector 17. A position of the reflector 17 in an ideal situation where the measurement apparatus 1 is not deformed may be used as the reference position of the reflector 17. As one example, a position of the reflector 17 at a timing at which the assembly of the measurement apparatus 1 is completed may be used as the reference position of the reflector 17. As one example, a position of the reflector 17 at a timing at which the measurement apparatus 1 is shipped may be used as the reference position of the reflector 17. In this case, in a case where the reference position of the reflector 17 is the same as the calculated result of the position of the reflector 17, it is assumed that the measurement apparatus 1 is not deformed because the misalignment of the reflector 17 does not occur. On the other hand, in a case where the reference position of the reflector 17 is different from the calculated result of the position of the reflector 17, it is assumed that the measurement apparatus 1 is deformed because the misalignment of the reflector 17 occurs. Therefore, the control apparatus 2 may generate the apparatus deformation information related to the deformation of the measurement apparatus 1 by comparing the reference position of the reflector 17 with the calculated result of the position of the reflector 17.

Alternatively, the control apparatus 2 may generate the apparatus deformation information based on the calculated result of the position of one reflector 17 and the calculated result of the position of another reflector 17 that is different from the one reflector 17. The reflectors 17 whose misalignment does not occur or whose amount of the misalignment is small (namely, the reflector 17 that is used as the reference) may be used as the another reflector 17. In this case, in a case where the calculated result of the position of the one reflector 17 is the same as the calculated result of the position of the another reflector 17, it is assumed that the measurement apparatus 1 is not deformed because the misalignment of the one reflector 17 does not occur. On the other hand, in a case where the calculated result of the position of the one reflector 17 is different from the calculated result of the position of the another reflector 17, it is assumed that the measurement apparatus 1 is deformed because the misalignment of the one reflector 17 occurs. Therefore, the control apparatus 2 may generate the apparatus deformation information related to the deformation of the measurement apparatus 1 by comparing the calculated result of the position of the one reflector 17 with the calculated result of the position of the another reflector 17.

Alternatively, the control apparatus 2 may calculate the position of the calibration reflected light CRL on the detection plane 140 in addition to or instead of calculating the position of the reflector 17 based on the reflected light detection information, and generate the apparatus deformation information based on a calculated result of the position of the calibration reflected light CRL from one reflector 17 on the detection plane 140 and a reference position (an initial position) of the calibration reflected light CRL from the same reflector 17 on the detection plane 140. A position of the calibration reflected light CRL on the detection plane 140 in an ideal situation where the measurement apparatus 1 is not deformed may be used as the reference position of the calibration reflected light CRL. As one example, a position of the calibration reflected light CRL on the detection plane 140 at a timing at which the assembly of the measurement apparatus 1 is completed may be used as the reference position of the calibration reflected light CRL. As one example, the position of the calibration reflected light CRL on the detection plane 140 at a timing at which the measurement apparatus 1 is shipped may be used as the reference position of the calibration reflected light CRL. In this case, in a case where the calculated result of the position of the calibration reflected light CRL is the same as the reference position of the calibration reflected light CRL, it is assumed that the measurement apparatus 1 is not deformed because a propagating difference of the calibration reflected light CRL does not vary. On the other hand, in a case where the calculated result of the position of the calibration reflected light CRL is different from the reference position of the calibration reflected light CRL, it is assumed that the measurement apparatus 1 is deformed because a propagating difference of the calibration reflected light CRL varies. Therefore, the control apparatus 2 may generate the apparatus deformation information related to the deformation of the measurement apparatus 1 by comparing the reference position of the calibration reflected light CRL with the calculated result of the position of the calibration reflected light CRL.

Alternatively, the control apparatus 2 may generate the apparatus deformation information based on the calculated result of the position of the calibration reflected light CRL from one reflector 17 and the calculated result of the position of the calibration reflected light CRL from another reflector 17 that is different from the one reflector 17. The reflectors 17 whose misalignment does not occur or whose amount of the misalignment is small (namely, the reflector 17 that is used as the reference) may be used as the another reflector 17. In this case, in a case where the calculated result of the position of the calibration reflected light CRL from the one reflector 17 is the same as the calculated result of the position of the calibration reflected light CRL from the another reflector 17, it is assumed that the measurement apparatus 1 is not deformed because the misalignment of the one reflector 17 does not occur. On the other hand, in a case where the calculated result of the position of the calibration reflected light CRL from the one reflector 17 is different from the calculated result of the position of the calibration reflected light CRL from the another reflector 17, it is assumed that the measurement apparatus 1 is deformed because the misalignment of the one reflector 17 occurs. Therefore, the control apparatus 2 may generate the apparatus deformation information related to deformation of the measurement apparatus 1 by comparing the calculated result of the position of the calibration reflected light CRL from the one reflector 17 with the calculated result of the position of the calibration reflected light CRL from the another reflector 17.

The apparatus deformation information may include information that directly or indirectly indicates an amount of the deformation of the measurement apparatus 1. The apparatus deformation information may include information that directly or indirectly indicates a position of a deformed part of the measurement apparatus 1. The apparatus deformation information may include information that directly or indirectly indicates a difference between an actual shape of the measurement apparatus 1 and an ideal shape (namely, a designed shape) of the measurement apparatus 1.

As one example, in a case where the measurement apparatus 1 is deformed, there is a possibility that the optical axis of the measurement optical system 12 of the measurement apparatus 1 is different from the ideal optical axis (in other words, the designed optical axis). Therefore, the control apparatus 2 may generate, as the apparatus deformation information, information that directly or indirectly indicates an amount of a difference of the optical axis of the measurement optical system 12 between the ideal optical axis (in other words, the designed optical axis).

As another example, in a case where the measurement apparatus 1 is deformed, a detection axis of the detector 14 of the measurement apparatus 1 is different from an ideal detection axis (in other words, a designed detection axis). Note that the detection axis of the detector 14 may be a virtual axis that extends from a center of the detection plane 140 along a direction that is orthogonal to the detection plane 140. Therefore, the control apparatus 2 may generate, as the apparatus deformation information, information that directly or indirectly indicates an amount of a difference of the detection axis of the detector 14 and the ideal detection axis (in other words, the designed detection axis).

Then, the control apparatus 2 may calibrate the irradiation direction control information based on the apparatus deformation information so that the irradiation direction of the measurement light ML in the case where the measurement apparatus 1 is deformed is closer to or the same as the irradiation direction of the measurement light ML in the case where the measurement apparatus 1 is not deformed.

Note that the reflector 17 may be positioned on the measurement apparatus 1 (alternatively, on any other apparatus or any other member, the same applies in this paragraph) without using the low thermal expansion member in the fourth modified example, because the measurement system SYS can calculate the position of the measurement target object MT properly without being affected by the deformation of the measurement apparatus 1. Therefore, a degree of freedom of an arrangement position of the reflector 17 is improved.

Alternatively, in a case where the reflector 17 is positioned on a part of the measurement apparatus 1 that is easily deformed, the control apparatus 2 can detect the misalignment of the reflector 17 more easily based on the detected result of the calibration reflected light CRL, compared to a case where the reflector 17 is positioned on a part of the measurement apparatus 1 that is not easily deformed. As a result, in a case where the reflector 17 is positioned on a part of the measurement apparatus 1 that is easily deformed, the control apparatus 2 can generate the apparatus deformation information more easily, compared to a case where the reflector 17 is positioned on a part of the measurement apparatus 1 that is not easily deformed. Therefore, in the fourth modified example, the reflector 17 may be positioned on a part of the measurement apparatus 1 that is deformed more easily than other part thereof.

### (4-5) Other Modified Example

In the above-described description, the measured result of the reflected light RL by the detector 14 is used for the position measurement operation for measuring the position of the measurement target object MT. Furthermore, the detected result of the calibration reflected light CRL by the detector 14 is used for the calibration operation for calibrating the irradiation direction control information. However, the detected result of the reflected light RL (including the calibration reflected light CRL, the same applies in this paragraph) by the detector 14 may be used for another purpose. For example, in a case where the detector 14 is configured to detect the intensity of the reflected light RL, the detected result of the reflected light RL by the detector 14 may be used to detect (in other words, monitor) a variation of the intensity of the measurement light ML generated by the light source 11.

In the above-described description, the measurement apparatus 1 includes the mirror 13 that reflects the measurement light ML (including the calibration light CL, the same applies in this paragraph) toward the measurement target object MT or the reflector 17. However, the measurement apparatus 1 may include ay optical component in addition to or instead of the mirror 13. For example, the measurement apparatus 1 may include any optional component that is configured to rotate the irradiation direction of the measurement light ML around the azimuth axis φ and / or around the elevation axis θ, in addition to or instead of the mirror 13. For example, the measurement apparatus 1 may include any optical component that does not change the irradiation direction of the measurement light ML, in addition to or instead of the mirror 13. Even in this case, the measurement system SYS may perform the calibration operation described above.

### (5) Supplementary Note

Regarding the above-described example embodiment, below described Supplementary notes are further disclosed.

### [Supplementary Note A1]

A measurement system that irradiates measurement light onto a measurement target object to measure a position of the measurement target object, wherein
the measurement system includes:
an irradiation apparatus that emits calibration light;
a control apparatus that controls an irradiation direction of the measurement light by the irradiation apparatus;
a detector that optically receives reflected light of the measurement light from the measurement target object onto which the measurement light from the irradiation apparatus is irradiated,
the control apparatus calibrates control information for controlling the irradiation direction of the measurement light based on environmental information related to at least one of an environment outside the measurement system and an environment inside the measurement system

### [Supplementary Note A2]

The measurement system according to the Supplementary Note A1, wherein
the environmental information includes information related to at least one of a temperature, a pressure, and a humidity of at least one of a space outside the measurement system and a space inside the measurement system.

### [Supplementary Note A3]

The measurement system according to the Supplementary Note A1 or A2, wherein
the measurement system includes at least one of a temperature measurement device, a pressure measurement device, and a humidity measurement device, and
the environmental information includes information acquired by using at least one of the temperature measurement device, the pressure measurement device, and the humidity measurement device.

### [Supplementary Note B1]

A measurement apparatus that measures a position of a measurement target object,
the measurement apparatus includes: at least one reflector;
an irradiation apparatus that irradiates measurement light onto the measurement target object or the at least one reflector;
a detector that optically receives first reflected light, which is reflected light of the measurement light from the at least one reflector onto which the measurement light from the irradiation apparatus is irradiated, and second reflected light, which is reflected light of the measurement light from the measurement target object onto which the measurement light from the irradiation apparatus is irradiated;
a reflective member that reflects the measurement light toward the at least one reflector or the measurement target object, and that reflects the first reflected light or the second reflected light toward the detector;
a first support apparatus that supports the reflective member so that the reflective member is rotatable around a second rotational axis;
a second support apparatus that supports the first support apparatus so that the first support apparatus is rotatable around a first rotational axis that intersects the second rotational axis,
the second support apparatus includes a fixed member that supports the first support apparatus at one end side and other end side of the first support apparatus in a direction along the first rotational axis so that it is rotatable around the first rotational axis,
the fixed member includes a connecting member that is connected to the first support apparatus at the one end side and the other end side of the first support apparatus,
the connecting member faces the second space, and
the at least one reflector is positioned on a part of the connecting member.

### [Supplementary Note C1]

A measurement apparatus that measures a position of a measurement target object, wherein
the measurement apparatus includes:
at least one reflector;
an irradiation apparatus that irradiates measurement light onto the measurement target object or the at least one reflector; and
a detector that optically receives first reflected light, which is reflected light of the measurement light from the at least one reflector onto which the measurement light from the irradiation apparatus is irradiated, and second reflected light, which is reflected light of the measurement light from the measurement target object onto which the measurement light from the irradiation apparatus is irradiated,
the irradiation apparatus irradiates the calibration light onto the reflector and the detector detects the first reflected light in at least a part of a first period during which an angle of an irradiation direction of the irradiation apparatus around a first rotational axis is a first angle and an angle of the irradiation direction of the irradiation apparatus around a second rotational axis, which intersects the first rotational axis, is a second angle,
the irradiation apparatus irradiates the calibration light onto the at least one reflector and the detector detects the first reflected light in at least a part of a second period during which an angle of the irradiation direction of the irradiation apparatus around the first rotational axis is a third angle, which is different form the first angle, and an angle of the irradiation direction of the irradiation apparatus around the second rotational axis is a fourth angle, which is different from the second angle, and
a detected result based on an optical reception of the first reflected light by the detector is used to calibrate control information for controlling the measurement apparatus.

### [Supplementary Note C2]

The measurement apparatus according to the Supplementary Note C1, wherein
the irradiation apparatus includes a reflective member that reflects the measurement light toward the at least one reflector, and reflects the first reflected light, which is from the at least one reflector, toward the detector,
the reflective member is configured to reflect the measurement light toward the measurement target object, and reflect the second reflected light, which is from the measurement target object, toward the detector, and
the detected result by the detector that optically receives the first reflected light is used to calibrate the control information, and
the calibrated control information is used to control a reflection direction of the measurement light from the reflective member.

### [Supplementary Note C3]

The measurement apparatus according to the Supplementary Note C2, wherein
the reflective member is rotatable around the first rotational axis and is rotatable around the second rotational axis that intersects the first rotational axis.

### [Supplementary Note C4]

The measurement apparatus according to the Supplementary Note C3, wherein
the reflective member is rotatable around the first rotational axis within a first angle range,
the first angle range includes a measurement range within which the measurement light is allowed to be irradiated onto the measurement target object, and a non-measurement range which is not used for an irradiation of the measurement light,
the reflective member is rotatable around the second rotational axis within a second angle range, and
the second angle range includes a measurement range within which the measurement light is allowed to be irradiated onto the measurement target object, and a non-measurement range which is not used for an irradiation of the measurement light.

### [Supplementary Note C5]

The measurement apparatus according to the Supplementary Note C4, wherein
the reflective member is positioned in the non-measurement range around at least one of the first rotational axis and the second rotational axis in a case where the measurement light is irradiated onto the at least one reflector.

### [Supplementary Note C6]

The measurement apparatus according to the Supplementary Note C5, wherein
the reflective member is positioned in the non-measurement range around the first rotational axis and is positioned in the measurement range around the second rotational axis in a case where the measurement light is irradiated onto the at least one reflector.

### [Supplementary Note C7]

The measurement apparatus according to the Supplementary Note C5, wherein
the reflective member is positioned in the measurement range around the first rotational axis and is positioned in the non-measurement range around the second rotational axis in a case where the calibration light is irradiated onto the at least one reflector.

### [Supplementary Note C8]

The measurement apparatus according to any one of the Supplementary Notes C2 to C7, wherein
the measurement apparatus includes:
a first support apparatus that supports the reflective member so that the reflective member is rotatable around the second rotational axis; and
a second support apparatus that supports the first support apparatus so that the first support apparatus is rotatable around the first rotational axis that intersects the second rotational axis.

### [Supplementary Note C9]

The measurement apparatus according to the Supplementary Note C8, wherein
the at least one reflector is positioned on the second support apparatus.

### [Supplementary Note C10]

The measurement apparatus according to the Supplementary Note C3, wherein
the at least one reflector is positioned at a position facing a second space through which the measurement light does not pass and which is different from a first space through which the measurement light passes in at least a part of a measurement period for measuring the position of the measurement target object.

### [Supplementary Note C11]

The measurement apparatus according to the Supplementary Note C10, wherein
the reflective member is rotatable around the first rotational axis within a first angle range,
the first angle range includes a measurement range within which the measurement light is allowed to be irradiated onto the measurement target object, and a non-measurement range which is not used for an irradiation of the measurement light,
the reflective member is rotatable around the second rotational axis within a second angle range,
the second angle range includes a measurement range within which the measurement light is allowed to be irradiated onto the measurement target object, and a non-measurement range which is not used for an irradiation of the measurement light,
the first space is defined by the measurement range around the first rotational axis and the measurement range around the second rotational axis, and
the second space is defined by the non-measurement range around the first rotational axis and the non-measurement range around the second rotational axis.

### [Supplementary Note C12]

The measurement apparatus according to the Supplementary Note C10 or 11, wherein
the reflective member is positioned between at least a part of the first space and the second space.

### [Supplementary Note C13]

The measurement apparatus according to any one of the Supplementary Notes C10 to C12, wherein
the measurement apparatus includes:
a first support apparatus that supports the reflective member so that the reflective member is rotatable around the second rotational axis; and
a second support apparatus that supports the first support apparatus so that the first support apparatus is rotatable around the first rotational axis that intersects the second rotational axis.

### [Supplementary Note C14]

The measurement apparatus according to the Supplementary Note C13, wherein
at least a part of the second support apparatus faces the second space, and
the at least one reflector is positioned on the at least a part of the second support apparatus.

### [Supplementary Note C15]

The measurement apparatus according to the Supplementary Note C14, wherein
the second support apparatus includes a fixed member that supports the first support apparatus at one end side and other end side of the first support apparatus in a direction along the first rotational axis so that it is rotatable around the first rotational axis,
the fixed member faces the second space, and
the at least one reflector is positioned on a part of the fixed member.

### [Supplementary Note C16]

The measurement apparatus according to the Supplementary Note C15, wherein
the fixed member includes a connecting member that is connected to the first support apparatus at the one end side and the other end side of the first support apparatus,
the connecting member faces the second space, and
the at least one reflector is positioned on a part of the connecting member.

### [Supplementary Note C17]

The measurement apparatus according to any one of the Supplementary Notes C10 to C16, wherein
the measurement apparatus further includes at least one other reflector that is different from the at least one reflector positioned at the position facing the second space,
the other reflector is positioned in the first space in at least a part of a calibration period for irradiating the calibration light onto the other reflector, and
the other reflector is moved to a space that is different from the first space in at least a part of a period excluding the calibration period.

### [Supplementary Note C18]

The measurement apparatus according to any one of the Supplementary Notes C8, C9, and C13 to C16, wherein
a light source, which is configured to generate the measurement light, and the detector are contained in the second support apparatus.

### [Supplementary Note C19]

The measurement apparatus according to any one of the Supplementary Notes C3 to C18, wherein
the at least one reflector includes at least two reflectors that are positioned to be apart from each other along a circumferential direction around the first rotational axis.

### [Supplementary Note C20]

The measurement apparatus according to any one of the Supplementary Notes C3 to C19, wherein
the at least one reflector includes at least two reflectors that are positioned to be apart from each other along a circumferential direction around the second rotational axis.

### [Supplementary Note C21]

The measurement apparatus according to any one of the Supplementary Notes C3 to C20, wherein
the at least one reflector includes at least two reflectors that are positioned to be apart from each other along a circumferential direction around the first rotational axis and to be apart from each other along a circumferential direction around the second rotational axis.

### [Supplementary Note C22]

The measurement apparatus according to any one of the Supplementary Notes C3 to C18, wherein
the irradiation apparatus irradiates the measurement light onto the at least one reflector and the detector detects the first reflected light in at least a part of a first period during which a rotational angle of the reflective member around the first rotational axis is a first angle and a rotational angle of the reflective member around the second rotational axis is a second angle,
the irradiation apparatus irradiates the measurement light onto the at least one reflector and the detector detects the first reflected light in at least a part of a second period during which a rotational angle of the reflective member around the first rotational axis is a third angle, which is different form the first angle, and a rotational angle of the reflective member around the second rotational axis is a fourth angle, which is different from the second angle, and
the detected result by the detector in at least a part of the first period and the detected result by the detector in at least a part of the second period are used to calibrate the control information.

### [Supplementary Note C23]

The measurement apparatus according to any one of the Supplementary Notes C3 to C18, wherein
the irradiation apparatus irradiates the measurement light onto the at least one reflector and the detector detects the first reflected light in at least a part of a first period during which a rotational angle of the reflective member around the first rotational axis is a first angle and a rotational angle of the reflective member around the second rotational axis is a second angle, and
the detected result by the detector in at least a part of the first period is used to calibrate the control information.

### [Supplementary Note C24]

The measurement apparatus according to the Supplementary Note C23, wherein
the irradiation apparatus irradiates the measurement light onto the at least one reflector and the detector detects the first reflected light in at least a part of a second period during which the rotational angle of the reflective member around the first rotational axis is a third angle, which is different form the first angle, and the rotational angle of the reflective member around the second rotational axis is the second angle, and
the detected result by the detector in at least a part of the first period and the detected result by the detector in at least a part of the second period are used to calibrate the control information related to a rotation around the first rotational axis.

### [Supplementary Note C25]

The measurement apparatus according to the Supplementary Note C23 or C24, wherein
the irradiation apparatus irradiates the measurement light onto the at least one reflector and the detector detects the first reflected light in at least a part of a second period during which the rotational angle of the reflective member around the first rotational axis is the first angle and the rotational angle of the reflective member around the second rotational axis is a fourth angle, which is different from the second angle, and
the detected result by the detector in at least a part of the first period and the detected result by the detector in at least a part of the second period are used to calibrate the control information related to a rotation around the second rotational axis.

### [Supplementary Note C26]

The measurement apparatus according to the Supplementary Note C22, wherein
a difference between the first angle and the third angle is 180 degrees, and
a difference between the second angle and the fourth angle is 90 degrees.

### [Supplementary Note C27]

The measurement apparatus according to the Supplementary Note C22 or 24, wherein
a difference between the first angle and the third angle is 180 degrees.

### [Supplementary Note C28]

The measurement apparatus according to the Supplementary Note C22 or 25, wherein
a difference between the second angle and the fourth angle is 90 degrees.

### [Supplementary Note C29]

The measurement apparatus according to the Supplementary Note C22 or C24, wherein
the at least one reflector includes a first reflector and a second reflector,
the irradiation apparatus irradiates the measurement light onto the first reflector and the detector detects the first reflected light from the first reflector in at least a part of the first period during which the rotational angle of the reflective member around the first rotational axis is the first angle,
the irradiation apparatus irradiates the measurement light onto the second reflector that is different from the first reflector and the detector detects the first reflected light from the second reflector in at least a part of the second period during which the rotational angle of the reflective member around the first rotational axis is the third angle, and
the detected result by the detector in at least a part of the first period and the detected result by the detector in at least a part of the second period are used to calibrate the control information.

### [Supplementary Note C30]

The measurement apparatus according to the Supplementary Note C29, wherein
the first reflector and the second reflector are apart from each other along a circumferential direction around the first rotational axis.

### [Supplementary Note C31]

The measurement apparatus according to the Supplementary Note C22 or C25, wherein
the at least one reflector includes a third reflector and a fourth reflector,
the irradiation apparatus irradiates the measurement light onto the third reflector and the detector detects the first reflected light from the third reflector in at least a part of the first period during which the rotational angle of the reflective member around the second rotational axis is the second angle,
the irradiation apparatus irradiates the measurement light onto the fourth reflector that is different from the third reflector and the detector detects the first reflected light from the fourth reflector in at least a part of the second period during which the rotational angle of the reflective member around the second rotational axis is the fourth angle, and
the detected result by the detector in at least a part of the first period and the detected result by the detector in at least a part of the second period are used to calibrate the control information.

### [Supplementary Note C32]

The measurement apparatus according to the Supplementary Note C31, wherein
the third reflector and the fourth reflector are apart from each other along a circumferential direction around the second rotational axis.

### [Supplementary Note C33]

The measurement apparatus according to the Supplementary Note C22, wherein
the at least one reflector includes a fifth reflector and a sixth reflector,
the irradiation apparatus irradiates the measurement light onto the fifth reflector and the detector detects the first reflected light from the fifth reflector in at least a part of the first period during which the rotational angle of the reflective member around the first rotational axis is the first angle and the rotational angle of the reflective member around the second rotational axis is the second angle,
the irradiation apparatus irradiates the measurement light onto the sixth reflector that is different from the fifth reflector and the detector detects the first reflected light from the sixth reflector in at least a part of the second period during which the rotational angle of the reflective member around the first rotational axis is the third angle and the rotational angle of the reflective member around the second rotational axis is the fourth angle, and
the detected result by the detector in at least a part of the first period and the detected result by the detector in at least a part of the second period are used to calibrate the control information.

### [Supplementary Note C34]

The measurement apparatus according to the Supplementary Note C33, wherein
the fifth reflector is apart along a circumferential direction around the first rotational axis and apart along a circumferential direction around the second rotational axis.

### [Supplementary Note C35]

The measurement apparatus according to any one of the Supplementary Notes C1 to C3, wherein
the measurement light is allowed to pass through a first space in at least a part of a measurement period for measuring the position of the measurement target object,
the at least one reflector is positioned in the first space in at least a part of a calibration period for irradiating the measurement light onto the at least one reflector, and
the at least one reflector is not positioned in the first space in at least a part of a period excluding the calibration period.

### [Supplementary Note C36]

The measurement apparatus according to any one of the Supplementary Notes C1 to C35, wherein
the measurement apparatus includes a driving unit that drives the reflective member to change a reflection direction of the measurement light, and
the calibrated control information is used to control the driving unit.

### [Supplementary Note C37]

The measurement apparatus according to the Supplementary Note C36, wherein
a direction of the reflective member is changed by a control of the driving unit based on the calibrated control information.

### [Supplementary Note C38]

The measurement apparatus according to the Supplementary Note C1 or C2, wherein
the at least one reflector is positioned at a position facing a second space through which the measurement light does not pass and which is different from a first space through which the measurement light passes in at least a part of a measurement period for measuring the position of the measurement target object.

### [Supplementary Note C39]

The measurement apparatus according to any one of the Supplementary Notes C1 to C18, wherein
the at least one reflector includes a plurality of reflectors.

### [Supplementary Note C40]

The measurement apparatus according to any one of the Supplementary Notes C1 to C39, wherein
the measurement apparatus starts calibrating the control information based on environmental information related to at least one of an environment outside the measurement apparatus and an environment inside the measurement apparatus.

### [Supplementary Note C41]

The measurement apparatus according to the Supplementary Note C40, wherein
the environmental information includes information related to at least one of a temperature, a pressure, and a humidity of at least one of a space outside the measurement apparatus and a space inside the measurement apparatus.

### [Supplementary Note C42]

The measurement apparatus according to the Supplementary Note C40 or C41, wherein
the measurement apparatus includes at least one of a temperature measurement device, a pressure measurement device, and a humidity measurement device, and
the environmental information includes information acquired by using at least one of the temperature measurement device, the pressure measurement device, and the humidity measurement device.

### [Supplementary Note C43]

The measurement apparatus according to any one of the Supplementary Notes C1 to C42, wherein
the measurement apparatus starts calibrating the control information in a case where a posture of the measurement apparatus changes.

### [Supplementary Note C44]

The measurement apparatus according to any one of the Supplementary Notes C1 to C43, wherein
the measurement apparatus is attached to a robot that moves the measurement apparatus, and
the measurement apparatus starts calibrating the control information in a case where at least one of a position and a posture of the robot changes.

### [Supplementary Note C45]

The measurement apparatus according to any one of the Supplementary Notes C1 to C44, wherein
the measurement apparatus further includes a cover member that covers the reflector,
the cover member is configured to cover the at least one reflector by moving to a first position,
the cover member is positioned at a position that is different from the first position in at least a part of a calibration period during which the measurement apparatus irradiates the measurement light onto the at least one reflector, and
the cover member is positioned at the first position in a period that is different from the calibration period.

### [Supplementary Note C46]

The measurement apparatus according to the Supplementary Note C45, wherein
the measurement apparatus further includes an input unit to which an electric power is supplied, and
the period that is different from the calibration period includes a period during which a supply of the electric power from the input unit is stopped.

### [Supplementary Note C47]

The measurement apparatus according to the Supplementary Note C45, wherein
the cover member is positioned at the first position in at least a part of a measurement period during which the measurement apparatus measures the position of the measurement target object.

### [Supplementary Note C48]

The measurement apparatus according to any one of the Supplementary Notes C45 to C47, wherein
the measurement apparatus moves the cover member from the first position to a second position at a timing at which a calibration of the control information is started, and
the measurement apparatus moves the cover member from the second position to the first position at a timing at which the calibration of the control information is completed.

### [Supplementary Note C49]

The measurement apparatus according to any one of the Supplementary Notes C1 to C48, wherein
the irradiation apparatus includes a reflective member that reflects the measurement light toward the at least one reflector, and reflects first reflected light, which is from the at least one reflector, toward the detector,
the detector detects third reflected light that is reflected light of the measurement light, which is irradiated onto the reflective member, from the reflective member,
the third reflected light is reflected light, which is returned to the irradiation apparatus without being reflected by the reflective member toward the at least one reflector, of the measurement light that is irradiated onto the reflective member, and
a detected result based on an optical reception of the first reflected light by the detector and a detected result based on an optical reception of the third reflected light by the detector are used to calibrate the control information.

### [Supplementary Note C50]

The measurement apparatus according to any one of the Supplementary Notes C1 to C49, wherein
a detection surface of the detector includes a plurality of divided detection surfaces, and
a detected result of the first reflected light by each of the plurality of detection surfaces is used to calibrate the control information.

### [Supplementary Note C51]

The measurement apparatus according to any one of the Supplementary Notes C1 to C50, wherein
the at least one reflector is a retro-reflective member that is configured to retro-reflect the measurement light.

### [Supplementary Note C52]

The measurement apparatus according to the Supplementary Note C1, wherein
the measurement apparatus is configured to control an irradiation direction of the measurement light around the first rotational axis within a first angle range,
the first angle range includes a measurement range within which the measurement light is allowed to be irradiated onto the measurement target object, and a non-measurement range which is not used for an irradiation of the measurement light,
the measurement apparatus is configured to control the irradiation direction of the measurement light around the second rotational axis within a second angle range,
the second angle range includes a measurement range within which the measurement light is allowed to be irradiated onto the measurement target object, and a non-measurement range which is not used for an irradiation of the measurement light,
a first space is defined by the measurement range around the first rotational axis and the measurement range around the second rotational axis,
a second space is defined by the non-measurement range around the first rotational axis and the non-measurement range around the second rotational axis, and
the at least one reflector is positioned at a position facing the second space through which the measurement light does not pass and which is different from the first space through which the measurement light passes in at least a part of a measurement period for measuring the position of the measurement target object.

### [Supplementary Note C53]

The measurement apparatus according to the Supplementary Note C1, wherein
the irradiation apparatus includes an optical member that emits the measurement light toward the at least one reflector and to which the first reflected light from the at least one reflector enters,
the optical member emits the measurement light toward the measurement target object, and the second reflected light from the measurement target object enters the optical member,
a detected result by the detector that optically receives the first reflected light through the optical member is used to calibrate the control information, and
the calibrated control information is used to control an emission direction of the measurement light from the optical member.

### [Supplementary Note C54]

The measurement apparatus according to the Supplementary Note C53, wherein
the optical member is rotatable around the first rotational axis within a first angle range,
the first angle range includes a measurement range within which the measurement light is allowed to be irradiated onto the measurement target object, and a non-measurement range which is not used for an irradiation of the measurement light,
the optical member is rotatable around the second rotational axis, which intersects the first rotational axis, within a second angle range, and
the second angle range includes a measurement range within which the measurement light is allowed to be irradiated onto the measurement target object, and a non-measurement range which is not used for an irradiation of the measurement light.

### [Supplementary Note C55]

The measurement apparatus according to the Supplementary Note C54, wherein
the optical member is positioned in the non-measurement range around the first rotational axis in a case where the measurement light is irradiated onto the at least one reflector.

### [Supplementary Note C56]

The measurement apparatus according to the Supplementary Note C55, wherein
the optical member is positioned in the non-measurement range around the second rotational axis in a case where the measurement light is irradiated onto the at least one reflector.

### [Supplementary Note C57]

The measurement apparatus according to the Supplementary Note C54, wherein
the optical member is positioned in the measurement range around the first rotational axis and is positioned in the non-measurement range around the second rotational axis in a case where the measurement light is irradiated onto the at least one reflector.

### [Supplementary Note D1]

A measurement method that measures a position of a measurement target object by using a measurement apparatus to irradiate measurement light onto the measurement target object, wherein
the measurement method includes:
irradiating, by using an irradiation apparatus of the measurement apparatus, calibration light onto at least one reflector of the measurement apparatus;
detecting, by using the irradiation apparatus of the measurement apparatus, reflected light of the calibration light from the at least one reflector;
emitting, by using the irradiation apparatus, the measurement light;
controlling an irradiation direction of the measurement light; and
calibrating, based on a detected result of the reflected light by the detector, control information for controlling the irradiation direction of the measurement light.

### [Supplementary Note D2]

The measurement method according to the Supplementary Note D1, wherein
the measurement method includes:
reflecting, by using a reflective member of the irradiation apparatus, the calibration light toward the at least one reflector;
reflecting, by using the reflective member, first reflected light, which is from the at least one reflector, toward the detector;
reflecting, by using the reflective member, the measurement light toward the measurement target object;
reflecting, by using the reflective member, second reflected light, which is from the measurement target object, toward the detector; and
calibrating the control information based on the detected result by the detector that optically receives the first reflected light, and controlling a reflection direction of the measurement light from the reflective member based on the calibrated control information.

### [Supplementary Note D3]

The measurement method according to the Supplementary Note D2, wherein
the measurement method includes:
rotating the reflective member around a first rotational axis; and
rotating the reflective member around a second rotational axis that intersects the first rotational axis.

### [Supplementary Note D4]

The measurement method according to the Supplementary Note D3, wherein
the rotating the reflective member around the first rotational axis includes rotating the reflective member around the first rotational axis within a first angle range,
the first angle range includes a measurement range within which the measurement light is allowed to be irradiated onto the measurement target object, and a non-measurement range which is not used for an irradiation of the measurement light,
the rotating the reflective member around the second rotational axis includes rotating the reflective member around the second rotational axis within a second angle range, and
the second angle range includes a measurement range within which the measurement light is allowed to be irradiated onto the measurement target object, and a non-measurement range which is not used for an irradiation of the measurement light.

### [Supplementary Note D5]

The measurement method according to the Supplementary Note D4, wherein
the reflective member is positioned in the non-measurement range around at least one of the first rotational axis and the second rotational axis in a case where the calibration light is irradiated onto the at least one reflector.

### [Supplementary Note D6]

The measurement method according to the Supplementary Note D5, wherein
the reflective member is positioned in the non-measurement range around the first rotational axis and is positioned in the measurement range around the second rotational axis in a case where the calibration light is irradiated onto the at least one reflector.

### [Supplementary Note D7]

The measurement method according to the Supplementary Note D5, wherein
the reflective member is positioned in the measurement range around the first rotational axis and is positioned in the non-measurement range around the second rotational axis in a case where the calibration light is irradiated onto the at least one reflector.

### [Supplementary Note D8]

The measurement method according to any one of the Supplementary Notes D2 to D7, wherein
the measurement method includes:
supporting, by using a first support apparatus of the measurement apparatus, the reflective member so that the reflective member is rotatable around the second rotational axis; and
supporting, by using a second support apparatus of the measurement apparatus, the first support apparatus so that the first support apparatus is rotatable around the first rotational axis that intersects the second rotational axis.

### [Supplementary Note D9]

The measurement method according to the Supplementary Note D8, wherein
the at least one reflector is positioned on the second support apparatus.

### [Supplementary Note D10]

The measurement method according to the Supplementary Note D3, wherein
the at least one reflector is positioned at a position facing a second space through which the measurement light does not pass and which is different from a first space through which the measurement light passes in at least a part of a measurement period for measuring the position of the measurement target object.

### [Supplementary Note D11]

The measurement method according to the Supplementary Note D10, wherein
the rotating the reflective member around the first rotational axis includes rotating the reflective member around the first rotational axis within a first angle range,
the first angle range includes a measurement range within which the measurement light is allowed to be irradiated onto the measurement target object, and a non-measurement range which is not used for an irradiation of the measurement light,
the rotating the reflective member around the second rotational axis includes rotating the reflective member around the second rotational axis within a second angle range,
the second angle range includes a measurement range within which the measurement light is allowed to be irradiated onto the measurement target object, and a non-measurement range which is not used for an irradiation of the measurement light,
the first space is defined by the measurement range around the first rotational axis and the measurement range around the second rotational axis, and
the second space is defined by the non-measurement range around the first rotational axis and the non-measurement range around the second rotational axis.

### [Supplementary Note D12]

The measurement method according to the Supplementary Note D10 or D11, wherein
the reflective member is positioned between at least a part of the first space and the second space.

### [Supplementary Note D13]

The measurement method according to any one of the Supplementary Notes D10 to D12, wherein
the measurement method includes:
supporting, by using a first support apparatus of the measurement apparatus, the reflective member so that the reflective member is rotatable around the second rotational axis; and
supporting, by using a second support apparatus of the measurement apparatus, the first support apparatus so that the first support apparatus is rotatable around the first rotational axis that intersects the second rotational axis.

### [Supplementary Note D14]

The measurement method according to the Supplementary Note D13, wherein
at least a part of the second support apparatus faces the second space, and
the at least one reflector is positioned on the at least a part of the second support apparatus.

### [Supplementary Note D15]

The measurement method according to the Supplementary Note D14, wherein
the second support apparatus includes a fixed member that supports the first support apparatus at one end side and other end side of the first support apparatus in a direction along the first rotational axis so that it is rotatable around the first rotational axis,
the fixed member faces the second space, and
the at least one reflector is positioned on a part of the fixed member.

### [Supplementary Note D16]

The measurement method according to the Supplementary Note D15, wherein
the fixed member includes a connecting member that is connected to the first support apparatus at the one end side and the other end side of the first support apparatus,
the connecting member faces the second space, and
the at least one reflector is positioned on a part of the connecting member.

### [Supplementary Note D17]

The measurement method according to any one of the Supplementary Notes D10 to D16, wherein
the measurement method includes:
positioning at least one other reflector, which is different from the at least one reflector positioned at the position facing the second space, in the first space in at least a part of a calibration period for irradiating the calibration light onto the other reflector, and
moving the other reflector to a space that is different from the first space in at least a part of a period excluding the calibration period.

### [Supplementary Note D18]

The measurement method according to any one of the Supplementary Notes D8, 9, and 13 to 16, wherein
a light source, which is configured to generate the measurement light, and the detector are contained in the second support apparatus.

### [Supplementary Note D19]

The measurement method according to any one of the Supplementary Notes D3 to D18, wherein
the at least one reflector includes at least two reflectors that are positioned to be apart from each other along a circumferential direction around the first rotational axis.

### [Supplementary Note D20]

The measurement method according to any one of the Supplementary Notes D3 to D19, wherein
the at least one reflector includes at least two reflectors that are positioned to be apart from each other along a circumferential direction around the second rotational axis.

### [Supplementary Note D21]

The measurement method according to any one of the Supplementary Notes D3 to D20, wherein
the at least one reflector includes at least two reflectors that are positioned to be apart from each other along a circumferential direction around the first rotational axis and to be apart from each other along a circumferential direction around the second rotational axis.

### [Supplementary Note D22]

The measurement method according to any one of the Supplementary Notes D3 to D18, wherein
the measurement method includes:
irradiating, by using the irradiation apparatus, the calibration light onto the at least one reflector in at least a part of a first period during which a rotational angle of the reflective member around the first rotational axis is a first angle and a rotational angle of the reflective member around the second rotational axis is a second angle;
detecting, by using the detector, the first reflected light in at least a part of the first period;
irradiating, by using the irradiation apparatus, the calibration light onto the at least one reflector in at least a part of a second period during which a rotational angle of the reflective member around the first rotational axis is a third angle, which is different form the first angle, and a rotational angle of the reflective member around the second rotational axis is a fourth angle, which is different from the second angle;
detecting, by using the detector, the first reflected light in at least a part of the second period; and
calibrating the control information based on the detected result by the detector in at least a part of the first period and the detected result by the detector in at least a part of the second period.

### [Supplementary Note D23]

The measurement method according to any one of the Supplementary Notes D3 to D18, wherein
the measurement method includes:
irradiating, by using the irradiation apparatus, the calibration light onto the at least one reflector in at least a part of a first period during which a rotational angle of the reflective member around the first rotational axis is a first angle and a rotational angle of the reflective member around the second rotational axis is a second angle;
detecting, by using the detector, the first reflected light in at least a part of the first period; and
calibrating the control information based on the detected result by the detector in at least a part of the first period.

### [Supplementary Note D24]

The measurement method according to the Supplementary Note D23, wherein
the measurement method includes:
irradiating, by using the irradiation apparatus, the calibration light onto the at least one reflector in at least a part of a second period during which the rotational angle of the reflective member around the first rotational axis is a third angle, which is different form the first angle, and the rotational angle of the reflective member around the second rotational axis is the second angle;
detecting, by using the detector, the first reflected light in at least a part of the second period; and
calibrating the control information related to a rotation around the first rotational axis based on the detected result by the detector in at least a part of the first period and the detected result by the detector in at least a part of the second period.

### [Supplementary Note D25]

The measurement method according to the Supplementary Note D23 or D24, wherein
the measurement method includes:
irradiating, by using the irradiation apparatus, the calibration light onto the at least one reflector in at least a part of a second period during which the rotational angle of the reflective member around the first rotational axis is the first angle and the rotational angle of the reflective member around the second rotational axis is a fourth angle, which is different from the second angle;
detecting, by using the detector, the first reflected light in at least a part of the second period; and
calibrating the control information related to a rotation around the second rotational axis based on the detected result by the detector in at least a part of the first period and the detected result by the detector in at least a part of the second period.

### [Supplementary Note D26]

The measurement method according to the Supplementary Note D22, wherein
a difference between the first angle and the third angle is 180 degrees, and
a difference between the second angle and the fourth angle is 90 degrees.

### [Supplementary Note D27]

The measurement method according to the Supplementary Note D22 or D24, wherein
a difference between the first angle and the third angle is 180 degrees.

### [Supplementary Note D28]

The measurement method according to the Supplementary Note D22 or D25, wherein
a difference between the second angle and the fourth angle is 90 degrees.

### [Supplementary Note D29]

The measurement method according to the Supplementary Note D22 or D24, wherein
the at least one reflector includes a first reflector and a second reflector,
the measurement method includes:
   irradiating, by using the irradiation apparatus, the calibration light onto the first reflector in at least a part of the first period during which the rotational angle of the reflective member around the first rotational axis is the first angle;
   detecting, by using the detector, the first reflected light from the first reflector in at least a part of the first period;
   irradiating, by using the irradiation apparatus, the calibration light onto the second reflector that is different from the first reflector in at least a part of the second period during which the rotational angle of the reflective member around the first rotational axis is the third angle;
   detecting, by using the detector, the first reflected light from the second reflector in at least a part of the second period; and
   calibrating the control information based on the detected result by the detector in at least a part of the first period and the detected result by the detector in at least a part of the second period.

### [Supplementary Note D30]

The measurement method according to the Supplementary Note D29, wherein
detecting, by using the detector, the first reflected light in at least a part of the second period; and

### [Supplementary Note D31]

The measurement method according to the Supplementary Note D22 or D25, wherein
the at least one reflector includes a third reflector and a fourth reflector,
the measurement method includes:
   irradiating, by using the irradiation apparatus, the calibration light onto the third reflector in at least a part of the first period during which the rotational angle of the reflective member around the second rotational axis is the second angle;
   detecting, by using the detector, the first reflected light from the third reflector in at least a part of the first period;
   irradiating, by using the irradiation apparatus, the calibration light onto the fourth reflector that is different from the third reflector in at least a part of the second period during which the rotational angle of the reflective member around the second rotational axis is the fourth angle;
   detecting, by using the detector, the first reflected light from the fourth reflector in at least a part of the second period; and
   calibrating the control information based on the detected result by the detector in at least a part of the first period and the detected result by the detector in at least a part of the second period.

### [Supplementary Note D32]

The measurement method according to the Supplementary Note D31, wherein
the third reflector and the fourth reflector are apart from each other along the circumferential direction around the second rotational axis.

### [Supplementary Note D33]

The measurement method according to the Supplementary Note D22, wherein
the at least one reflector includes a fifth reflector and a sixth reflector,
the measurement method includes:
   irradiating, by using the irradiation apparatus, the calibration light onto the fifth reflector in at least a part of the first period during which the rotational angle of the reflective member around the first rotational axis is the first angle and the rotational angle of the reflective member around the second rotational axis is the second angle;
   detecting, by using the detector, the first reflected light from the fifth reflector in at least a part of the first period;
   irradiating, by using the irradiation apparatus, the calibration light onto the sixth reflector that is different from the fifth reflector in at least a part of the second period during which the rotational angle of the reflective member around the first rotational axis is the third angle and the rotational angle of the reflective member around the second rotational axis is the fourth angle;
   detecting, by using the detector, the first reflected light from the sixth reflector in at least a part of the second period; and
   calibrating the control information based on the detected result by the detector in at least a part of the first period and the detected result by the detector in at least a part of the second period.

### [Supplementary Note D34]

The measurement method according to the Supplementary Note D33, wherein
the fifth reflector is apart along the circumferential direction around the first rotational axis and apart along the circumferential direction around the second rotational axis.

### [Supplementary Note D35]

The measurement method according to any one of the Supplementary Notes D1 to D3, wherein
the measurement light is allowed to pass through a first space in at least a part of a measurement period for measuring the position of the measurement target object,
the at least one reflector is positioned in the first space in at least a part of a calibration period for irradiating the calibration light onto the at least one reflector, and
the at least one reflector is not positioned in the first space in at least a part of a period excluding the calibration period.

### [Supplementary Note D36]

The measurement method according to any one of the Supplementary Notes D1 to D35, wherein
the measurement method includes:
driving, by using a driving unit of the measurement apparatus, the reflective member to change a reflection direction of the measurement light; and
controlling the driving unit based on the calibrated control information.

### [Supplementary Note D37]

The measurement method according to the Supplementary Note D36, wherein
the controlling the driving unit includes controlling the driving unit to change a direction of the reflective member based on the calibrated control information.

### [Supplementary Note D38]

The measurement method according to the Supplementary Note D1 or D2, wherein
the measurement method includes positioning the at least one reflector at a position facing a second space through which the measurement light does not pass and which is different from a first space through which the measurement light passes in at least a part of a measurement period for measuring the position of the measurement target object.

### [Supplementary Note D39]

The measurement method according to any one of the Supplementary Notes D1 to D18, wherein
the at least one reflector includes a plurality of reflectors.

### [Supplementary Note D40]

The measurement method according to any one of the Supplementary Notes D1 to D39, wherein
the measurement method includes starting calibrating the control information based on environmental information related to at least one of an environment outside the measurement system and an environment inside the measurement system.

### [Supplementary Note D41]

The measurement method according to the Supplementary Note D40, wherein
the environmental information includes information related to at least one of a temperature, a pressure, and a humidity of at least one of a space outside the measurement method and a space inside the measurement method.

### [Supplementary Note D42]

The measurement method according to the Supplementary Note D40 or D41, wherein
the environmental information includes information acquired by using at least one of a temperature measurement device, a pressure measurement device, and a humidity measurement device of the measurement apparatus.

### [Supplementary Note D43]

The measurement method according to any one of the Supplementary Notes D1 to D42, wherein
the measurement method includes starting calibrating the control information in a case where a posture of the measurement apparatus changes.

### [Supplementary Note D44]

The measurement method according to any one of the Supplementary Notes D1 to D43, wherein
the measurement system is attached to a robot that moves the measurement system, and
the measurement method includes starting calibrating the control information in a case where at least one of a position and a posture of the robot changes.

### [Supplementary Note D45]

The measurement method according to any one of the Supplementary Notes D1 to D44, wherein
the measurement system further comprises a cover member that covers the reflector,
the cover member is configured to cover the at least one reflector by moving to a first position,
the measurement method includes:
   positioning the cover member at a position that is different from the first position in at least a part of a calibration period during which the measurement system irradiates the calibration light onto the at least one reflector; and
   positioning the cover member at the first position in a period that is different from the calibration period.

### [Supplementary Note D46]

The measurement method according to the Supplementary Note D45, wherein
the period that is different from the calibration period includes a period during which a supply of an electric power from an input unit of the measurement apparatus is stopped.

### [Supplementary Note D47]

The measurement method according to the Supplementary Note D45, wherein
the measurement method includes positioning the cover member at the first position in at least a part of a measurement period during which the measurement system measures the position of the measurement target object.

### [Supplementary Note D48]

The measurement method according to any one of the Supplementary Notes D45 to D47, wherein
the measurement method includes:
moving the cover member from the first position to a second position at a timing at which a calibration of the control information is started; and
moving the cover member from the second position to the first position at a timing at which the calibration of the control information is completed.

### [Supplementary Note D49]

The measurement method according to any one of the Supplementary Notes D1 to D48, wherein
the measurement apparatus includes a reflective member that reflects the calibration light toward the at least one reflector, and reflects first reflected light, which is from the at least one reflector, toward the detector,
the measurement method includes:
   detecting, by using the detector, third reflected light that is reflected light of the calibration light, which is irradiated onto the reflective member, from the reflective member; and
   calibrating the control information based on a detected result based on an optical reception of the first reflected light by the detector and a detected result based on an optical reception of the third reflected light by the detector, and
   the third reflected light is reflected light, which is returned to the irradiation apparatus without being reflected by the reflective member toward the at least one reflector, of the calibration light that is irradiated onto the reflective member.

### [Supplementary Note D50]

The measurement method according to any one of the Supplementary Notes D1 to D49, wherein
a detection surface of the detector includes a plurality of divided detection surfaces, and
the measurement method includes calibrating the control information based on a detected result of the first reflected light by each of the plurality of detection surfaces.

### [Supplementary Note D51]

The measurement method according to any one of the Supplementary Notes D1 to D50, wherein
the at least one reflector is a retro-reflective member that is configured to retro-reflect the calibration light.

### [Supplementary Note D52]

The measurement method according to the Supplementary Note D1, wherein
the measurement method includes:
controlling the irradiation direction of the calibration light around a first rotational axis within a first angle range; and
controlling the irradiation direction of the calibration light around a second rotational axis within a second angle range,
the first angle range includes a measurement range within which the measurement light is allowed to be irradiated onto the measurement target object, and a non-measurement range which is not used for an irradiation of the measurement light,
the second angle range includes a measurement range within which the measurement light is allowed to be irradiated onto the measurement target object, and a non-measurement range which is not used for an irradiation of the measurement light,
a first space is defined by the measurement range around the first rotational axis and the measurement range around the second rotational axis,
a second space is defined by the non-measurement range around the first rotational axis and the non-measurement range around the second rotational axis, and
the at least one reflector is positioned at a position facing the second space through which the measurement light does not pass and which is different from the first space through which the measurement light passes in at least a part of a measurement period for measuring the position of the measurement target object.

### [Supplementary Note D53]

The measurement method according to the Supplementary Note D1, wherein
the irradiation apparatus includes an optical member that emits the calibration light toward the at least one reflector and to which first reflected light from the at least one reflector enters,
the optical member emits the measurement light toward the measurement target object, and second reflected light from the measurement target object enters the optical member, and
the measurement method includes calibrating the control information based on a detected result by the detector that optically receives the first reflected light through the optical member, and controlling an emission direction of the measurement light from the optical member based on the calibrated control information.

### [Supplementary Note D54]

The measurement method according to the Supplementary Note D53, wherein
the measurement method includes:
rotating the reflective member around a first rotational axis within a first angle range; and
rotating the reflective member around a second rotational axis, which intersects the first rotational axis, within a first angle range;
the first angle range includes a measurement range within which the measurement light is allowed to be irradiated onto the measurement target object, and a non-measurement range which is not used for an irradiation of the measurement light, and
the second angle range includes a measurement range within which the measurement light is allowed to be irradiated onto the measurement target object, and a non-measurement range which is not used for an irradiation of the measurement light.

### [Supplementary Note D55]

The measurement method according to the Supplementary Note D54, wherein
the optical member is positioned in the non-measurement range around the first rotational axis in a case where the calibration light is irradiated onto the at least one reflector.

### [Supplementary Note D56]

The measurement method according to the Supplementary Note D55, wherein
the optical member is positioned in the non-measurement range around the second rotational axis in a case where the calibration light is irradiated onto the at least one reflector.

### [Supplementary Note D57]

The measurement method according to the Supplementary Note D54, wherein
the optical member is positioned in the measurement range around the first rotational axis and is positioned in the non-measurement range around the second rotational axis in a case where the calibration light is irradiated onto the at least one reflector.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a measurement system, a measurement apparatus, and a measurement method, which involve such changes, are also intended to be within the technical scope of the present invention.

### Description of Reference Codes

- SYS: measurement system
- 1: measurement apparatus
- 11: light source
- 12: measurement optical system
- 13: mirror
- 14: detector
- 15: first support apparatus
- 150: housing
- 1501: front aperture
- 1502: rear aperture
- 151: mirror holding member
- 152: driving system
- 16: second support apparatus
- 160: housing
- 1600: support member
- 1601: support member
- 1602: support member
- 1603: support member
- 162: driving system
- 17: reflector
- 2: control apparatus
- 21: computing apparatus
- 22: storage apparatus
- MT: measurement target object
- ML: measurement light
- CL: calibration light
- RL: reflected light
- CRL: calibration reflected light

## Claims

1. A measurement system that irradiates measurement light onto a measurement target object to measure a position of the measurement target object, wherein
the measurement system comprises:
an irradiation apparatus that emits calibration light;
a control apparatus that controls the irradiation apparatus;
at least one reflector that reflects the calibration light from the irradiation apparatus; and
a detector that detects reflected light of the calibration light from the at least one reflector,
the irradiation apparatus is configured to emit the measurement light,
the control apparatus is configured to control an irradiation direction of the measurement light, and
the control apparatus calibrates, based on a detected result of the reflected light by the detector, control information for controlling the irradiation direction of the measurement light.

2. The measurement system according to claim 1, wherein
the irradiation apparatus includes a reflective member that reflects the calibration light toward the at least one reflector, and reflects first reflected light, which is from the at least one reflector, toward the detector,
the reflective member is configured to reflect the measurement light toward the measurement target object, and reflect second reflected light, which is from the measurement target object, toward the detector, and
the control apparatus calibrates the control information based on the detected result by the detector that optically receives the first reflected light, and controls a reflection direction of the measurement light from the reflective member based on the calibrated control information.

3. The measurement system according to claim 2, wherein
the reflective member is rotatable around a first rotational axis and is rotatable around a second rotational axis that intersects the first rotational axis.

4. The measurement system according to claim 3, wherein
the reflective member is rotatable around the first rotational axis within a first angle range,
the first angle range includes a measurement range within which the measurement light is allowed to be irradiated onto the measurement target object, and a non-measurement range which is not used for an irradiation of the measurement light,
the reflective member is rotatable around the second rotational axis within a second angle range, and
the second angle range includes a measurement range within which the measurement light is allowed to be irradiated onto the measurement target object, and a non-measurement range which is not used for an irradiation of the measurement light.

5. The measurement system according to claim 4, wherein
the reflective member is positioned in the non-measurement range around at least one of the first rotational axis and the second rotational axis in a case where the calibration light is irradiated onto the at least one reflector.

6. The measurement system according to claim 5, wherein
the reflective member is positioned in the non-measurement range around the first rotational axis and is positioned in the measurement range around the second rotational axis in a case where the calibration light is irradiated onto the at least one reflector.

7. The measurement system according to claim 5, wherein
the reflective member is positioned in the measurement range around the first rotational axis and is positioned in the non-measurement range around the second rotational axis in a case where the calibration light is irradiated onto the at least one reflector.

8. The measurement system according to any one of claims 2 to 7, wherein
the measurement system comprises:
a first support apparatus that supports the reflective member so that the reflective member is rotatable around the second rotational axis; and
a second support apparatus that supports the first support apparatus so that the first support apparatus is rotatable around the first rotational axis that intersects the second rotational axis.

9. The measurement system according to claim 8, wherein
the at least one reflector is positioned on the second support apparatus.

10. The measurement system according to claim 3, wherein
the at least one reflector is positioned at a position facing a second space through which the measurement light does not pass and which is different from a first space through which the measurement light passes in at least a part of a measurement period for measuring the position of the measurement target object.

11. The measurement system according to claim 10, wherein
the reflective member is rotatable around the first rotational axis within a first angle range,
the first angle range includes a measurement range within which the measurement light is allowed to be irradiated onto the measurement target object, and a non-measurement range which is not used for an irradiation of the measurement light,
the reflective member is rotatable around the second rotational axis within a second angle range,
the second angle range includes a measurement range within which the measurement light is allowed to be irradiated onto the measurement target object, and a non-measurement range which is not used for an irradiation of the measurement light,
the first space is defined by the measurement range around the first rotational axis and the measurement range around the second rotational axis, and
the second space is defined by the non-measurement range around the first rotational axis and the non-measurement range around the second rotational axis.

12. The measurement system according to claim 10 or 11, wherein
the reflective member is positioned between at least a part of the first space and the second space.

13. The measurement system according to any one of claims 10 to 12, wherein
the measurement system comprises:
a first support apparatus that supports the reflective member so that the reflective member is rotatable around the second rotational axis; and
a second support apparatus that supports the first support apparatus so that the first support apparatus is rotatable around the first rotational axis that intersects the second rotational axis.

14. The measurement system according to claim 13, wherein
at least a part of the second support apparatus faces the second space, and
the at least one reflector is positioned on the at least a part of the second support apparatus.

15. The measurement system according to claim 14, wherein
the second support apparatus includes a fixed member that supports the first support apparatus at one end side and other end side of the first support apparatus in a direction along the first rotational axis so that it is rotatable around the first rotational axis,
the fixed member faces the second space, and
the at least one reflector is positioned on a part of the fixed member.

16. The measurement system according to claim 15, wherein
the fixed member includes a connecting member that is connected to the first support apparatus at the one end side and the other end side of the first support apparatus,
the connecting member faces the second space, and
the at least one reflector is positioned on a part of the connecting member.

17. The measurement system according to any one of claims 10 to 16, wherein
the measurement system further comprises at least one other reflector that is different from the at least one reflector positioned at the position facing the second space,
the other reflector is positioned in the first space in at least a part of a calibration period for irradiating the calibration light onto the other reflector, and
the other reflector is moved to a space that is different from the first space in at least a part of a period excluding the calibration period.

18. The measurement system according to any one of claims 8, 9, and 13 to 16, wherein
a light source, which is configured to generate the measurement light, and the detector are contained in the second support apparatus.

19. The measurement system according to any one of claims 3 to 18, wherein
the at least one reflector includes at least two reflectors that are positioned to be apart from each other along a circumferential direction around the first rotational axis.

20. The measurement system according to any one of claims 3 to 19, wherein
the at least one reflector includes at least two reflectors that are positioned to be apart from each other along a circumferential direction around the second rotational axis.

21. The measurement system according to any one of claims 3 to 20, wherein
the at least one reflector includes at least two reflectors that are positioned to be apart from each other along a circumferential direction around the first rotational axis and to be apart from each other along a circumferential direction around the second rotational axis.

22. The measurement system according to any one of claims 3 to 18, wherein
the irradiation apparatus irradiates the calibration light onto the at least one reflector and the detector detects the first reflected light in at least a part of a first period during which a rotational angle of the reflective member around the first rotational axis is a first angle and a rotational angle of the reflective member around the second rotational axis is a second angle,
the irradiation apparatus irradiates the calibration light onto the at least one reflector and the detector detects the first reflected light in at least a part of a second period during which a rotational angle of the reflective member around the first rotational axis is a third angle, which is different form the first angle, and a rotational angle of the reflective member around the second rotational axis is a fourth angle, which is different from the second angle, and
the control apparatus calibrates the control information based on the detected result by the detector in at least a part of the first period and the detected result by the detector in at least a part of the second period.

23. The measurement system according to any one of claims 3 to 18, wherein
the irradiation apparatus irradiates the calibration light onto the at least one reflector and the detector detects the first reflected light in at least a part of a first period during which a rotational angle of the reflective member around the first rotational axis is a first angle and a rotational angle of the reflective member around the second rotational axis is a second angle, and
the control apparatus calibrates the control information based on the detected result by the detector in at least a part of the first period.

24. The measurement system according to claim 23, wherein
the irradiation apparatus irradiates the calibration light onto the at least one reflector and the detector detects the first reflected light in at least a part of a second period during which the rotational angle of the reflective member around the first rotational axis is a third angle, which is different form the first angle, and the rotational angle of the reflective member around the second rotational axis is the second angle, and
the control apparatus calibrates the control information related to a rotation around the first rotational axis based on the detected result by the detector in at least a part of the first period and the detected result by the detector in at least a part of the second period.

25. The measurement system according to claim 23 or 24, wherein
the irradiation apparatus irradiates the calibration light onto the at least one reflector and the detector detects the first reflected light in at least a part of a second period during which the rotational angle of the reflective member around the first rotational axis is the first angle and the rotational angle of the reflective member around the second rotational axis is a fourth angle, which is different from the second angle, and
the control apparatus calibrates the control information related to a rotation around the second rotational axis based on the detected result by the detector in at least a part of the first period and the detected result by the detector in at least a part of the second period.

26. The measurement system according to claim 22, wherein
a difference between the first angle and the third angle is 180 degrees, and
a difference between the second angle and the fourth angle is 90 degrees.

27. The measurement system according to claim 22 or 24, wherein
a difference between the first angle and the third angle is 180 degrees.

28. The measurement system according to claim 22 or 25, wherein
a difference between the second angle and the fourth angle is 90 degrees.

29. The measurement system according to claim 22 or 24, wherein
the at least one reflector includes a first reflector and a second reflector,
the irradiation apparatus irradiates the calibration light onto the first reflector and the detector detects the first reflected light from the first reflector in at least a part of the first period during which the rotational angle of the reflective member around the first rotational axis is the first angle,
the irradiation apparatus irradiates the calibration light onto the second reflector that is different from the first reflector and the detector detects the first reflected light from the second reflector in at least a part of the second period during which the rotational angle of the reflective member around the first rotational axis is the third angle, and
the control apparatus calibrates the control information based on the detected result by the detector in at least a part of the first period and the detected result by the detector in at least a part of the second period.

30. The measurement system according to claim 29, wherein
the first reflector and the second reflector are apart from each other along a circumferential direction around the first rotational axis.

31. The measurement system according to claim 22 or 25, wherein
the at least one reflector includes a third reflector and a fourth reflector,
the irradiation apparatus irradiates the calibration light onto the third reflector and the detector detects the first reflected light from the third reflector in at least a part of the first period during which the rotational angle of the reflective member around the second rotational axis is the second angle,
the irradiation apparatus irradiates the calibration light onto the fourth reflector that is different from the third reflector and the detector detects the first reflected light from the fourth reflector in at least a part of the second period during which the rotational angle of the reflective member around the second rotational axis is the fourth angle, and
the control apparatus calibrates the control information based on the detected result by the detector in at least a part of the first period and the detected result by the detector in at least a part of the second period.

32. The measurement system according to claim 31, wherein
the third reflector and the fourth reflector are apart from each other along the circumferential direction around the second rotational axis.

33. The measurement system according to claim 22, wherein
the at least one reflector includes a fifth reflector and a sixth reflector,
the irradiation apparatus irradiates the calibration light onto the fifth reflector and the detector detects the first reflected light from the fifth reflector in at least a part of the first period during which the rotational angle of the reflective member around the first rotational axis is the first angle and the rotational angle of the reflective member around the second rotational axis is the second angle,
the irradiation apparatus irradiates the calibration light onto the sixth reflector that is different from the fifth reflector and the detector detects the first reflected light from the sixth reflector in at least a part of the second period during which the rotational angle of the reflective member around the first rotational axis is the third angle and the rotational angle of the reflective member around the second rotational axis is the fourth angle, and
the control apparatus calibrates the control information based on the detected result by the detector in at least a part of the first period and the detected result by the detector in at least a part of the second period.

34. The measurement system according to claim 33, wherein
the fifth reflector is apart along the circumferential direction around the first rotational axis and apart along the circumferential direction around the second rotational axis.

35. The measurement system according to any one of claims 1 to 3, wherein
the measurement light is allowed to pass through a first space in at least a part of a measurement period for measuring the position of the measurement target object,
the at least one reflector is positioned in the first space in at least a part of a calibration period for irradiating the calibration light onto the at least one reflector, and
the at least one reflector is not positioned in the first space in at least a part of a period excluding the calibration period.

36. The measurement system according to any one of claims 1 to 35, wherein
the measurement system comprises a driving unit that drives the reflective member to change a reflection direction of the measurement light, and
the control apparatus controls the driving unit based on the calibrated control information.

37. The measurement system according to claim 36, wherein
the control apparatus controls the driving unit to change a direction of the reflective member based on the control information calibrated by the control apparatus.

38. The measurement system according to claim 1 or 2, wherein
the at least one reflector is positioned at a position facing a second space through which the measurement light does not pass and which is different from a first space through which the measurement light passes in at least a part of a measurement period for measuring the position of the measurement target object.

39. The measurement system according to any one of claims 1 to 18, wherein
the at least one reflector includes a plurality of reflectors.

40. The measurement system according to any one of claims 1 to 39, wherein
the control apparatus controls the measurement system to start calibrating the control information based on environmental information related to at least one of an environment outside the measurement system and an environment inside the measurement system.

41. The measurement system according to claim 40, wherein
the environmental information includes information related to at least one of a temperature, a pressure, and a humidity of at least one of a space outside the measurement system and a space inside the measurement system.

42. The measurement system according to claim 40 or 41, wherein
the measurement system comprises at least one of a temperature measurement device, a pressure measurement device, and a humidity measurement device, and
the environmental information includes information acquired by using at least one of the temperature measurement device, the pressure measurement device, and the humidity measurement device.

43. The measurement system according to any one of claims 1 to 42, wherein
the control apparatus controls the measurement system to start calibrating the control information in a case where a posture of the measurement system changes.

44. The measurement system according to any one of claims 1 to 43, wherein
the measurement system is attached to a robot that moves the measurement system, and
the control apparatus controls the measurement system to start calibrating the control information in a case where at least one of a position and a posture of the robot changes.

45. The measurement system according to any one of claims 1 to 44, wherein
the measurement system further comprises a cover member that covers the reflector,
the cover member is configured to cover the at least one reflector by moving to a first position,
the cover member is positioned at a position that is different from the first position in at least a part of a calibration period during which the measurement system irradiates the calibration light onto the at least one reflector, and
the cover member is positioned at the first position in a period that is different from the calibration period.

46. The measurement system according to claim 45, wherein
the measurement system further comprises an input unit to which an electric power is supplied, and
the period that is different from the calibration period includes a period during which a supply of the electric power from the input unit is stopped.

47. The measurement system according to claim 45, wherein
the cover member is positioned at the first position in at least a part of a measurement period during which the measurement system measures the position of the measurement target object.

48. The measurement system according to any one of claims 45 to 47, wherein
the control apparatus moves the cover member from the first position to a second position at a timing at which a calibration of the control information is started, and
the control apparatus moves the cover member from the second position to the first position at a timing at which the calibration of the control information is completed.

49. The measurement system according to any one of claims 1 to 48, wherein
the irradiation apparatus includes a reflective member that reflects the calibration light toward the at least one reflector, and reflects first reflected light, which is from the at least one reflector, toward the detector,
the detector detects third reflected light that is reflected light of the calibration light, which is irradiated onto the reflective member, from the reflective member,
the third reflected light is reflected light, which is returned to the irradiation apparatus without being reflected by the reflective member toward the at least one reflector, of the calibration light that is irradiated onto the reflective member, and
the control apparatus calibrates the control information based on a detected result based on an optical reception of the first reflected light by the detector and a detected result based on an optical reception of the third reflected light by the detector.

50. The measurement system according to any one of claims 1 to 49, wherein
a detection surface of the detector includes a plurality of divided detection surfaces, and
the control apparatus calibrates the control information based on a detected result of the first reflected light by each of the plurality of detection surfaces.

51. The measurement system according to any one of claims 1 to 50, wherein
the at least one reflector is a retro-reflective member that is configured to retro-reflect the calibration light.

52. The measurement system according to claim 1, wherein
the control apparatus is configured to control the irradiation direction of the calibration light around a first rotational axis within a first angle range,
the first angle range includes a measurement range within which the measurement light is allowed to be irradiated onto the measurement target object, and a non-measurement range which is not used for an irradiation of the measurement light,
the control apparatus is configured to control the irradiation direction of the calibration light around a second rotational axis within a second angle range,
the second angle range includes a measurement range within which the measurement light is allowed to be irradiated onto the measurement target object, and a non-measurement range which is not used for an irradiation of the measurement light,
a first space is defined by the measurement range around the first rotational axis and the measurement range around the second rotational axis,
a second space is defined by the non-measurement range around the first rotational axis and the non-measurement range around the second rotational axis, and
the at least one reflector is positioned at a position facing the second space through which the measurement light does not pass and which is different from the first space through which the measurement light passes in at least a part of a measurement period for measuring the position of the measurement target object.

53. The measurement system according to claim 1, wherein
the irradiation apparatus includes an optical member that emits the calibration light toward the at least one reflector and to which first reflected light from the at least one reflector enters,
the optical member emits the measurement light toward the measurement target object, and second reflected light from the measurement target object enters the optical member, and
the control apparatus calibrates the control information based on a detected result by the detector that optically receives the first reflected light through the optical member, and controls an emission direction of the measurement light from the optical member based on the calibrated control information.

54. The measurement system according to claim 53, wherein
the optical member is rotatable around a first rotational axis within a first angle range,
the first angle range includes a measurement range within which the measurement light is allowed to be irradiated onto the measurement target object, and a non-measurement range which is not used for an irradiation of the measurement light,
the optical member is rotatable around a second rotational axis, which intersects the first rotational axis, within a second angle range, and
the second angle range includes a measurement range within which the measurement light is allowed to be irradiated onto the measurement target object, and a non-measurement range which is not used for an irradiation of the measurement light.

55. The measurement system according to claim 54, wherein
the optical member is positioned in the non-measurement range around the first rotational axis in a case where the calibration light is irradiated onto the at least one reflector.

56. The measurement system according to claim 55, wherein
the optical member is positioned in the non-measurement range around the second rotational axis in a case where the calibration light is irradiated onto the at least one reflector.

57. The measurement system according to claim 54, wherein
the optical member is positioned in the measurement range around the first rotational axis and is positioned in the non-measurement range around the second rotational axis in a case where the calibration light is irradiated onto the at least one reflector.

58. A measurement apparatus that measures a position of a measurement target object, wherein
the measurement apparatus comprises:
at least one reflector;
an irradiation apparatus that irradiates measurement light onto the measurement target object or the at least one reflector; and
a detector that optically receives first reflected light, which is reflected light of the measurement light from the at least one reflector onto which the measurement light from the irradiation apparatus is irradiated, and second reflected light, which is reflected light of the measurement light from the measurement target object onto which the measurement light from the irradiation apparatus is irradiated,
a detected result based on an optical reception of the first reflected light by the detector is used to calibrate control information for controlling the measurement apparatus to measure the position of the measurement target object.

59. A measurement method that measures a position of a measurement target object by using a measurement apparatus, wherein
the measurement method comprises:
irradiating, by using an irradiation apparatus of the measurement apparatus, measurement light onto a reflector of the measurement apparatus;
detecting, by using a detector of the measurement apparatus, reflected light of the measurement light from the reflector;
calibrating, based on a detected result of the reflected light from the reflector by the detector, control information for controlling the measurement apparatus to measure the position of the measurement target object; and
controlling the measurement apparatus to measure the position of the measurement target object, by using the irradiation apparatus to irradiate the measurement light onto the measurement target object based on the calibrated control information and by using the detector to detect reflected light of the measurement light from the measurement target object.

60. A measurement system that measures a position of a measurement target object, wherein
the measurement system comprises:
an irradiation apparatus that emits measurement light;
at least one reflector;
a first detector that optically receives reflected light of the measurement light from the at least one reflector onto which the measurement light from the irradiation apparatus is irradiated;
a second detector that optically receives reflected light of the measurement light from the measurement target object onto which the measurement light from the irradiation apparatus is irradiated; and
a control apparatus,
the irradiation apparatus includes a reflective member that reflects the measurement light toward the measurement target object or the at least one reflector and that reflects the reflected light from the measurement target object or the at least one reflector,
the reflective member is rotatable around a first rotational axis and is rotatable around a second rotational axis that intersects the first rotational axis, and
the control apparatus controls a position measurement of the measurement target object based on a detected result by the first detector.

61. A measurement system that measures a position of a measurement target object, wherein
the measurement system comprises:
an irradiation apparatus that includes a reflective member and that emits measurement light through the reflective member;
a first detector that optically receives reflected light from the reflective member due to an irradiation with the measurement light;
a second detector that optically receives reflected light of the measurement light from the measurement target object onto which the measurement light from the irradiation apparatus is irradiated; and
a control apparatus,
the reflected light optically received by the first detector is reflected light of the measurement light from the reflective member that is returned to the irradiation apparatus without being emitted from the irradiation apparatus,
the reflective member is rotatable around a first rotational axis and is rotatable around a second rotational axis that intersects the first rotational axis, and
the control apparatus controls a position measurement of the measurement target object based on a detected result by the first detector.

62. The measurement system according to claim 60 or 61, wherein
the first detector and the second detector are the same detector.

63. The measurement system according to any one of claims 60 to 62, wherein
a control of the position measurement by the control apparatus includes a control of the irradiation apparatus.
